# EUROPEAN PATENT SPECIFICATION

(11) **EP 1 526 630 B1**
(45) Date of publication and mention of the grant of the patent: **29.08.2012**
(21) Application number: 03771441.7
(22) Date of filing: 30.07.2003
(51) Int. Cl.: H02K 15/04, H02K 15/00, H02K 15/06

(54) **MOTOR MANUFACTURING METHOD**
MOTORHERSTELLUNGSVERFAHREN
PROCEDE DE FABRICATION DE MOTEUR

(30) Priority: 30.07.2002 WO PCT/JP02/07749; 31.01.2003 JP 2003023222
(43) Date of publication of application: 27.04.2005
(73) Proprietor: AISIN AW CO., LTD., Anjo-shi, Aichi 444-1192 (JP)
(72) Inventor: Hashimoto, Shingo, Anjo-shi, Aichi 444-1192 (JP); Kuroyanagi, Tooru, Anjo-shi, Aichi 444-1192 (JP); Yamaguchi, Tsuyoshi, Anjo-shi, Aichi 444-1192 (JP); Kido, Takahiro, Anjo-shi, Aichi 444-1192 (JP)
(74) Representative: TBK
(86) International application number: PCT/JP2003/009699
(87) International publication number: WO 2004/012324

(56) References cited:
- EP-A- 1 414 137
- JP-A- 9 009 588
- JP-A- 51 138 803
- JP-A- 55 094 567
- JP-A- 56 019 363
- JP-A- 63 001 349
- JP-A- 2002 325 408
- US-A- 1 538 187
- US-A- 2 873 514
- US-A- 3 193 913
- US-A- 4 908 541
- US-A- 5 060 364
- PATENT ABSTRACTS OF JAPAN vol. 005, no. 070 (E-056), 12 May 1981 (1981-05-12) -& JP 56 019363 A (MATSUSHITA ELECTRIC IND CO LTD), 24 February 1981 (1981-02-24)
- PATENT ABSTRACTS OF JAPAN vol. 2003, no. 03, 5 May 2003 (2003-05-05) -& JP 2002 325408 A (NISSAN MOTOR CO LTD), 8 November 2002 (2002-11-08)

## Description

### TECHNICAL FIELD

The present invention relates to a process for manufacturing a motor and, more particularly, to a process for inserting a coil into a motor core.

### BACKGROUND ART

When there is to be manufactured a motor which has a stator prepared by inserting a coil into slots of a motor core such as a stator core or rotor core, the motor manufacturing process is very important. And, a variety of coil inserting processes or apparatus have been proposed in the prior art.

In the coil inserting process of the prior art, the so-called "inserter method" is the main stream, as disclosed in the following Patent Publications 1 to 3, for example.

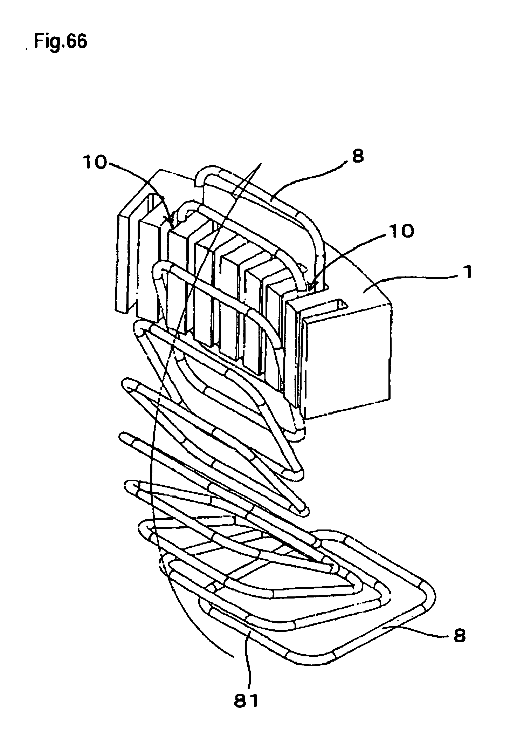

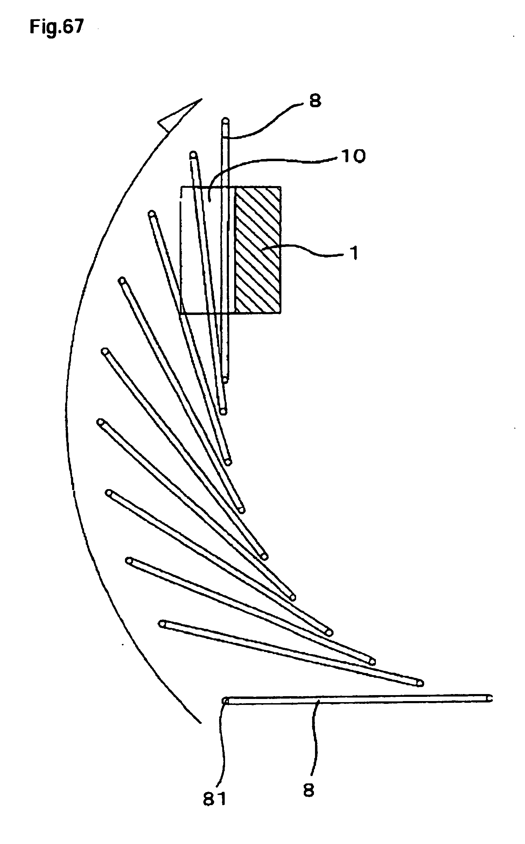

Here will be briefly described one example of the inserter method of the prior art. As shown in Fig. 66 and Fig. 67, a ring-shaped stator core 1 is arranged in a horizontal posture, and a coil 8 is also arranged generally in the horizontal posture axially below the stator core 1. And, the not-shown jig is lifted from below the coil 8 through the inside of the stator core 1, and the inner side end 81 of the coil 8 is hooked and moved upward by the jig. As a result, the coil 8 is moved to rub the inner circumference of the stator core 1 while changing its state gradually from the horizontal posture to the vertical posture, so that it is inserted into the slots 10 of the stator core 1.

List of Patent Documents of the Prior Art:
JP-A-2000-125522;
JP-A-2000-116078; and
JP-A-9-322492

However, the following problems are included in the motor manufacturing process using the inserter method of the prior art.

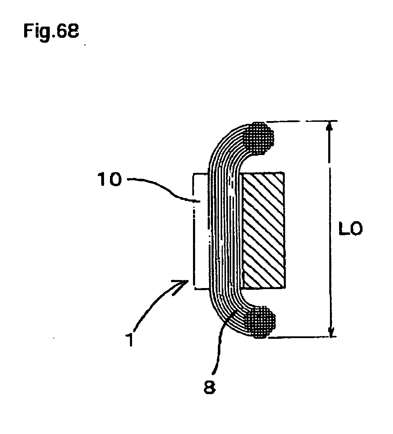

In the inserter method of the prior art, more specifically, the coil 8 is inserted, while changing its state, into the slots 10 of the stator core 1, as described hereinbefore. In this changing course, therefore, there arises a state, in which the coil 8 is inserted in an oblique posture. As shown in Fig. 68, therefore, the size of the coil 8 has to be given a surplus at least in its vertical length L0. As a result, at the time of completion of the insertion, the coil 8 takes a state, in which the coil end portion at its upper end portion or its lower end portion bulges more than necessary from the stator core 1.

This bulge of the coil end portion of the coil 8 more than necessary leads to an enlargement in the axial size of entire parts having the coil assembled in the stator core and still the worse in the entire motor. This problem, as described above, occurs in case the motor core to have the coil inserted is not only the stator core but also the rotor core.

In recent years, it has been positively investigated to adopt an electric motor or a hybrid system in an automobile, and it has been earnestly desired to reduce the axial size of the motor.

Document JP-A-56 019 363 discloses an inserting method for coil windings and a corresponding inserting device. A core is installed to a coil inserting station and a bobbin guide is let fall and fitted to a portion such as the inner circumferential side of the core. The smallest coil is formed by turning a flyer first around the smallest bobbin in a coil winding station. A bobbin with the next diameter in a waiting station is let fall and installed in a shape concentric to the bobbin, a concentric coil is made up by turning the flyer again, and a coil with the largest diameter is formed, and a bobbin group is lowered and faced to a slot opening portion of the core. Coil inserting pawls are worked and caught to a coil end portion, and a coil group is pulled into a slot.

### DISCLOSURE OF THE INVENTION

The present invention has been conceived in view of those problems of the prior art and contemplates to provide an improved motor manufacturing process which can reduce the bulge extents of the coil from the motor core and the axial length of the motor.

This object is achieved by a process for manufacturing a motor according to claim 1. Advantageous further developments are as set forth in the dependent claims.

One aspect of the invention is, at the coil inserting step: to move each single-pole coil so generally linearly toward the motor core that it may leave the coil retaining means; to move the adjoining coil insertion portions in the adjoining single-pole coils such that the moving loci may be parallel; and to move the two coil insertion portions owned by each single-pole coil, such that they may be simultaneously inserted into the slots; in addition, they may start their movements simultaneously and take the equal velocities.

At the coil inserting step, more specifically, each single-pole coil is arranged such that the coil insertion portions may be generally parallel to the inner circumference openings of the slots. Then, the single-pole coil is moved generally linearly to the motor core. Then, the coil insertion portions of the single-pole coil are inserted into the slots.

At the coil inserting step, therefore, the single-pole coil can be inserted by the linear movement with little change in its posture. And, the so-called "linear insertion method (or radial insertion method) " can be executed. Therefore; it is not necessary to enlarge the vertical length of the single-pole coil more than necessary. Therefore, the lengths of the coil insertion portions and the coil end portions of the single-pole coil can be optimized for the state, in which it is mounted in the motor core. Thus, it is possible to reduce the axial length of the parts having the coils mounted on the motor core and accordingly the axial length of the entire motor.

Especially in the invention, single-pole coils are moved such that the moving loci the adjoining coil insertion portions in the adjoining may be parallel or may approach the more from the inner circumference side to the outer circumference side. Therefore, the single-pole coil can be easily arranged on the inner circumference side of the motor core, even in the case of using a stator core (or motor core) having a small diameter or a single-pole coil having a large number of turns (or winding number). It is possible to add an effect that the coil inserting step can be easily performed.

Moreover, the two coil insertion portions owned by each single-pole coil are either moved to start simultaneously or to take the equal velocities or moved to be simultaneously inserted into the slots. As a result, each single-pole coil can move while keeping the distance between the coil insertion portions always at the minimum. From this point, it is unnecessary to add excessive length to the coil end portions.

According to the invention, therefore, it is possible to provide the motor manufacturing process, which can reduce the bulge extents of the coil from the motor core and the axial length of the motor.

### BRIEF DESCRIPTION OF THE DRAWINGS

Fig. 1 is an explanatory view showing the state of Embodiment 1, in which coils are wound on winding frames by a winding arm.
Fig. 2 is an explanatory view showing the state of Embodiment 1, in which the formations of three coils are completed.
Fig. 3 is an explanatory view showing the state of Embodiment 1, in which the shapes of the three coils are being profiled.
Fig. 4 is an explanatory view showing the state of Embodiment 1 just before a transfer device is inserted into the coil on the winding frame.
Fig. 5 is an explanatory view showing the state of Embodiment 1 just after transfer device is inserted into the coil on the winding frame.
Fig. 6 is an explanatory view showing the state of Embodiment 1, in which the transfer device is inserted into the coil on the winding frame and clamps the coil.
Fig. 7 is an explanatory view showing the state of Embodiment 1, in which the coil on the winding frame is pulled out by the transfer device.
Fig. 8 is an explanatory view showing the state of Embodiment 1, in which the coil is transferred from the transfer device to a magazine.
Fig. 9 is an explanatory view showing the state of Embodiment 1, in which the magazine is arranged in a stator core and in which insertion blades and provisional shaping blades are inserted into grooves.
Fig. 10 is an explanatory view showing the state of Embodiment 1, in which the insertion blades and the provisional shaping blades are moved.
Fig. 11 is an explanatory view showing the state of Embodiment 1, in which the insertion blades and the provisional shaping blades are completely moved.
Fig. 12 is an explanatory view showing the state of Embodiment 1, in which upper and lower formers are being advanced toward the stator core.
Fig. 13 is an explanatory view showing the state of Embodiment 1, in which the locus of the coil when the coil is inserted into the stator core is perspectively taken.
Fig. 14 is an explanatory view showing the state of Embodiment 1, in which the locus of the coil when the coil is inserted into the stator core is taken from the side.
Fig. 15 is an explanatory view of Embodiment 1 showing the size of the coil inserted into the stator core.
Fig. 16 is an explanatory view of Embodiment 1 showing the arrangement relation of single-pole coils of individual phases to be inserted into the stator core.
Fig. 17 is an explanatory view of Embodiment 1 showing the overlapping state of a coil end portion of the single-pole coils of individual phases to be inserted into the stator core.
Fig. 18 is an explanatory view of Embodiment 2 showing a construction of a coil inserting apparatus.
Fig. 19 is an explanatory view of Embodiment 2 showing the motions of insertion blades and so on of the coil inserting apparatus.
Fig. 20 is an explanatory view of Embodiment 3 showing the shape and motion of the insertion blades.
Fig. 21 is an explanatory view of Embodiment 4 showing the shape and motion of the insertion blades from the side.
Fig. 22 is an explanatory view of Embodiment 4 showing the shape and motion of the insertion blades from above.
Fig. 23 is an explanatory view of Embodiment 5 showing the structure of a magazine from the front.
Fig. 24 is an explanatory view of Embodiment 5 showing the structure of the magazine from the side.
Fig. 25 is an explanatory view of Embodiment 5 showing the structure of the magazine from the upper face.
Fig. 26 is an explanatory view of Embodiment 6 showing the structure of a magazine from the front.
Fig. 27 is an explanatory view of Embodiment 6 showing the structure of the magazine from the side.
Fig. 28 is an explanatory view of Embodiment 6 showing the structure of the magazine from the upper face.
Fig. 29 is an explanatory view of Embodiment 7 showing an example of the applied positions of an insertion pressure to be applied to the single-pole coil.
Fig. 30 is an explanatory view of Embodiment 7 showing an example of the applied positions of the insertion pressure to be applied to the single-pole coil.
Fig. 31 is an explanatory view of Embodiment 7 showing an example of the applied positions of the insertion pressure to be applied to the single-pole coil.
Fig. 32 is an explanatory view of Embodiment 7 showing an example of the applied positions of the insertion pressure to be applied to the single-pole coil.
Fig. 33 is an explanatory view of Embodiment 7 showing an example of the applied positions of the insertion pressure to be applied to the single-pole coil.
Fig. 34 is an explanatory view of Embodiment 7 showing an example of the applied positions of the insertion pressure to be applied to the single-pole coil.
Fig. 35 is an explanatory view of Embodiment 8 showing a structure of split insertion hooks.
Fig. 36 is an explanatory view of Embodiment 8 showing another example of the structure of the split insertion hooks.
Fig. 37 is an explanatory view of Embodiment 9 showing a construction of a coil forming apparatus.
Fig. 38 is an explanatory view of Embodiment 9 showing the state, in which a coil is formed by the coil forming apparatus.
Fig. 39 is an expanded explanatory view of Embodiment 9 showing a structure of a take-up jig.
Fig. 40 is an explanatory view of Embodiment 9 showing the state, in which all the winding frames of the take-up jig are retracted.
Fig. 41 is an explanatory view of Embodiment 9 showing the state, in which the first winding frame of the take-up jig is advanced.
Fig. 42 is an explanatory view of Embodiment 9 showing the state, in which the take-up jig is turned on the axis of the first winding frame to wind the electric line.
Fig. 43 is an explanatory view of Embodiment 9 showing the state, in which the electric line is completely wound on the first winding frame.
Fig. 44 is an explanatory view of Embodiment 9 showing the state, in which the first winding frame is retracted.
Fig. 45 is an explanatory view of Embodiment 9 showing the state, in which the second winding frame of the take-up jig is advanced.
Fig. 46 is an explanatory view of Embodiment 9 showing the state, in which the take-up jig is turned on the axis of the second winding frame to wind the electric line completely.
Fig. 47 is an explanatory view of Embodiment 9 showing the state, in which the second winding frame is retracted.
Fig. 48 is an explanatory view of Embodiment 9 showing the state, in which a third winding frame of the take-up jig is advanced.
Fig. 49 is an explanatory view of Embodiment 9 showing the state, in which the take-up jig is turned on the axis of the third winding frame to wind the electric line completely.
Fig. 50 is an explanatory view of Embodiment 9 showing the state, in which the third winding frame is retracted.
Fig. 51 is an explanatory view of Embodiment 9 showing a structure for fixing the winding frame at the retracted position.
Fig. 52 is an explanatory view of Embodiment 9 showing the state, in which the positioning pins of the winding frame are disengaged from a guide plate.
Fig. 53 is an explanatory view of Embodiment 9 showing a structure for fixing the winding frame at the advanced position.
Fig. 54 is an explanatory view of Embodiment 9 showing the state, in which the take-up jig is arranged in the stator core.
Fig. 55 is an explanatory view of Embodiment 9 showing the state, in which the insertion blades and the provisional shaping blades inserted into the take-up jig are advanced.
Fig. 56 is a perspective view of Embodiment 10 showing a wedge.
Fig. 57 is an explanatory view of Embodiment 10 showing the state, in which the wedge is mounted in the slot of the stator core.
Fig. 58 is an explanatory view of Embodiment 11 showing a structure of an insertion apparatus.
Fig. 59 is a section of Embodiment 11 taken along line A - A of Fig. 58.
Fig. 60 is a section of Embodiment 11 taken along line B - B of Fig. 58.
Fig. 61 is an explanatory view of Embodiment 11 showing the state, in which the working of a wedge pusher of the insertion apparatus is started.
Fig. 62 is an explanatory view of Embodiment 11 showing the state, in which the wedge pusher of the insertion apparatus abuts against a blade unit.
Fig. 63 is an explanatory view of Embodiment 11 showing the state, in which the wedge is pushed from the insertion apparatus into the slot of the stator core.
Fig. 64 (a) is an explanatory view of Embodiment 12 showing the state of coil inserting means taken in the axial direction of the stator core and before a pusher plate is advanced.
Fig. 64 (b) is an explanatory view of Embodiment 12 showing the state of the coil inserting means taken in the axial direction of the stator core and after the pusher plate is completely advanced.
Fig. 65 (a) is an explanatory view of Embodiment 12 showing the state of the coil inserting means taken along line C - C of Fig. 64 and before the pusher plate is advanced.
Fig. 65 (b) is an explanatory view of Embodiment 12 showing the state of the coil inserting means taken along line C - C of Fig. 64 and after the pusher plate is completely advanced.
Fig. 66 is an explanatory view showing the state of a prior art example, in which the locus of the coil when the coil is inserted into the stator core is perspectively taken.
Fig. 67 is an explanatory view showing the state of the prior art example, in which the locus of the coil when the coil is inserted into the stator core is taken from the side.
Fig. 68 is an explanatory view of the prior art example showing the size of the coil inserted into the stator core.

### BEST MODE FOR CARRYING OUT THE INVENTION

According to an aspect of the invention, it is preferable that at the coil inserting step, each single-pole coil is moved so generally linearly toward the motor core that the moving loci of the winding center point of each single-pole coil may be generally linear.

It is also preferable that at the coil inserting step, the single-pole coils are so arranged on the inner circumference side of the motor core while being retained by the retaining means that the two coil insertion portions owned by each single-pole coil may be individual positioned at an equal distance from the inner circumference openings of the slots.

It is further preferable that at the coil inserting step, the two coil insertion portions owned by each single-pole coil are moved such that they may start to advance simultaneously into the slots and may complete the advancements simultaneously.

In any case, it is possible to make the movement of the single-pole coil stabler.

Moreover, it is preferable that at the coil inserting step, all the coil insertion portions owned by the single-pole coils start their movements simultaneously and take the equal velocities. In this case, the adjoining coil insertion portions of the adjoining single-pole coils move not only such that the moving loci may be parallel or may approach the more from the inner circumference side to the outer circumference side but also such that the movement starting time, the movements and the movement completing time may be synchronized. As a result, the crossover lines or the electric lines (or wires) connecting the adjoining single-pole coils can be set to the minimum length so that the motor can be made more compact.

Moreover, it is preferable that, in case the motor includes coil groups of a plurality of phases, each of which is composed of a plurality of the single-pole coils, at the coil inserting step, all the single-pole coils belonging to one phase are arranged in the motor core so that their coil insertion portions of all the single-pole coils are started to move simultaneously and moved at the equal velocities. In this case, the time period required for the coil inserting step can be shortened to rationalize the steps. Here, all the single-pole coils belonging to one phase are desirably connected but may contain the single-pole coil group which is not connected but separated.

Moreover, it is preferable that the movements of the single-pole coil at the coil inserting step are done while the angle made between the coil insertion portions and the axial direction of the motor core being kept within 5 degrees. In case the angle made between the coil insertion portions and the axial direction of the motor core exceeds 5 degrees, the effect to reduce the length of the coil end portions may drop.

Moreover, it is preferable that at the coil inserting step, only the single-pole coil is inserted into the slot of the motor core. Specifically, it is preferable not that the coil is moved to the motor core together with the so-called "bobbin" having the coil wound thereon but that the coil is exclusively moved. As a result, the distance between the motor core and each coil (or the single-pole coil) can be reduced to give an advantage that a highly efficient magnetic circuit can be constructed.

Moreover, it is preferable that at the coil inserting step, the single-pole coil is moved generally linearly toward the motor core, by applying insertion pressures individually at least to the two coil insertion portions of the single-pole coil. In this case, the single-pole coil can be linearly moved relatively easily while hardly changing its posture by applying the well-balanced inserting pressures to the two coil insertion portions.

Moreover, it is possible that at the coil inserting step, the single-pole coil is moved generally linearly toward the motor core, by applying insertion pressures individually at least to the two coil end portions of the single-pole coil. In this case, the linear movement of the single-pole coil can be realized relatively easily by applying the well-balanced inserting pressures to the two coil end portions.

Moreover, it is possible that at the coil inserting step, the single-pole coil is moved generally linearly toward the motor core, by applying insertion pressures individually to a plurality of positions, which are generally symmetric with respect to the winding center point of each single-pole coil. In this case, the linear movement of the single-pole coil can be realized by applying the well-balanced inserting pressures to those positions.

Moreover, it is preferable that the motor is a distributed winding type motor including the ring-shaped motor core having the slots formed in its inner circumference and having coil groups of a plurality of phases, each of which is composed of the single-pole coils making one pole, in which the individual single-pole coils are individually inserted across the two slots and arranged in the motor core and in which the single-pole coils belonging to the coil groups of different phases overlap the coil end portions partially when they are mounted in the motor core. In this case, the single-pole coils are constructed to have the partially overlapping coil end portions so that the coil end portions or the bulging portions of the coils can be effectively made compact especially by using the linear insertion method.

Moreover, it is preferable that the motor core is a stator core. Specifically, the motor core is exemplified by the stator core and the rotor core. Especially, the case of the stator core is seriously demanded for the compact length in the axial direction, so that the invention is highly effective for the stator core.

Moreover, it is preferable:
that the coil inserting step uses a magazine, which has such a disc shape as can be arranged on the inner side of the inner circumference of the motor core, which is provided in its outer circumference with a plurality of such coil retaining grooves at positions confronting the slots of the motor core as to arrange the coil insertion portions of the single-pole coil, and in which the coil retaining grooves for arranging the adjoining coil insertion portions in the adjoining single-pole coils are arranged either in parallel with each other or to approach each other from the inner circumference side to the outer circumference side;
that the coil insertion portions of the single-pole coils are inserted into the coil retaining grooves to retain the coils on the magazine;
that the magazine is so arranged inside of the motor core that the coil retaining grooves of the magazine may confront the slots of the motor core; and
that all the single-pole coils are moved from the coil retaining grooves to the slots of the motor core by bringing coil inserting means into abutment against all the single-pole coils on the magazine thereby to advance the abutting portions in the direction from the center of the magazine to the outer circumference.

Specifically, at first, the coils are inserted into the coil retaining grooves of the magazine. Here, the coil retaining grooves are formed in the outer circumference of the magazine. When the coils are inserted into the coil retaining grooves, therefore, it is possible to use the apparatus of a free construction without being restricted in the space and to adopt the free working method. Therefore, the coils can be relatively easily mounted in the coil retaining grooves of the magazine.

Then, the coil inserting means is brought into abutment against the coils and is moved from the inside to the outside. As a result, the coils retained by the coil retaining grooves of the magazine are linearly pushed by the coil inserting means so that they are pushed without changing their postures into the slots of the confronting motor core. In short, the linear movement of the coils can be easily executed by the movement of the coil inserting means.

Moreover, the coil retaining grooves formed in the magazine for arranging the adjoining coil insertion portions in the adjoining single-pole coils either are formed either in parallel with each other or approach the more from the inner circumference side to the outer circumference side, as described hereinbefore. Therefore, the moving loci of the adjoining coil insertion portions in the adjoining single-pole coils can be easily and reliably made either parallel or to approach each other from the inner circumference side to the outer circumference side.

Moreover, it is preferable that the coil inserting means includes insertion blades, which can be inserted into the coil retaining grooves of the magazine, so that the coil insertion portions are moved from the coil retaining grooves into the slots of the motor core by inserting the insertion blades into the coil retaining grooves to advance them from the center toward the outer circumference.

At the time when the coils are mounted in the magazine, more specifically, a clearance is left between the bottom portions of the coil retaining grooves and the coils. As a result, the insertion blades can be arranged in the coil retaining grooves. By inserting the insertion blades into the coil retaining grooves, moreover, the insertion blades and the coil insertion portions positioned in the coil retaining grooves can abut against each other all over their faces thereby to realize the stable coil movements. Here, the insertions of the insertion blades into the coil retaining grooves may be timed either simultaneously or before and after the arrangement of the magazine in the motor core.

Moreover, it is preferable that the insertion blades are inserted from either the surface side face or the back side face of the magazine. As a result, it is possible to simplify the moving mechanism of the insertion blades.

Moreover, it is preferable that the coil inserting means includes a pair of split insertion blades, which can be inserted individually from the surface side and the back side of the magazine into the coil retaining grooves, so that the coil insertion portions are moved from the coil retaining grooves into the slots of the motor core by inserting the paired split insertion blades individually from the surface side and the back side of the magazine into the coil retaining grooves to bring them into abutment against the coil insertion portions and by advancing the abutting portions in the direction from the center to the outer circumference. In this case, it is possible to adopt either a method of moving the paired split insertion blades, as inserted from the surface and back of the magazine into the coil retaining grooves, from the center toward the outer circumference, or a method of realizing the linear movement of the coils merely by inserting the paired split insertion blades having tapered portions, from above and below, as exemplified in the later-described embodiments.

Moreover, it is preferable that the coil inserting means includes a pair of split insertion hooks, which are divided on the surface side and the back side of the magazine, so that the coil insertion portions are moved from the coil retaining grooves into the slots of the motor core by bringing the paired split insertion hooks individually into abutment against the coil end portions protruding to the surface side and the back side of the magazine to advance them in the direction from the center of the magazine to the outer circumference.

In this case, the coil inserting means need not be inserted into the coil retaining grooves so that the coils can be supported more simply and stably from the surface and back of the magazine.

Moreover, it is preferable that simultaneously with or after the movement of the coil insertion portions from the coil retaining grooves to the slots, a provisional shaping step of pushing and deforming the coil end portions is performed by advancing provisional shaping means arranged between the adjoining coil retaining grooves in the direction from the center of the magazine to the outer circumference.

In this case, it is possible to easily perform the provisional shaping step of pushing and deforming the coil end portions or the bulging portions of the coils outward by the provisional shaping means, each time the coils are mounted in the motor core. As a result, the coil end portions can approach the surface of the motor core thereby to further reduce the axial length of the coil end portions. Moreover, the provisional shaping can be executed by using the magazine and the provisional shaping means so that the apparatus and the process can also be simplified.

Moreover, it is preferable that the magazine is provided with provisional shaping grooves in juxtaposition to the coil retaining grooves, and in that provisional shaping blades capable of being inserted into the provisional shaping grooves are used as the provisional shaping means, so that the provisional shaping step is performed by inserting the provisional shaping blades into the provisional shaping grooves to advance them in the direction from the center to the outer circumference.

In this case, the apparatus construction can be simplified by combining the provisional shaping grooves and the provisional shaping blades.

Moreover, it is preferable that the provisional shaping means includes a pair of split provisional shaping blades split on the surface side and the back side of the magazine, so that the provisional shaping step is performed by advancing the paired split provisional shaping blades on the surface side and the back side of the magazine in the direction from the center of the magazine to the outer circumference.

In this case, the provisional shaping can be stably performed from the surface and back of the coils.

Moreover, it is preferable that the coil inserting means includes a pair of split insertion blades split on the surface side and the back side of the magazine, and in that the split insertion blades and the split provisional shaping blades are associated with each other.

In case both the coil inserting means and the provisional shaping means are split to the two surface and back face sides of the magazine, more specifically, it is preferable that those existing on the same face side are linked and associated. As a result, the transfer mechanisms for the coil inserting means and the provisional shaping means can be integrated to simplify the apparatus construction.

Moreover, it is preferable that after the coil inserting step and the provisional shaping step were repeated a plurality of times, a proper shaping step of shaping the coil end portions is performed by pushing a former having shaping faces for profiling the coil end portions into a desired shape, onto the motor core.

In this case, the provisionally shaped coils can be wholly shaped at once into the desired shape merely by pushing the former onto the motor core. Therefore, it is possible to perform the proper shaping step simply. By this proper shaping step, moreover, the coil end portions bulging from the motor core can be shaped to approach the motor core so that the aforementioned axial size can be made smaller.

Moreover, it is preferable that the formers are provided with cutouts for preventing the interference between the coil inserting means and the provisional shaping means, and in that the formers are pushed onto the motor core while the coil inserting means and the provisional shaping means being kept in the advanced state.

In this case, in the presence of the coil inserting means and the provisional shaping means, the coils can be fixed at its proper shaping step so that the proper shaping can be stably performed. Moreover, the proper shaping step can be consecutively performed subsequent to the completion of the provisional shaping step so that the manufacturing process can be further rationalized.

Moreover, it is preferable that the motor is a three-phase DC brushless motor, and in that at the coil inserting step, the single-pole coils of one phase are simultaneously inserted into the slots of the motor core.

In this case, the coils of one phase can be handled all at once by using the magazine. By shifting the relative positions between the magazine and the motor core, moreover, all the three phases can be handled so that the works to insert the coils into the motor core can be completed by the three works.

Moreover, the magazine can also be exemplified by the take-up jig to be used at the coil forming step.

Specifically, it is also possible:
that the coil forming step uses a take-up jig, which includes a base holder and a plurality of winding frames arranged radially on the outer circumference of the base holder, in which the winding frames are arranged to move back and forth with respect to the base holder, and in which the coil retaining grooves for arranging the adjoining coil insertion portions in the adjoining single-pole coils are arranged between the adjoining winding frames either in parallel with each other or such that they approach more from the inner circumference side to the outer circumference side;
that the motor manufacturing process comprises:
   a winding frame protruding step of advancing one of the winding frames to protrude more than the remaining winding frames;
   a winding step of winding an electric line on the protruded winding frame to form the single-pole coil, by feeding the protruded winding frame in one direction with the electric line and by turning the take-up jig as a whole on the axis of the winding frame; and
   a winding frame retracting step of retracting the winding frame having the single-pole coil formed;
that the winding frame protruding step, the winding step and the winding frame retracting step are sequentially repeated on the adjoining winding frames and are performed at the winding step by reversing the turning directions of the take-up jig sequentially; and
that at the coil inserting step, the take-up jig is used as the magazine so the take-up jig retaining the coil is arranged inside of the motor core and so that each single-pole coil is moved from the winding frame directly to the slots of the motor core.

In this case, at the coil forming step, the coils are formed by using the take-up jig having the winding frames radially. At the coil inserting step, moreover, the take-up jig is arranged in the motor core. At this time, the winding frames owned by the take-up jig are radially arranged. When the take-up jig is arranged in the ring-shaped motor core, therefore, the individual single-pole coils are easily made to confront the slots, into which they are to be inserted. Without the single-pole coils being transferred from the take-up jig to another transfer device or the like, therefore, the single-pole coils can be transferred from the winding frames directly to the slots of the motor core.

At the coil forming step, on the other hand, there is used a take-up jig having a unique construction including the base holder and the winding frames. As described hereinbefore, the winding frame protruding step, the winding step and the winding frame retracting step are performed sequentially for every winding frames.

Here, the winding step is performed by turning the take-up jig as a whole on the axis of the winding frame protruded. Therefore, the electric line can be fed from one direction, as described hereinbefore, so that it needs not be turned unlike the prior art. Therefore, the single-pole coils can be formed around the winding frames without any torsion in the electric line.

Moreover, the winding step is performed after the winding frame protruding step, and the winding frame retracting step is performed after the winding step. In case the object winding frame of the winding step is changed, more specifically, this change can be made by advancing and retracting the winding frames at the winding frame protruding step and the winding frame retracting step, and no special space for feeding the electric line is needed between the adjoining winding frames. Therefore, the length of the crossover line between the single-pole coils obtained can be suppressed to a sufficiently small value.

In the take-up jig, as described hereinbefore, the coil retaining grooves for arranging the adjoining coil insertion portions in the adjoining single-pole coils are arranged between the adjoining winding frames either in parallel with each other or such that they approach more from the inner circumference side to the outer circumference side. Therefore, the moving loci of the adjoining coil insertion portions in the adjoining single-pole coils can be easily and reliablymade either parallel or to approach each other from the inner circumference side to the outer circumference side.

Moreover, it is preferable that the base holder exhibits a disc shape, and in that the winding frames are arranged to move back and forth along the axes extending radially from the center point of the base holder. In this case, at the coil forming step, the take-up jig may be slightly turned as a whole on the center point of the base holder, in case the turning center of the entire take-up jig is to be changed for each winding frame. Therefore, the changing works of the turning center are facilitated when the winding frames are interchanged.

Moreover, it is preferable that each winding frame has a sector shape made wider along the axis. In this case, the shape of the single-pole coil to be formed around each winding frame can be made wider along the axis. Therefore, it is possible to obtain the coil shape easily for the case, in which it is mounted from the inner circumference of the motor core.

Moreover, it is preferable that each winding frame in the take-up jig is removably provided with shaping blocks for profiling the shape of the single-pole coil to be wound. In this case, the shape of the single-pole coil can be easily changed by using the shaping blocks of different shapes. These shaping blocks can exhibit the function as the aforementioned positioning tool.

Moreover, it is preferable that the take-up jig has such a contour formed of the leading ends of the winding frames while all the winding frames being retracted as is circular around the center point of the base holder. In this case, when the take-up jig is arranged on the inner surface side of the ring-shaped motor core, the clearance between the take-up jig and the inner circumference of the motor core can be reduced to make the movement of the coils smoother.

Moreover, it is preferable that separate plates extended from the outer circumference of the base holder are so arranged on the two sides of each winding frame that a predetermined spacing is retained between the separate plates and the winding frame. In this case, when the winding frame is retracted after the single-pole coil was formed around the winding frame, the coil can be arranged in the space of a predetermined distance between the separate plates and the winding frame so that the coil can be retained in the take-up jig while keeping its satisfactory shape.

Next, it is preferable:
that the slot of the motor core includes: a slot open portion constricted in a space portion at its inner circumference end portion; and a general portion formed on the outer circumference side of the slot open portion and made larger in the space width than the slot open portion; and
that after the coil inserting step, a wedge inserting step is performed to insert the wedge in the axial direction of the motor core into the slot so that the inner circumference opening in the slot may be clogged.

With the coil (or its coil insertion portions) being inserted into the slot of the motor core, more specifically, the wedge is inserted into the inner circumference opening of the slot so that the electric line (or wire) making the coil may not come out of the slot.

The wedge used in the motor manufacturing process using the inserter method of the prior art is constructed by folding a sheet of electrically insulating aramid fibers into a C-shape. Moreover, the wedge mounting works are performed simultaneously as the coil is inserted while being moved in the axial direction of the motor core.

In the linear insertion method of the invention, however, the wedge is not inserted into the slot simultaneously with the insertion of the coil, but the wedge insertion step is executed at a different step after the coil insertion.

Moreover, it is preferable that the wedge includes a wide portion arranged in the general portion of the slot, and a convex portion, which has a smaller width size than that of the wide portion, which is protruded from the wide portion and which is arranged in the slot open portion.

The wedge, as formed by folding the aramid fiber sheet of the prior art, has such a low rigidity that its insertion into the slot while pushing out the coil. On the contrary, the aforementioned wedge is shaped to have the wide portion and the convex portion. Therefore, the wedge has a shape far superior in the rigidity to that of the wedge prepared by folding the sheet of the prior art. Therefore, the wedge has such a strength as can sufficiently endure the case in which it is solely inserted after the coil was inserted into the slot of the stator core.

By making use of the improved rigidity of the wedge, moreover, the slot open portion can be made wider than that of the prior art. Therefore, it is possible to improve the insertion of the coil at the coil inserting step.

Moreover, the wide portion and the convex portion of the wedge are arranged in the general portion and the slot open portion of the slot of the stator core, respectively. As a result, the convex portion can engage with the slot open portion so that the wedge can be prevented from turning and coming out of the slot open portion. Therefore, it is possible to keep the stable clogged state of the inner circumference opening of the slot.

Moreover, it is preferable that the wedge is molded of a synthetic resin integrally with the wide portion and the convex portion.

In this case, it is possible to manufacture the wedge easily and to lower the manufacturing cost.

The synthetic resin can be exemplified by various synthetic resins or plastics, if it has the rigidity demanded for the wedge, the electric insulation and the heat resistance of some extent. Of these, a liquid crystal polymer called the "LCP (Liquid Crystal Polymer)" is excellent in strength characteristics and is especially preferable.

Moreover, it is preferable that an inward recessed portion is formed in the surface opposite to the face, as having the convex portion, of the wide portion of the wedge. In this case, the area of the space in the slot can be enlarged to the extent of the recessed portion so that it can contribute to the improving the filling percentage of the coil.

Moreover, at least one of the wide portion and the convex portion at least on longitudinal one end of the wedge is preferably tapered to smaller sizes in width or thickness to the end portion. In this case, even in the presence of the coil already inserted when the wedge is inserted into the slot, the wedge can be inserted while pushing away the coil along that tapered shape, so that the insertion can be improved.

Moreover, at least one of the wide portion and the convex portion at least on longitudinal one end of the wedge can also be constructed to have an R-shape by finishing the corners of the end portion into a curved shape. In this case, too, in the presence of the R-shape, it is possible to improve the insertion of the wedge into the slot.

Moreover, it is preferable that the wide portion has such a width size that it is arranged while retaining a predetermined clearance between from the inner wall face of the general portion in the slot of the stator core. In this case, when the wedge is to be inserted into the slot of the stator core, it does not receive the frictional resistance from the inner wall face of the general portion of the slot to the wedge, so that the inserting workability of the wedge can be better improved.

Moreover, it is preferable that the aforementioned clearance is smaller than the size, of which the inner wall face forming the slot open portion of the stator core protrudes from the inner wall face forming the general portion. In the state where the wedge is arranged in the slot, therefore, the wide portion can be reliably prevented from passing over and coming out of the slot open portion so that the wedge can be prevented from coming out in the axial direction by the frictional force between the wedge and the protrusion from the inner wall face.

Moreover, it is preferable that the clearance is smaller than the diameter of the electric line constructing the coil to be inserted and arranged in the slot of the stator core. In this case, the electric line of the coil in the slot can be reliably prevented from penetrating to the slot open side more than the wedge, thereby to enhance the effect of suppressing the creeping current.

Moreover, it is preferable:
that at the coil inserting step, insertion blades capable of penetrating into the slots are used to push and guide the coil insertion portions into the slots, and penetrate by themselves into the slots; and
that at the wedge inserting step, the insertion blades and the wedge are moved in association with each other in the axial direction of the motor core and are interchanged to insert the wedge into the slot.

Here will be described a coil inserting apparatus, which can be applied when the coil inserting step in the motor manufacturing process of the invention is executed.

Specifically, there is provided a coil inserting apparatus which comprises coil retaining means having coil retaining grooves formed at positions to confront the slots of a motor core and in which coil insertion portions of a single-pole coil are inserted into the coil retaining grooves to regain the single-pole coil in the coil retaining means, so that the single-pole coil is inserted into the slot of the motor core from the coil retaining means while the ring-shaped motor core being arranged on the outer circumference side of the coil retaining means, further comprising:
a receiving bed for retaining the coil retaining means and the motor core;
insertion blades adapted to be inserted into the coil retaining grooves of the coil retaining means; and
blade driving means for moving the insertion blades back and forth along the coil retaining grooves.

In this coil inserting apparatus, it is preferable: that the coil retaining means includes one or more provisional shaping grooves between the paired ones of the coil retaining grooves for retaining one single-pole coil; that the coil inserting apparatus further comprises one or more provisional shaping blades disposed between the paired insertion blades corresponding to the paired coil retaining grooves and adapted to be inserted into the provisional shaping grooves; and that the blade driving means is constructed to move the provisional shaping blades forward and backward along the provisional shaping grooves in association with the insertion blades. In this case, the provisional shaping can be performed simultaneously with the insertion of the single-pole coil.

In this coil inserting apparatus, moreover, it is preferable: that the coil inserting apparatus comprises a first arm and a second arm having rocking fulcrums at their lower ends; the insertion blades are connected to the upper end of the first arm; that the provisional shaping blades are connected to the upper end of the second arm; that a first slot and a second slot having slopes at least their portions are formed in the first arm and the second arm; that lifting members to be moved up and down by an actuator are arranged on the inner sides of the first arm and the second arm; that the lifting members have a first pin and a second pin, which can slidably engage with the first slot and the second slot; and that the first arm and the second arm are rocked by moving the lifting members up and down with the actuator thereby to change the engagement positions between the first and second pins and the first and second slots, so that the insertion blades and the provisional shaping blades are advanced or retracted by the rocking motions. In this case, the advancing and retracting actions of the insertion blades and the provisional shaping blades can be executed easily and precisely.

### Embodiment 1

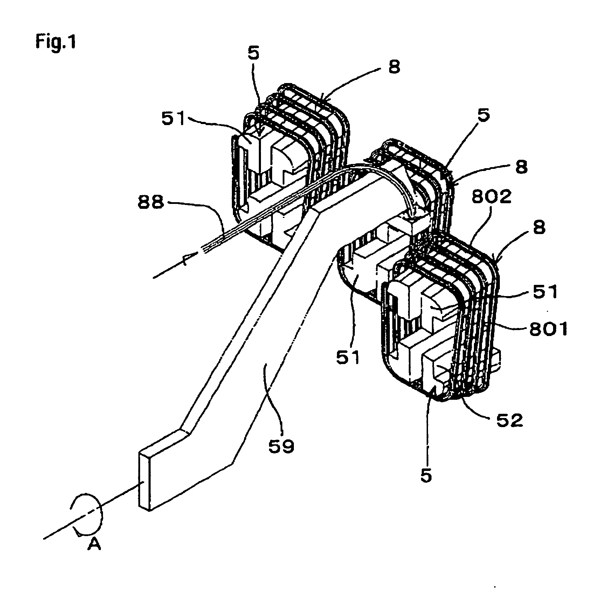

A motor manufacturing process according to an embodiment of the invention will be described with reference to Fig. 1 to Fig. 15.

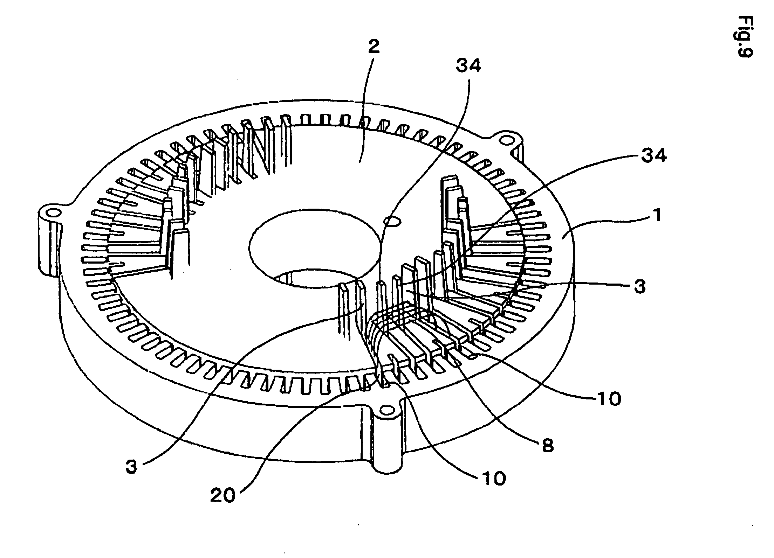

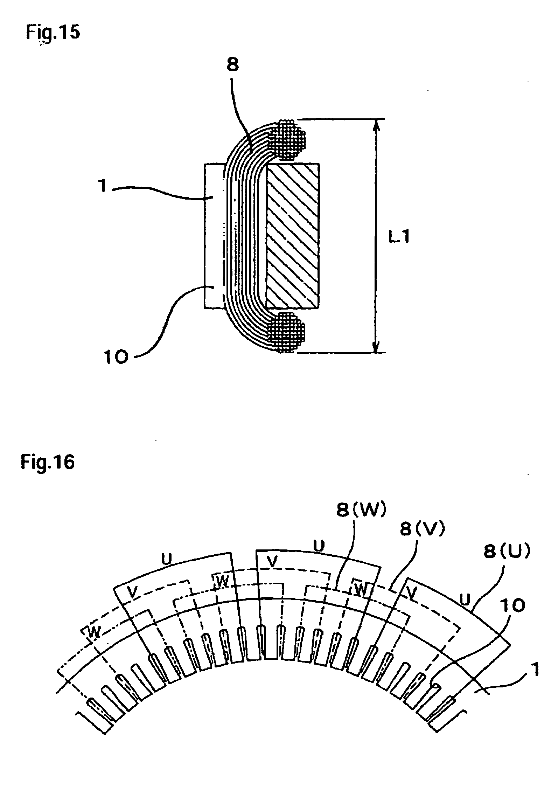

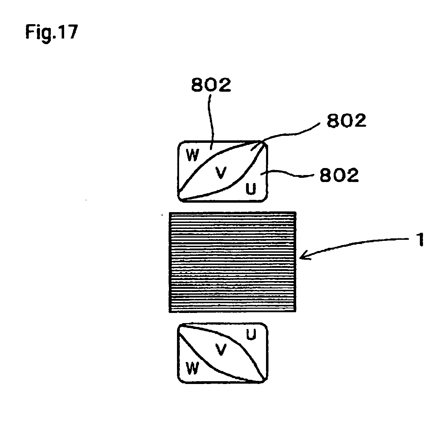

A motor to be manufactured by the process of this embodiment includes: a ring-shaped motor core (or stator core) 1 (Fig. 9 to Fig. 12) having a plurality of slots 10 formed in its inner circumference; and a coil group of three phases (U-phase, V-phase and W-phase) (Fig. 16 and Fig. 17). In this motor manufacturing process, the coil group of each phase is composed of a plurality of single-pole coils 8 constructing one pole. Each single-pole coil 8 is inserted into and arranged in the stator core 1 across the two slots 10. The single-pole coils 8 belonging to the coil groups of the different phases have their coil end portions 802 partially overlapping each other when they are mounted in the stator core 1.

The manufacturing process of this embodiment includes a coil forming step and a coil inserting step.

As shown in Fig. 1 to Fig. 3, the coil forming step forms the coil, which includes: the single-pole coil 8 having two coil insertion portions 801 inserted into the slots 10; and the two coil end portions 802 so arranged outside of the stator core 1 as to join the coil insertion portions 801.

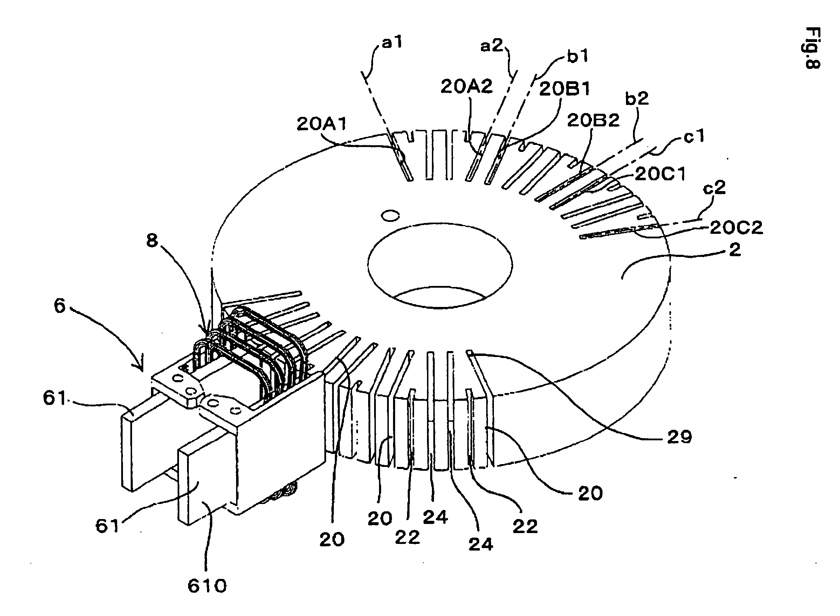

At the coil inserting step, on the other hand, with the coil insertion single-pole coils 8 portions 801 being individually arranged generally in parallel with the inner circumference openings of the slots 10 by the coil insertion portions 801 and with the coil insertion portions being individually kept at an angle of inclination within 5 degrees with respect to the axial direction of the stator core 1, as shown in Fig. 9 to Fig. 11, the single-pole coils 8 are simultaneously moved generally linearly toward the stator core 1 so that their insertion portions 801 of the single-pole coils 8 are simultaneously inserted into the slots 10. At this time, moreover, the adjoining single-pole coils 8 are moved such that the moving loci (e.g., a2 and b1, and b2 and c1 in Fig. 8) before their adjoining coil insertion portions 801 are inserted into the slots 10 may be in parallel with each other. Moreover, the two coil insertion portions 801 of each single-pole coil 8 start their movements simultaneously and take equal velocities.

At the coil inserting step of this embodiment, there is used a magazine 2, which has such a disc shape as can be arranged on the inner side of the inner circumference of the stator core 1 and which is provided in its outer circumference with a plurality of coil retaining grooves 20 for arranging the coil insertion portions 801 of the single-pole coils 8 at positions confronting the slots 10 of the motor core 1, as shown in Fig. 8. Of the coil retaining grooves 20, those (e.g., 20A2 and 20B1, and 20B2 and 20C1 in Fig. 8) for arranging the adjoining coil insertion portions 801 of the adjoining single-pole coils 8 are arranged in parallel with each other.

And, the coils 8 (or the coil insertion portions 801) are inserted into and arranged in the coil retaining grooves 20, and the magazine 2 is so arranged in the stator core 1 that the coil retaining grooves 20 of the magazine 2 confront the slots 10 of the stator core 1.

Next, as shown in Fig. 9, insertion blades 3 as the coil inserting means are caused to abut against the coils 8 and are advanced from the center to the outer circumference of the magazine 2 thereby to move the coils 8 from the coil retaining grooves 20 into the slots 10 of the stator core 1.

The more detailed description will be made in the following.

The motor to be manufactured in the invention is a three-phase DC brushless motor. And, the stator core 1 of this embodiment is prepared by laminating ring-shaped electromagnetic steel sheets, and is provided in its inner circumference with seventy two slots 10 in total, as shown in Fig. 9 to Fig. 12 and Fig. 16.

Here will be briefly described an example of the arrangement of the coils 8 in the individual slots 10 of the stator core 1.

In this embodiment, for the stator core 1, thirty six single-pole coils 8 in total are divided into three groups of twelve single-pole coils 8 in total, as corresponding to one phase.

The individual slots 10 are serially numbered from first to seventy second. For the first group, one single-pole coil is inserted to form turns through the first slot and the sixth slot. Next to this, another single-pole coil is inserted to form turns through the seventh slot and the twelfth slot. Next to this, one single-pole coil is arranged for every six slots. As shown in Fig. 16, therefore, twelve single-pole coils 8 of the coil group belonging to the U-phase are inserted at first into the inner circumference of the stator core 1 and is arranged in the adjoining state.

The single-pole coils 8 belonging to the second and third groups (i.e., the V-phase and W-phase) are arranged with shifts of two and four slots, respectively, in the circumferential direction from the arranged state of the first group. As shown in Fig. 16, therefore, all the single-pole coils 8 are mounted in the stator core 1 such that the coil end portions 802 of the single-pole coils 8 belonging to the U-phase are partially overlapped from the inner circumference side of the stator core 1 by the coil end portions 802 of the single-pole coils 8 belonging to the V-phase, and such that the coil end portions 802 of the single-pole coils 8 belonging to the V-phase are partially overlapped from the inner circumference side of the stator core 1 by the coil end portions 802 of the single-pole coils 8 belonging to the W-phase. As shown in Fig. 17, the coil end portions 802 of the individual phases are finally packed so compactly at a provisional shaping step and a proper shaping step to be described hereinafter that they are deformed outward from the slots 10.

In this embodiment, moreover, the magazine 2 is used to handle one group (of one phase), i.e., the twelve single-pole coils 8 at once so that the thirty six single-pole coils 8 in total are mounted in the stator core 1 by the works of three times.

As shown in Fig. 8, the magazine 2 includes: the paired left and right coil retaining grooves 20; a pair of shallowed left and right preparatory grooves 22 positioned between the coil retaining grooves 20; and a pair of left and right provisional shaping grooves 24 positioned between the preparatory grooves 22. If these six grooves are bundled into one group, moreover, these twelve groups are disposed adjacent to each other over the outer circumference of the magazine 2. Moreover, all the adjoining grooves are disposed to confront the slots 10 in the stator core 1 (although partially omitted from Fig. 8 to Fig. 12).

Moreover, all the individual preparatory grooves 22 are arranged along the radial directions and are oriented in radially different directions. On the other hand, the coil retaining grooves 20 are so arranged in parallel as to make one pair with the coil retaining grooves 20 arranged adjacent to each other for receiving the adjoining single-pole coils 8. Moreover, the paired provisional shaping grooves 24 are arranged in parallel to each other.

Before the works using the magazine 2 thus constructed, a winder step is performed for forming the coils. At this winder step, the single-pole coils 8 are formed three by three.

For this winder step, as shown in Fig. 1, there are used three juxtaposed winding frames 5 and a winding arm 59 for feeding a wire (or an electric line) 88 and winding it on the winding frames 5.

As shown in Fig. 1, each winding frame 5 is provided with four upper, lower, left and right pawl portions 51, and in its left and right side faces with cutouts 52 for allowing a later-described transfer device 6 easily to insert thereinto. Moreover, the pawl portions 51 are opened/closed leftward and rightward so that they are opened leftward and rightward to have a larger diameter when they wind the wire. Moreover, each winding frame 5 can be moved forward and backward as a whole and can turn leftward and rightward.

The winding arm 59 is constructed to feed the wire 88 while turning around the winding frames 5 in the advanced states. The turning direction is, moreover, constructed to be changeable.

At first, the winding frame 5 at the left end is advanced (although not shown), and the wire 88 is fed while the winding arm 59 being turned clockwise around the winding frame 5 at the left end. As a result, the first single-pole coil 8 is formed.

Next, the left side winding frame 5 is retracted, and the central winding frame 5 is advanced (although not shown). Then, the wire 88 is fed while the winding arm 59 being turned counter-clockwise around the central winding frame 5. As a result, the second single-pole coil 8 is formed.

Moreover, as shown in Fig. 1, the central winding frame 5 is retracted, and the right end winding frame 5 is advanced. Then, the wire 88 is fed while the winding arm 59 being turned again clockwise (in the direction of arrow A) around the right end winding frame 5. As a result, the third single-pole coil 8 is formed.

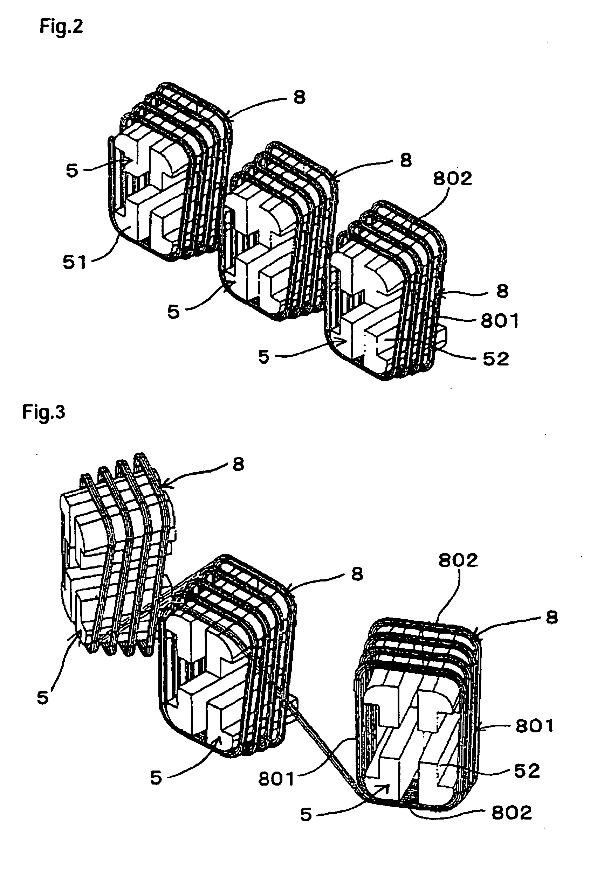

Next, the right end winding frame 5 is retracted so that the three winding frames 5 are arranged in a line, as shown in Fig. 2. Next, the left and right winding frames 5 are slightly turned outside, as shown in Fig. 3, so that the three single-pole coils 8 are tensed to adjust their shapes.

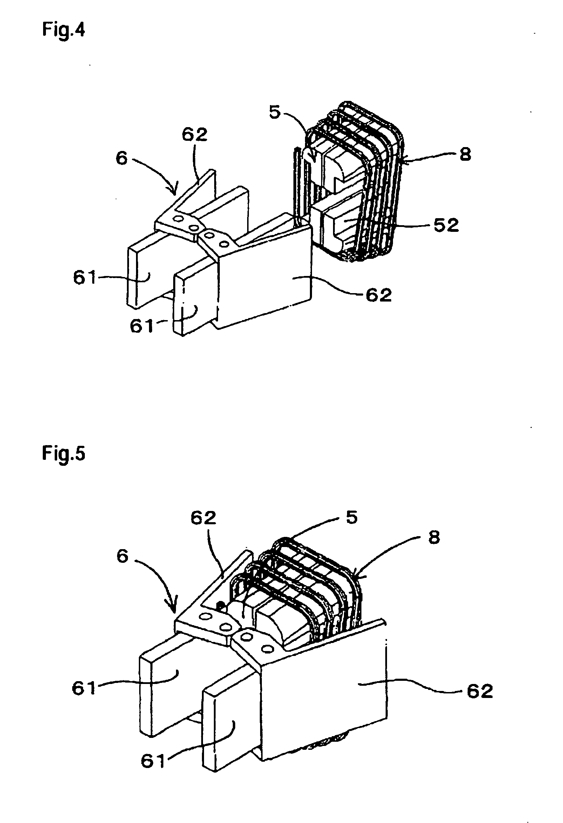

Next, in this embodiment, the three single-pole coils 8 thus formed around the three winding frames 5 are transferred from the winding frames 5 to the magazine 2 by the transfer device 6, as shown in Fig. 4 to Fig. 8.

As shown in Fig. 4 to Fig. 7, the transfer device 6 is provided with two base plates 61 and clamp plates 62 individually arranged outside of the base plates 61. These base plates 61 and clamp plates 62 can be turned or opened/closed in the horizontal directions.

When this transfer device 6 is used to perform the coil transferring actions actually, the pawl portions 51 of the winding frame 5 are closed at first to the left and right to reduce its external diameter, as shown in Fig. 4. As a result, a clearance is established between the winding frame 5 and the single-pole coil 8 formed around the winding frame 5.

Moreover, the transfer device 6 is positioned in parallel to adjust the clearance of the base plates 61 to the position of the clearance between the winding frame 5 and the single-pole coil 8. Moreover, the clamp plates 62 are opened to the left and right from the base plates 61.

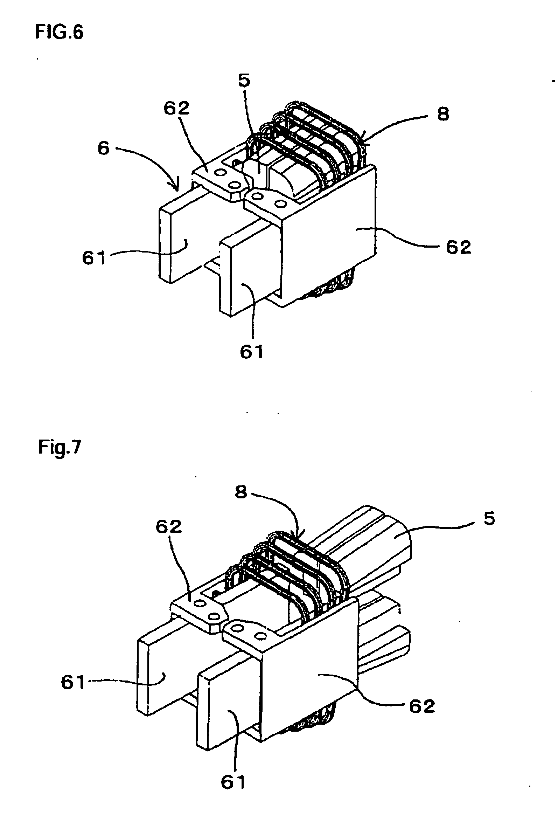

Next, the base plates 61 of the transfer device 6 are inserted into the clearances between the winding frame 5 and the single-pole coil 8, as shown in Fig. 5. As shown in Fig. 6, the clamp plates 62 are then closed to clamp the single-pole coil 8 between the clamp plates 62 and the base plates 61.

As shown in Fig. 7, the transfer device 6 is retracted to complete the removal of the single-pole coil 8 from the winding frame 5.

Next, the transfer device 6 is so arranged that it confronts the outer circumference of the magazine 2, and that the outer side faces 610 of its base plates 61 are generally in parallel with the inner side faces of the coil retaining grooves 20, as shown in Fig. 8. And, the clamp plates 62 are slightly opened to make the single-pole coil 8 movable, and this single-pole coil 8 is pushed and transferred by the not-shown pusher into the coil retaining grooves 20 of the magazine 2. At this time, the single-pole coil 8 is not pushed deeply into the coil retaining grooves 20 but leaves such clearances between itself and the bottom portions 29 of the coil retaining grooves 20 that the later-described insertion blades 3 may be inserted thereinto.

By performing these actions at once with the three transfer devices 6, the three single-pole coils 8 formed around the three winding frames 5 can be transferred at once to the magazine 2. Here, in case the individual single-pole coils 8 may be separated, one transfer device 6 can also be used to transfer the single-pole coils 8 one by one.

By repeating the forming and transferring works of the three coils with the winding frames 5 thus far described four times, moreover, the twelve single-pole coils 8 are arranged on the outer circumference of the magazine 2.

Here, the works from the formations to the transfers of the coils to the magazine 2 can also be rationalized by increasing the facilities of the winding frames 5, the winding arms 59 and the transfer devices 6 to proceed the works in parallel.

Next, the coils are moved from the magazine 2 to the stator core 1.

At first, the magazine 2 is so arranged in the stator core 1 that the coil retaining grooves 20 of the magazine 2 confront the slots 10 of the stator core 1, as shown in Fig. 9.

At this time, all the single-pole coils 8 on the magazine 2 are so arranged that their coil insertion portions 801 are generally in parallel with the corresponding slots 10. And, the angle made between the coil insertion portions 801 and the axial direction of the stator core 1 is kept within 5 degrees at this time.

Moreover, the insertion blades 3 are inserted into the clearances in the coil retaining grooves 20 of the magazine 2. On the other hand, provisional shaping blades 34 are inserted into the provisional shaping grooves 24 of the magazine 2.

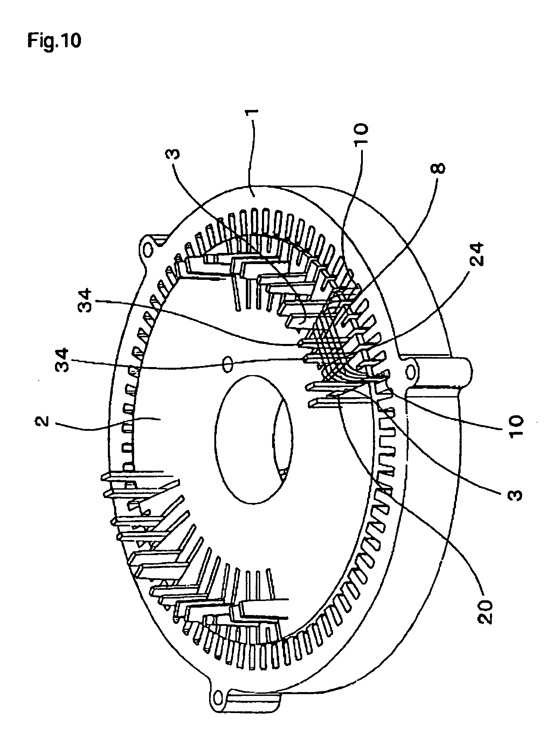

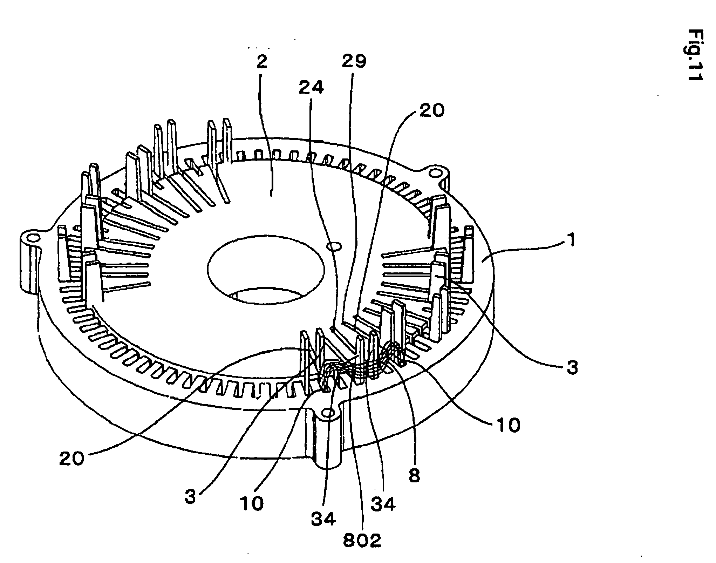

As shown in Fig. 10 and Fig. 11, moreover, the insertion blades 3 are advanced in the coil retaining grooves 20 in the directions from the center to the outer circumference, and the provisional shaping blades 34 are advanced in the provisional shaping grooves 24 in the directions from the center to the outer circumference. As a result, the single-pole coils 8 are pushed by the insertion blades 3 so that they move from the coil retaining grooves 20 to the slots 10 of the stator core 1.

Moreover, the upper and lower coil end portions 802, as bulging out of the stator core 1, of the single-pole coils 8 are pushed and deformed outward by the provisional shaping blades 34 so that they are subjected to the provisional shaping treatment.

These advancing actions of the insertion blades 3 and the provisional shaping blades 34 are simultaneously performed for all the twelve single-pole coils 8 so that these twelve single-pole coils 8 of one group are simultaneously inserted into the slots 10 of the stator core 1.

At this time, the angle made between the individual coil insertion portions 801 and the stator core 1 is kept within 5 degrees even during the movements. Therefore, all the single-pole coils 8 are simultaneously moved generally linearly toward the stator core 1 so that their coil insertion portions 801 of all the single-pole coils 8 are simultaneously inserted into the slots 10.

Of the coil retaining grooves 20 of the magazine 2 thus far described, moreover, there are arranged in parallel the coil retaining grooves (e.g., 20A2 and 20B1, and 20B2 and 20C1 in Fig. 8) for arranging the adjoining coil insertion portions 801 in the adjoining single-pole coils 8. Therefore, the coil insertion portions 801 of each single-pole coil 8 move such that their moving loci (e.g., a2 and b1, and b2 and c1 in Fig. 8) before they are inserted into the slots 10 are parallel.

Moreover, the insertion blades 3 for pushing the coil insertion portions are completely synchronized from the start to the stop of their movement so that the two coil insertion portions 801 owned by each single-pole coil 8 start their movements simultaneously and move at the equal velocities.

Next, in this embodiment a second provisional shaping step is performed by using a pair of upper and lower formers 66, which are used in the proper shaping step, too.

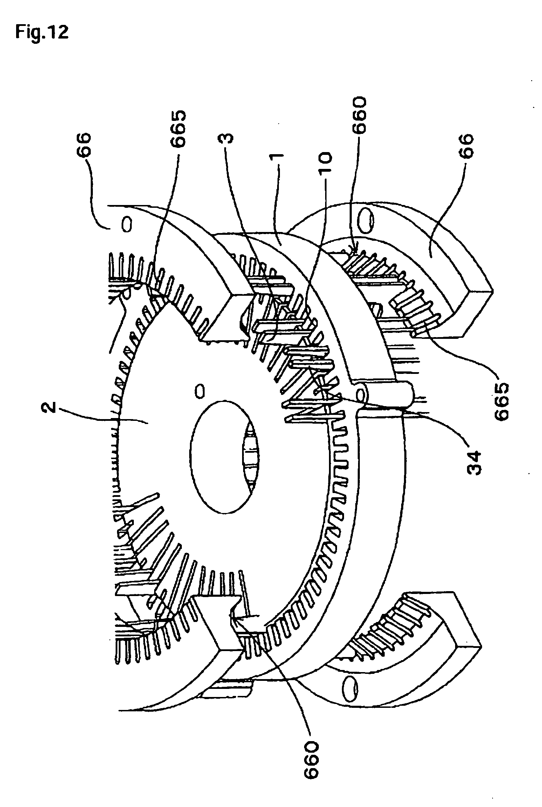

The formers 66 have ring shapes, as shown in Fig. 12, and are provided, on their sides confronting the stator core 1, with shaping faces 660 for profiling the coils into a desired shape. Specifically, the upper and lower individual formers 66 have the tapered shaping faces 660, the inner circumference portions of which protrude toward the stator core 1. And, the formers 66 are constructed such that the coils 8 are shaped outward along the tapered shapes of the shaping faces 660 by advancing the formers 66 to the stator core 1.

Moreover, each former 66 is provided with cutouts 665 for preventing the insertionblades 3 and the provisional shaping blades 34 from interfering each other. And, the formers 66 can be pushed onto the stator core 1 while the insertion blades 3 and the provisional shaping blades 34 being advanced.

The paired upper and lower formers 66 thus constructed are individually advanced from their upper and lower positions and pushed onto the stator core 1. As a result, the second provisional shaping is performed such that the coil end portions 802, as bulging out from above and below the stator core 1, of the twelve single-pole coils 8 thus arranged in the stator core 1 fall down toward the stator core 1.

Next, the coil forming works using the winding frames 5 and the winding arm 59 and the coil transferring works using the transfer device 6 are performed to insert and arrange the twelve single-pole coils 8 of the second group in the magazine 2.

Likebefore, moreover, the magazine 2 is so arranged inside of the stator core 1 that the coil retaining grooves 20 of the magazine 2 confront the slots 10 of the stator core 1. At this time, the magazine 2 and the stator core 1 are arranged at such circumferentially shifted positions that the coils of the first phase of the first group and the coils of the second group are shifted. Next, there are performed the movements of the coils 8 using the insertion blades 3 and the provisional shaping using the provisional shaping blades 34.

Still moreover, the second provisional shaping is performed by using the paired upper and lower formers 66 like the above.

Next, the twelve single-pole coils 8 of the third group are worked as in the cases of the first and second groups. At the moving time of the coils from the magazine 2 to the stator core 1, however, the relative positions of the magazine 2 and the stator core 1 are so circumferentially shifted that the third group (or the third phase) may be shifted with respect to the first group (or the first phase) and the second group (or the second phase).

On the other hand, the second provisional shaping of the third group is resultantly the proper shaping step. In other words, at the stage where the coils of the third group are inserted into the stator core 1, all the thirty six single-pole coils 8 are mounted in the stator core 1. Moreover, the provisional shaping by the provisional shaping blades 34 is directly performed exclusively on the twelve single-pole coils 8 of the third group. On the other hand, the shaping to be performed as the second provisional shaping by the formers 66 is performed on all the thirty six single-pole coils 8 so that it becomes the proper shaping step of profiling the entire coil shape.

Thus, the thirty six single-pole coils 8 in total are inserted and arranged in the stator core 1, and the proper shaping is in the completed state.

Here in this embodiment, a series of works are performed from the formation of the twelve single-pole coils of the individual groups to the second provisional shaping. By using three sets of magazines 2, however, the works could naturally be done in parallel with three sets from the coil shaping to the insertion and arrangement of the coils in the magazine 2 so that they might be rationalized.

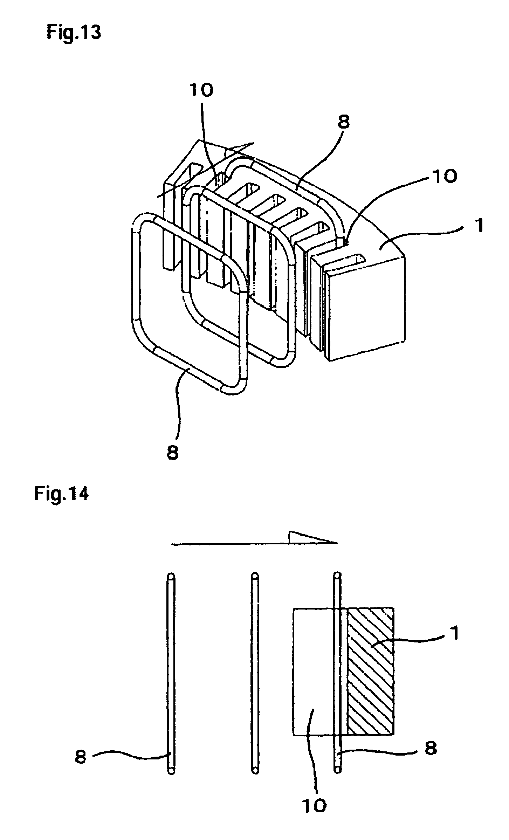

By making use of the magazine 2 and the insertion blades 3, as described hereinbefore, this embodiment can execute the so-called "linear insertion method" easily and stably. As shown in Fig. 13 and Fig. 14, more specifically, the coils 8 can be linearly inserted without changing their postures into the slots 10. Therefore, it is not necessary to enlarge the vertical length of the coils 8 more than necessary. As shown in Fig. 15, more specifically, the vertical size L1 of the coils 8 inserted into the stator core 1 can be made sufficiently shorter than the vertical size L0 of the prior art, as shown in Fig. 68.

Therefore, it is possible to prevent the coils 8 from excessively bulging out of the stator core 1 and to reduce the axial length of the parts constructed by mounting the coils 8 in the stator core 1 and accordingly the axial length of the entire motor.

In this embodiment, moreover, the moving loci of the adjoining coil insertion portions 801 of the adjoining single-pole coils 8 are parallel, as described hereinbefore. Even in case the stator core 1 has a small diameter or uses many turns (or windings) of single-pole coils 8, these single-pole coils 8 can be easily arranged on the inner circumference side of the stator core 1, thereby to add an effect that the coil inserting step can be easily performed.

Noting the movements of the individual single-pole coils 8 one by one, moreover, the two coil insertion portions 801 owned by each single-pole coil 8 start their movements simultaneously and move at the equal velocities. As a result, each single-pole coil can move while keeping its coil insertion portions at the minimum distance at all times. From this point, it is unnecessary to add excessive length to the coil end portions.

Noting all the single-pole coils 8 of one phase, moreover, all the coil insertion portions 801 start their movements simultaneously and move at the equal velocities. As a result, the length of the crossover lines and the coil length can be minimized, and the movements of the coil insertion portions 801 are well balanced. Therefore, the coils are not disturbed in their arrayed state, and the electric lines (or the wires) constructing the coils are hardly damaged.

Especially in this embodiment, moreover, the provisional shaping grooves 24 are formed in the magazine 2 so that the provisional shaping is performed by the movements of the provisional shaping blades 34. As a result, the provisional shaping can be easily performed to push and deform the coil end portions 802 of the coil outward, each time each single-pole coil 8 is mounted in the stator core 1. Moreover, these works can be done simultaneously with the transfer of the coils, thereby to simplify the device and the step.

In this embodiment, moreover, the formers 66 are used and pushed onto the stator core 1 to perform the second provisional shaping and the proper shaping of the coils 2. As a result, all the provisionally shaped coils can be shaped all at once into a desired shape merely by pushing the formers 66 onto the stator core 1. By the second provisional shaping and the proper shaping, moreover, the coil end portions bulging from the stator core 1 can be shaped to approach the stator core 1 so that the aforementioned axial size can be made smaller.

Moreover, the formers 66 are provided with the aforementioned cutouts so that they can be pushed onto the stator core 1 while the insertion blades 3 and the provisional shaping blades 34 being advanced. Therefore, the second provisional shaping and the proper shaping by the formers 66 can be executed consecutively of the insertion and provisional shaping of the coils 8 into the stator core 1, as described hereinbefore, so that the manufacturing process can be rationalized.

Here in this embodiment, the insertion blades 3 are used as the coil inserting means, and the provisional shaping blades 34 are used as the provisional shaping means. However, these blades could be replaced by the split insertion blades or the split insertion hooks and the split provisional shaping blades or the split provisional shaping hooks, which are split on the surface side face and the back side face of the magazine 2. In this modification, moreover, the split insertion blades or the split insertion hooks and the split provisional shaping blades or the split provisional shaping hooks couldbe integrated on the surface side face and the back side face of the magazine 2, thereby to simplify the device.

Moreover, this embodiment has exemplified the three-phase DC brushless motor, but process thus far described could be applied to a motor of another structure.

### Embodiment 2

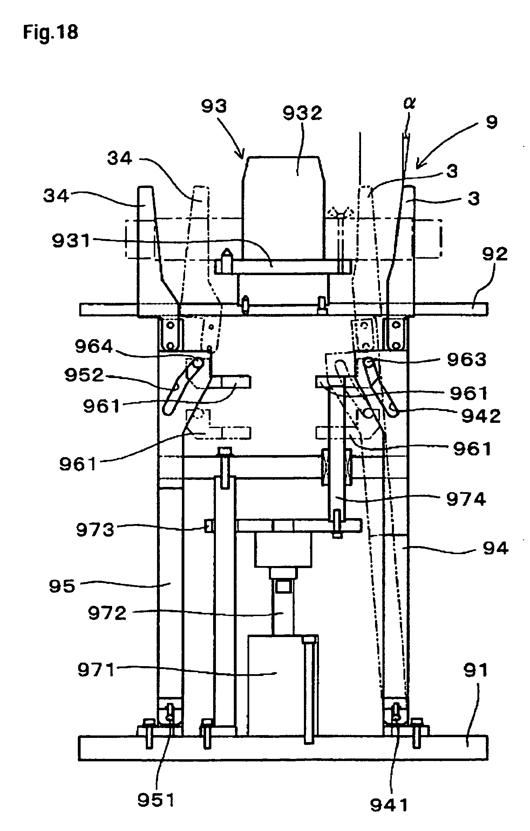

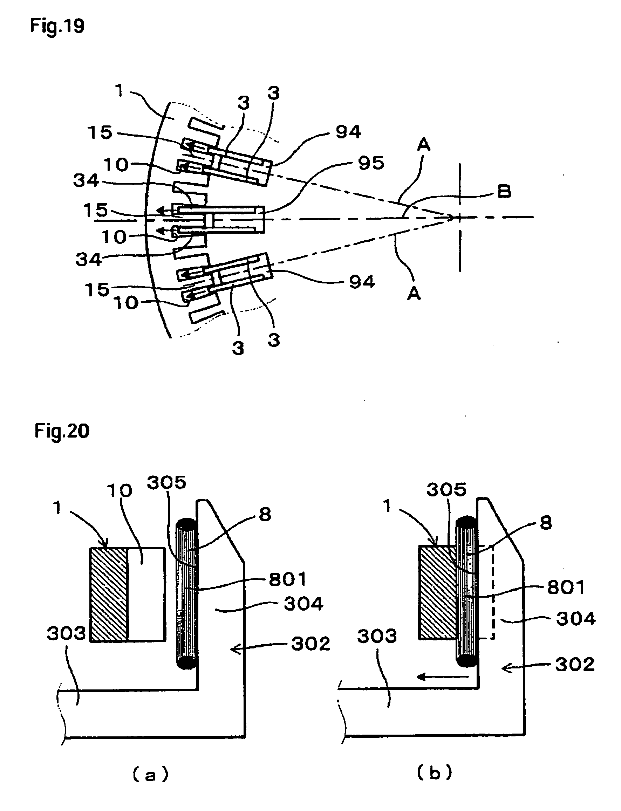

In this embodiment, a coil inserting apparatus for inserting the coils from the magazine 2 of Embodiment 1 into the stator 1 is shown more detail in Fig. 18 and Fig. 19.

The coil inserting apparatus 9 of this embodiment is, as shown Fig. 18, provided with an upper plate portion 92, which is fixed through the not-shown posts extended from a bottom plate portion 91, and a magazine receiving rest 93 disposed above the upper plate portion 92 for placing the magazine 2 thereon.

The magazine receiving rest 93 is composed of a flange portion 931, and a central mandrel 932 having a column shape of smaller diameter than that of the flange portion 931.

Moreover, the bottom plate portion 91 is provided with a plurality of first arms 94 arranged to rock on fulcrums 941, and a plurality of second arms 95 arranged to rock on fulcrums 951. As shown in the same Figure, the first arms 94 are provided with the insertion blades 3 at their upper ends, and the second arms 95 are provided with the provisional shaping blades 34 at their upper ends.

The first arm 94 is provided with a slot 942, which can engage with a pin 963 formed on a lifting plate 961. As shown in the same Figure, on the other hand, the second arm 95 is provided with a slot 952, which can engage with a pin 964 formed on a second lifting plate 962.

Moreover, the lifting plate 961 is connected to a cylinder 971, a lifting rod 972, a base plate 973, a connecting rod 974 and so on, which are arranged above the bottom plate portion 91, so that it is moved up and down as the lifting rod 972 is driven upward and downward by the cylinder 971.

Moreover, the slots 942 and 952 formed in the first arm 94 and the second arm 95 have sloped slot portions. As the engaging positions between the pins 963 and 964 and the slots 942 and 952 are shifted by the vertical movements of the pins 963 and 964, moreover, the first arm 94 and the second arm 95 rock on the fulcrums 941 and 951. Here, the shapes of the slot 942 of the first arm 94 and the slot 952 of the second arm 95 are slightly changed to give different rocking strokes to the first arm 94 and the second arm 95.

As shown in Fig. 19, moreover, each first arm 94 is arranged with the two insertion blades 3 in parallel so that these two insertion blades 3 are moved together in parallel in the rocking direction of the first arm 94. Here, the rocking directions of all the first arms 94 are taken along a radial direction A through the center of teeth 15 positioned between the two slots 10 of the stator 1.

Moreover, each second arm 95 is likewise arranged with the two provisional shaping blades 34 in parallel so that these two provisional shaping blades 34 are moved together in parallel in the rocking direction of the second arm 95. Here, the rocking directions of all the second arms 95 are taken along a radial direction B through the center of the teeth 15 positioned between the two slots 10 of the stator 1.

What should be noted on this coil inserting apparatus 9 is that the angle of inclination α of the insertion blades 3 at the rocking motion starting position of the insertion blades 3 with respect to the vertical direction is set within 5 degrees, and that the angle of inclination at the rocking motion ending position with respect to the vertical direction is set at 0 degrees, as shown in Fig. 18.

When the coils are to be transferred from the magazine 2 to the stator 1 by using the coil inserting apparatus 9, therefore, all the single-pole coils 8 can be simultaneously moved generally linearly toward the stator core 1 while the angle made between the coil insertion portions 801 to abut against the insertion blades 3 and the slots 10 of the stator 1 being always kept within 5 degrees.

As described hereinbefore, moreover, the two adjoining insertion blades 3 are arranged in parallel and push the adjoining coil insertion portions 801 of the adjoining single-pole coils 8. As a result, the adjoining coil insertion portions 801 can be pushed by the insertion blades 3 to move in parallel in the two coil retaining grooves 20 arranged in parallel, as described hereinbefore, and the pushing points are always kept in parallel. And, the adjoining coil insertion portions 801 of the adjoining single-pole coils 8 can be moved remarkably easily in parallel with each other until they reach the slots 10, thereby to make their moving loci parallel.

The others are identical to the described ones of Embodiment 1.

### Embodiment 3

This embodiment presents another example of the aforementioned insertion blades, as shown in Fig. 20.

As shown in the same Figure, specifically, an insertion blade 302 of this embodiment is formed into a generally L-shape, which is composed of a horizontally extending base portion 303 and a vertically extending vertical blade portion 304. Moreover, this vertical blade portion 304 has an abutment face 305 formed as a vertical face. And, the insertion blade 302 is constructed such that the vertical blade portion 304 is moved back and forth by moving the base portion 303 horizontally with its abutment portion 305 being kept vertical.

By using this insertion blade 302, the angle made between the coil insertion portion 801 and the axial direction of the slot core 1 can be kept substantially at 0, as shown in Fig. 20 (a), not only at the time of abutting against the coil insertion portion 801 but also at the instant when the insertion of the stator core 1 into the slots 10 is completed.

### Embodiment 4

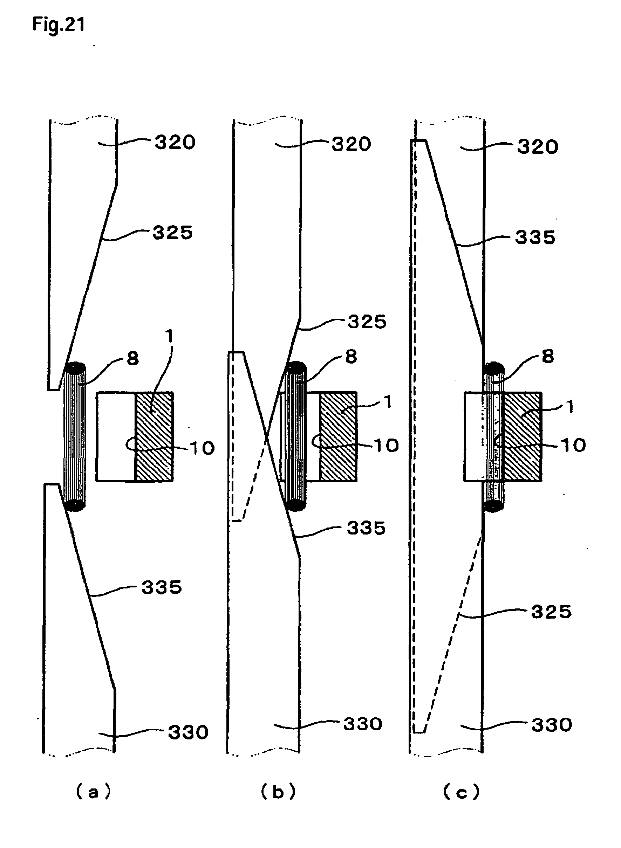

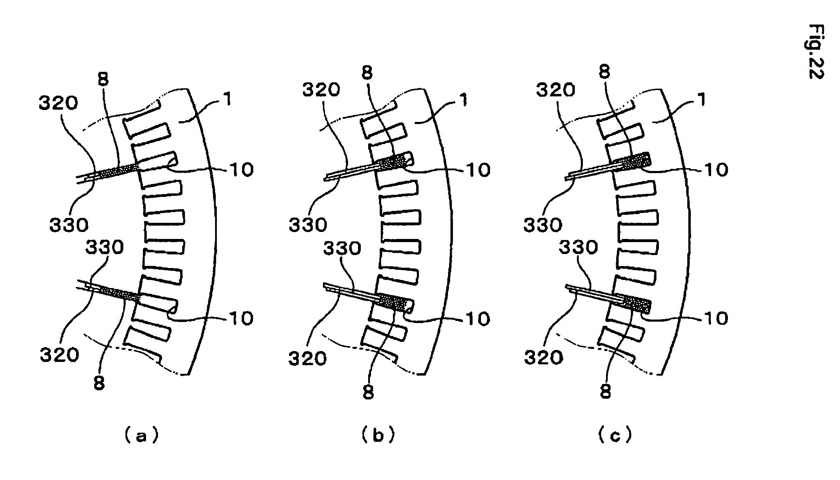

As shown in Fig. 21 and Fig. 22, this embodiment uses a pair of upper and lower split insertion blades 320 and 330 as the insertion blades.

Specifically, the split insertion blades 320 and 330 of this embodiment are a pair of upper and lower strip shapes, as shown in Fig. 21, and have such tapered portions 325 and 335 on one-side faces of their leading end sides as are arranged to have their leading ends in a confronting relation.

Next, the actions of the split insertion blades 320 and 330 of the case in which the single-pole coils 8 are moved will be briefly described with reference to Fig. 21 and Fig. 22. Fig. 21 presents views, in which the motions of the split insertion blades 320 and 330 and the single-pole coils 8 are taken in the radial direction of the stator core 1. Fig. 22 presents explanatory views, which correspond to the individual actions of Fig. 21 and in which the width sizes of the portions, as contacting with the coils 8, of the split insertion blades 320 and 330, are taken and shown in the axial direction of the stator core 1.

As Fig. 21 and Fig. 22 proceed from (a) to (c), the split insertion blades 320 and 330 approach and overlap each other. The width sizes of the abutting portions against the single-pole coils 8 grow gradually larger along the tapered portions 325 and 335 so that the single-pole coils 8 are gradually pushed into the slots 10 of the stator core 1.

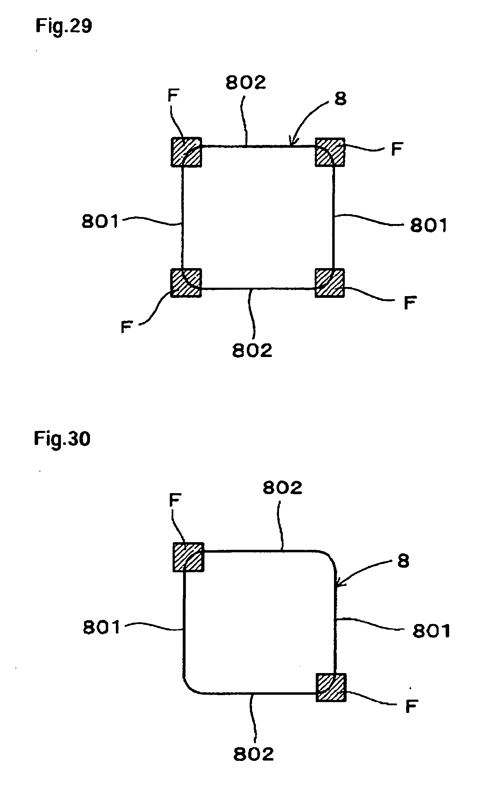

Here, the insertion pressure to be applied to the single-pole coil 8 is applied to the four portions which are generally symmetric with respect to the winding center point of the single-pole coil 8, as will be shown in Fig. 29 described herein after. As a result, the single-pole coil 8 can be moved linearly from the state, in which it is arranged generally in parallel with the slot 10, while keeping its posture substantially.

### Embodiment 5

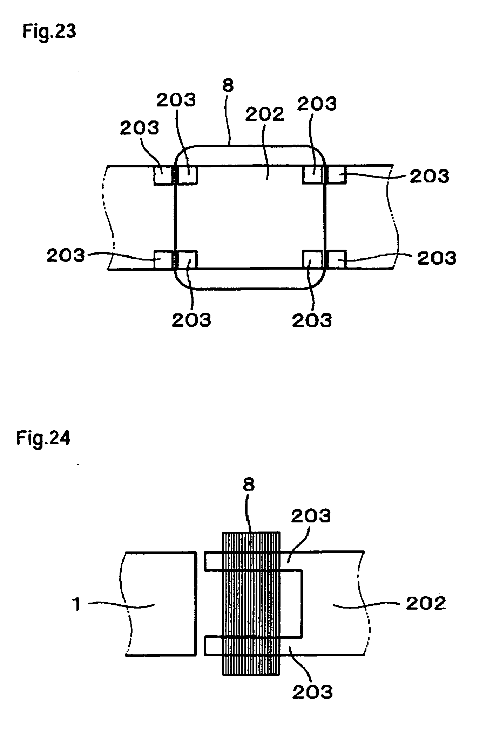

As shown in Fig. 23 to Fig. 25, this embodiment adopts a magazine 202 having a structure different from that of Embodiment 1.

The magazine 202 of this embodiment has supporting rod portions 203 for forming coil retaining grooves to retain the single-pole coils 8. In this case, too, the coil inserting step can be executed as in Embodiment 1 by retaining the single-pole coils 8 in the manner shown in Fig. 23 and Fig. 24.

### Embodiment 6

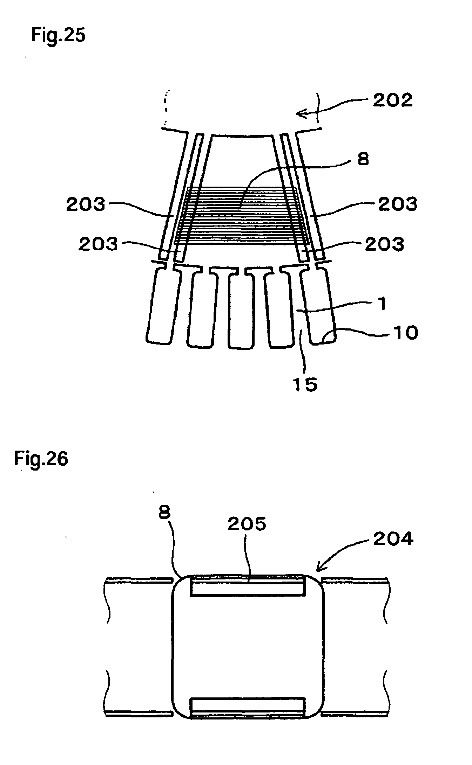

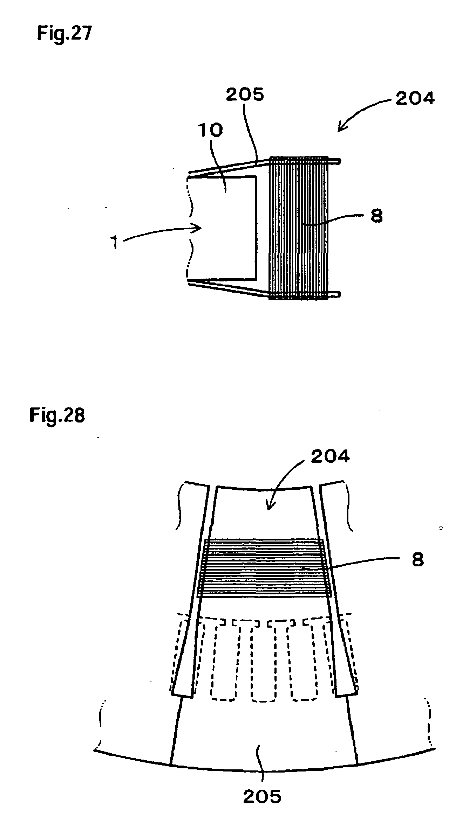

As shown in Fig. 26 to Fig. 28, too, this embodiment adopts a magazine 204 having a construction different from that of the magazine in Embodiment 1.

The magazine 204 of this embodiment is provided with a pair of upper and lower magazine plates 205 for every one pole, which extend from the radially outer side to the inner circumference side.

In this case, as shown in Fig. 26 to Fig. 28, the single-pole coils 8 of one pole are retained by the magazine plates 205 of the magazine 204 and are mounted up and down in the axial direction of the stator core 1. And, the single-pole coils 8 are pushed and moved in the slots 10 by the insertion blades or the like. After this, the coil inserting step can be executed by the actions to extract the magazine plates 205 retaining the individual single-pole coils 8, either one by one or simultaneously in plurality to the radially outer side.

### Embodiment 7

As shown in Fig. 29 to Fig. 34, this embodiment presents an example of the position, at which the insertion pressure is applied to the single-pole coil 8 at the coil inserting step.

Fig. 29 shows an example, in which the insertion pressure is applied to a plurality of positions substantially symmetric with respect to the winding center point of the single-pole coil 8, that is, pushed regions F of four corners at the boundary portions between the coil insertion portions 801 and the coil end portion 802 of the single-pole coil 8.

Fig. 30 shows an example, in which the insertion pressure is applied to a plurality of positions substantially symmetric with respect to the winding center point of the single-pole coil 8, that is, pushed regions F of two diagonal ones of the four corners at the boundary portions between the coil insertion portions 801 and the coil end portion 802 of the single-pole coil 8.

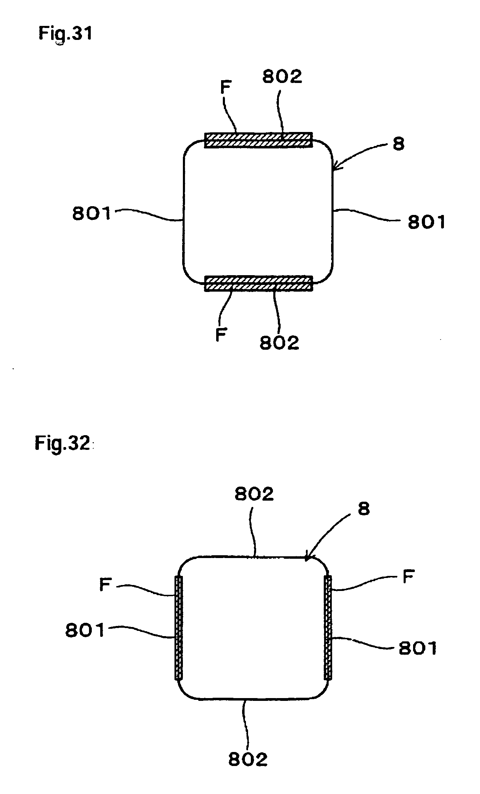

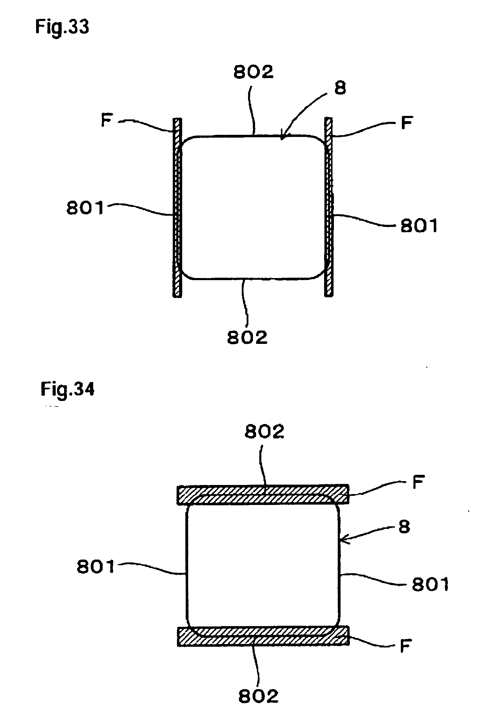

Fig. 31 and Fig. 34 show an example, in which the insertion pressure is applied to the pushed regions F of the two coil end portions 802 of the single-pole coil 8, individually.

Fig. 32 and Fig. 33 show an example, in which the insertion pressure is applied to the pushed regions F of the two coil insertion portions 801 of the single-pole coil 8, individually.

According to any of these examples, the single-pole coil 8 can be linearly moved while the angle made between the coil insertion portions 801 of the single-pole coil 8 and the slots 10 being kept within 5 degrees. Here, Fig. 29 to Fig. 34 just present the examples, and it is quite natural that the pushed regions F or the applied positions of the insertion pressure could be further modified.

### Embodiment 8

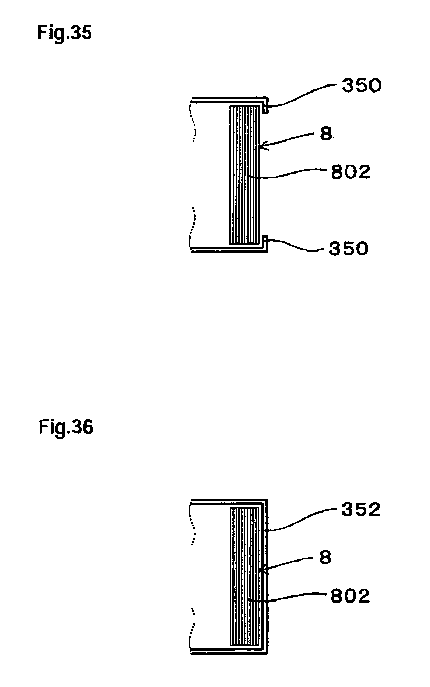

As shown in Fig. 35 and Fig. 36, this embodiment presents an example, in which split insertion hooks can be used as the coil inserting means in place of the insertion blades 3 of Embodiment 1.

Fig. 35 shows one of a pair of split insertion hooks 350, which are split into the surface side and the back side of the magazine. These split insertion hooks 350 have an L-shaped section to be hooked on the two end portions of the coil end portion 801 so that they apply the insertion pressure to the pushed regions F of the four corners, as shown in Fig. 29.

Fig. 36 shows one of a pair of split insertion hooks 352, which are split into the surface side and the back side of the magazine. These split insertion hooks 352 have a C-shaped section to be hooked on the entirety of the coil end portion 801 so that they apply the insertion pressure, as shown in Fig. 34.

The coil inserting step like that of Embodiment 1 can also be executed by using those split insertion hooks.

### Embodiment 9

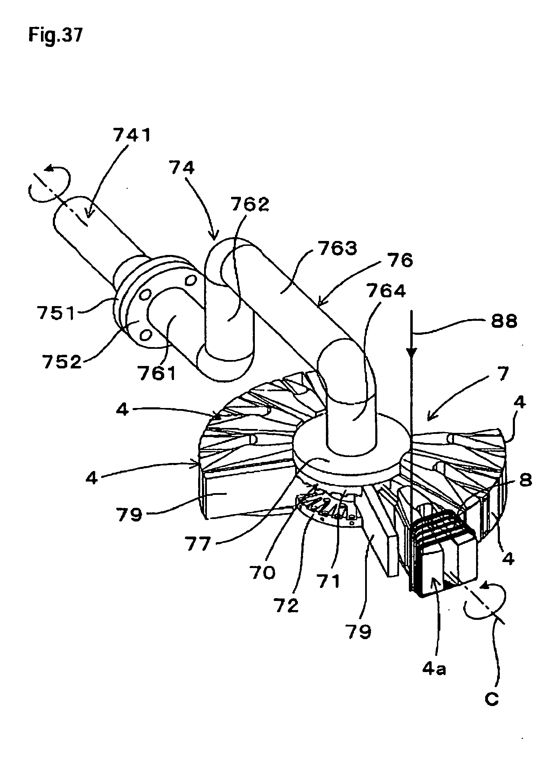

In this embodiment, as shown in Fig. 37 to Fig. 55, the coil forming step is executed by using a magazine (or a take-up jig) 7, which has a special structure to function as the take-up jig.

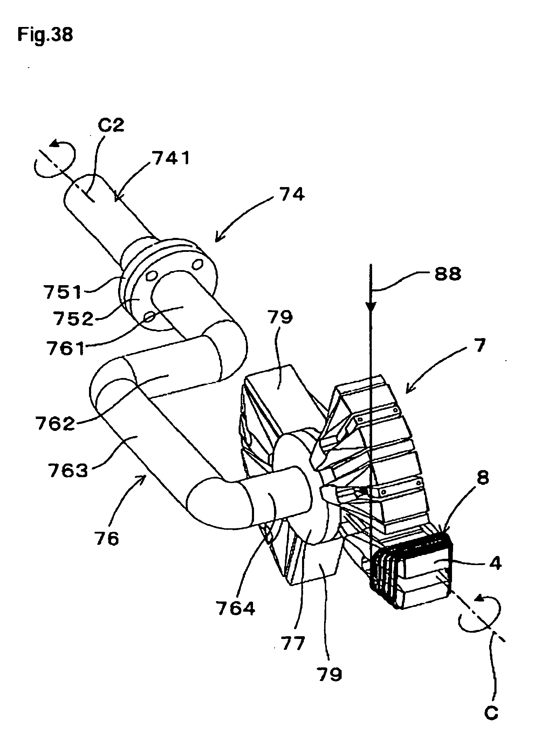

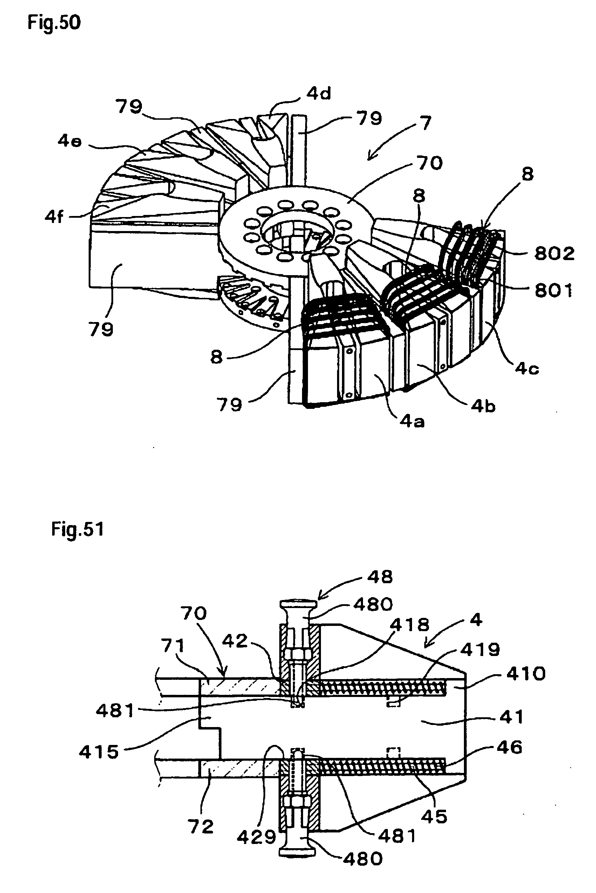

In this embodiment, there are used the take-up jig (or the magazine) 7 and a turning device 74 as a coil forming device for forming a motor coil (as referred to Fig. 50), which is prepared by juxtaposing three adjacent single-pole coils 8 turned in a loop shape with the electric line 88, as shown in Fig. 37 and Fig. 38.

As shown in Fig. 37 to Fig. 39, the take-up jig 7 is provided with a base holder 70 and a plurality of winding frames 4 arranged on the outer circumference of the base holder 70. The individual winding frames 4 are arranged to move to and from the base holder 70 and are constructed such that any of the winding frames 4 may protrude from the remaining ones.

As shown in Fig. 37 and Fig.38, the turning device 74 is constructed to turn the take-up jig 7 as a whole on the longitudinal axis C of the winding frame 4 protruded.

The coil forming device of this embodiment will be described in detail in the following.

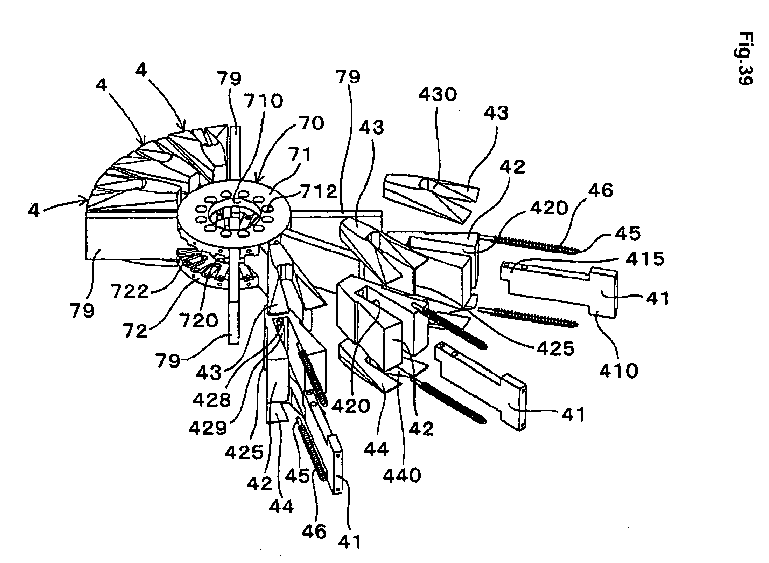

In the take-up jig 7, as shown in Fig. 39, the base holder 70 presents a disc shape. Specifically, the base holder 70 has a pair of upper and lower ring-shaped plates 71 and 72, which are provided with central through holes 710 and 720, respectively, and a plurality of positioning holes 712 and 722 around the central through holes 710 and 720. These central through holes 710 and 720and the positioning holes 712 and 722 around there are provided for determining the engaging positions with the turning device 74, as will be described hereinafter.

Moreover, the paired upper and lower ring-shaped plates 71 and 72 are connected through separate plates 79, which are arranged in the radial direction extending from the centers of those ring-shaped plates 71 and 72. In this embodiment, the four separate plates 79 are arranged at a pitch of an internal angle of 15 degrees, and the four separate plates 79 are further arranged at the diagonal positions at the pitch of the internal angle of 15 degrees. In the spaces of the internal angle of about 15 degrees between the adjoining separate plates 79, moreover, there are individually arranged the winding frames 4. In this embodiment, the six winding frames 4 in total are provided by arranging the three adjoining winding frames 4 at the diagonal positions.

Here, as shown in Fig. 39, the take-up jig 7 of this embodiment is constructed such that the separate plates 79 and the winding frames 4 can be further arranged at empty positions in the outer circumference of the disc-shaped base holder 70, so that it can be provided with the twelve winding frames 4 at the maximum.

As shown in Fig. 39, moreover, the winding frames 4 are arranged such that they can move back and forth along the axes extending radially from the center point of the base holder 70. Moreover, the individual winding frames 4 have a sector shape, in which they are widened along the aforementioned axis.

As shown in Fig. 39, more specifically, each winding frame 4 has a frame body portion 42, which is generally formed in a sector shape in view of the front face and the back face, if these front and back faces are those parallel to the ring-shaped plates 71 and 72 of the base holder 70, and which is provided with a cutout 420 at its central portion. Moreover, the frame body portion 42 is provided on its two side faces with stepped portions 425 for positioning the single-pole coil 8 formed.

On the front side and the back side of the frame body portion 42, on the other hand, there are removably arranged shaping blocks 43 and 44 for profiling the shapes of the single-pole coil to be wound. These shaping blocks 43 and 44 are also generally formed in a sector shape, which is provided with cutouts 430 and 440 at their central portions. Here, the shaping blocks 43 and 44 are fixed on the frame body portion 42 by driving the not-shown screws.

As shown in Fig. 39, moreover, the shaping blocks 43 and 44 of this embodiment are made the thicker as they come the closer to the inner circumference side from the outer circumference side, so that the single-pole coil to be shaped may become the higher toward the inner circumference side.

As shown in Fig. 39, moreover, the frame body portion 42 is provided with a rectangular through hole 429 in the axial direction from the cutout 420 to the base holder 70. In the upper and lower portions of the through hole 429, moreover, rod holes 428 are formed as circular through holes. Moreover, the winding frame 4 is arranged to move back and forth in the base holder 70 by fixing a guide plate 41 through the through hole 429 in the base holder 70.

As shown in Fig. 39, more specifically, the guide plate 41 is provided with a root end portion 415 to be fixed in the base holder 70, and a leading end portion 410, which is vertically large-sized generally in a T-shape to regulate the advanced position of the winding frame 4. And, the root end portion 415 of the guide plate 41 is inserted into the through hole 429 opened in the bottom portion of the cutout 420 of the frame body portion 42, and rods 45 carrying springs 46 are inserted into the rod holes 428 formed at the upper and lower portions of the through hole 429 in the frame body portion 42. And, the root end portion 415 of the guide plate 41 is clamped and fixed between the paired upper and lower ring-shaped plates 71 and 72 of the base holder 70, and the two rods 45 are fixed at their one-side ends on the ring-shaped plates 71 and 72 and at their other ends on the leading end portion 410 of the guide plate 41. As a result, the winding frame 4 is fixed such that it can move back and forth with respect to the base holder 70.

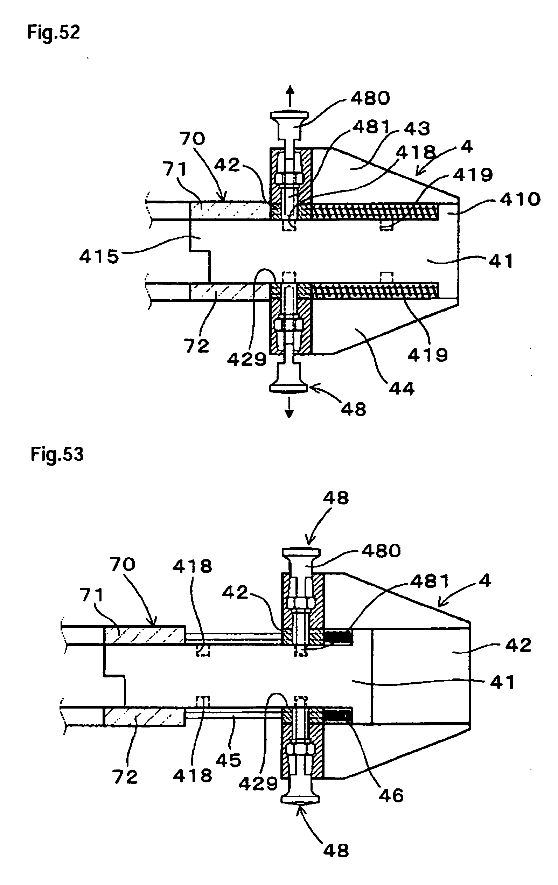

As shown in Fig. 51 to Fig. 53, moreover, the winding frame 4 is provided in its upper and lower portions with positioning pins 48, which can move their leading end portions 481 forward and backward by pinching and operating their head portions 480. Moreover, the guide plate 41 is provided with pin holes 418 and 419, which can engage with the pin leading end portions 481. While the pin leading end portions 481 of the positioning pins 48 being made to engage with the pin holes 418, as shown in Fig. 51, the winding frame 4 is retracted and kept in the state close to the base holder 70. When the winding frame 4 is to be advanced, on the other hand, the positioning pins 48 are retracted to release the pin leading end portions 481 and the pin holes 418 from the engaging state so that the winding frame 4 is advanced against the springs 46. As shown in Fig. 53, moreover, the positioning pins 48 are advanced again to bring the pin leading end portions 481 into engagement with the pin holes 419. As a result, the winding frame 4 is advanced in its axial direction and is fixed at a position spaced from the base holder 70.

On the two sides of each winding frame 4 thus arranged, there exist the separate plates 79, which are extended from the outer circumference of the base holder 70. Moreover, the separate plate 79 and the winding frame 4 are spaced at a predetermined distance functioning as the later-described coil retaining groove 20.

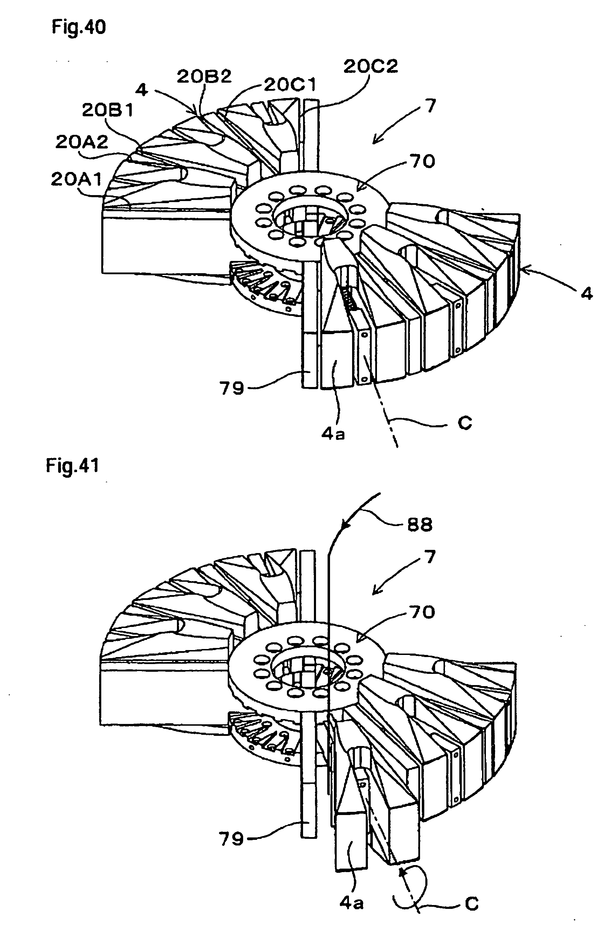

Of the coil retaining grooves 20, as shown in Fig. 40, there are arranged in parallel the coil retaining grooves (e.g. , 20A2 and 20B1, or 20B2 and 20C1 in Fig. 40) for arranging the adjoining coil insertion portions 801 in the adjoining single-pole coils 8.

In the take-up jig 7 of this embodiment, moreover, the contour formed of the leading ends of all the winding frames 4 retracted is a circular shape around the center point of the base holder 70. In other words, the take-up jig 7 of this embodiment is shaped such that the individual winding frames 4 may be arranged to confront the inner circumference of the later-described stator core.

Next, as shown in Fig. 37 and Fig. 38, the turning device 74 of this embodiment is provided with a straight portion 741 extending from the not-shown drive shaft, and a bent portion 76 connected to the straight portion 741 through flanges 751 and 752, and the bent portion 76 is provided at its leading end with a flange 77 for connecting the bent portion 76 to the take-up jig 7.

As shown in the same Figures, the bent portion 76 is provided with: a first portion 761 extending on the common axis of the straight portion 741; a second portion 762 bent at 90 degrees and extended from the first portion; a third portion 763 bent at 90 degrees from the second portion 762 and extended in parallel with the straight portion 741; and a fourth portion 764 bent at 90 degrees from the third portion 763. And, the aforementioned connecting flange 77 is arranged at the leading end of the fourth portion 764.

In case the connecting flange 77 is connected to the base holder 70 of the take-up jig 7, as shown in Fig. 37 and Fig. 38, the connecting flange 77 is so positionally arranged that the center point of the base holder 70 in the thickness direction and in the radial direction may be located on the axis of the straight portion 741.

Moreover, the circumferentially fixed position of the connecting flange 77 to the take-up jig 7 can be so suitably changed that the axis C of the winding frame 4 may be aligned with the turning center C2 of the straight portion 741 of the turning device 74.

With reference to Fig. 40 to Fig. 50, here will be described a process for forming a motor coil having a plurality of juxtaposed single-pole coils 8, by the coil forming apparatus including the take-up jig 7 and the turning device 74 thus far described. The presentation of the turning device 74 is omitted from those Figures.

First of all, all the winding frames 4 in the take-up jig 7 are retracted, as shown in Fig. 40, and the take-up jig 7 is so fixed on the turning device 74 that the turning center C2 (as referred to Fig. 37 and Fig. 38) of the turning device 74 is aligned with the axis C of the first winding frame 4a.

Next, a winding frame protruding step is performed to advance the first winding frame 4a from that state so as to protrude the same from the remaining winding frames 4, as shown in Fig. 41. At this time, the winding frame 4a is released from the fixed state, in which it is fixed at the retracted position by the positioning pins 48 (Fig. 51 to Fig. 53), and the winding frame 4a is advanced against the springs 46. The winding frame 4a is fixed again at its advanced position by the positioning pins 48.

Then, the electric line 88 is fed in one direction from above, as shown in Fig. 41, and its leading end is fixed on the take-up jig 7. In this fixing method, a special fixing device may be used to fix the leading end at a predetermined position, or the leading end may be tied to an arbitrary position of the take-up jig 7. The latter method is adopted in this embodiment.

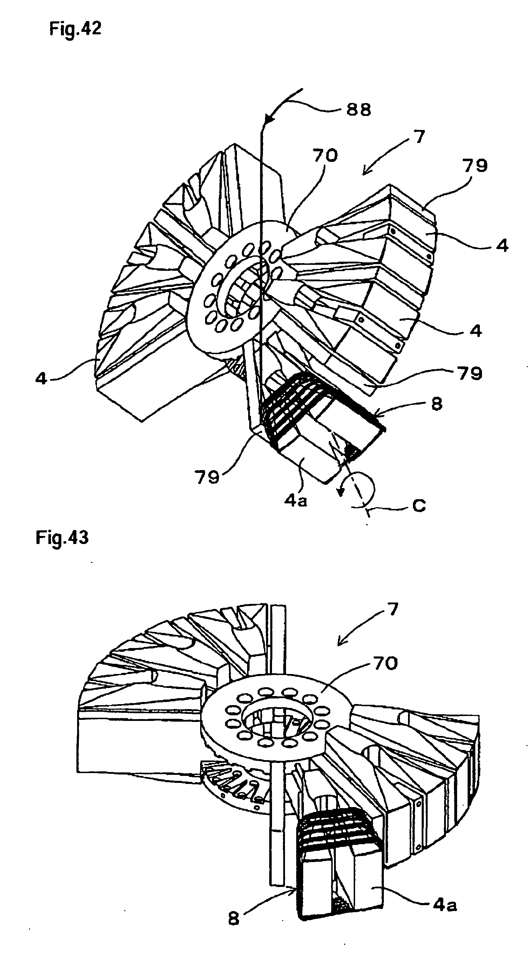

Next, as shown in Fig. 41 and Fig. 42, the protruded winding frame 4a is fed in one direction with the electric line 88, and the turning device 74 is driven to perform a winding step of turning the take-up jig 7 as a whole on the axis C of the winding frame 4a. As a result, the electric line 88 is wound around the protruded winding frame 4a, thereby to complete the formation of the first single-pole coil 8, as shown in Fig. 43.

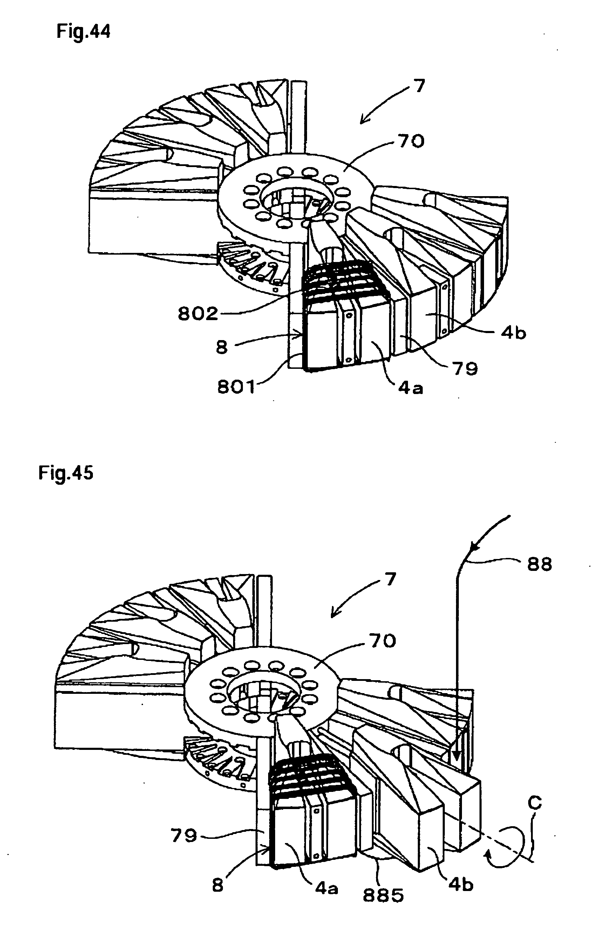

Next, there is performed a winding frame retracting step of retracting the first winding frame 4a having the single-pole coil 8 formed thereon, as shown in Fig. 44. At this time, the winding frame 4a is fixed at the retracted position by operating the positioning pins 48 (Fig. 51 to Fig. 53) again.

As shown in the same Figure, the single-pole coil 8 wound around the winding frame 4a takes the state, in which its coil end portions 802 positioned above and below the loop are uncovered to the surface side and back side of the winding frame 4 and in which the coil insertion portions 801 positioned on the left and right are housed in the clearances between the separate plates 79 and the winding frame 4.

Next, as shown in Fig. 45, a second winding frame 4b adjacent to the first winding frame 4a having the single-pole coil 8 formed thereon is advanced along the axis C to protrude from the outer sides of the remaining winding frames 4 and is fixed like before at the advanced position.

Before or after this winding frame protruding step, moreover, the engaging position between the take-up jig 7 and the turning device 74 is changed to align the turning center of the turning device 74 and the axis of the second winding frame 4b.

As shown in the same Figure, a crossover line 885 leading from the single-pole coil 8 retained by the first winding frame 4a is turned over to below the second winding frame 4b, and the succeeding electric line 88 is fed like before from above in one direction.

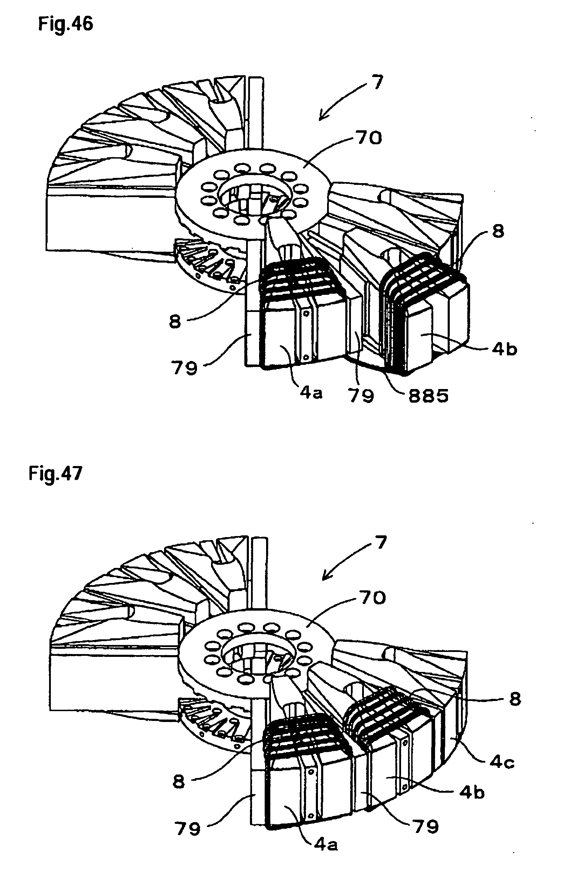

Next, as shown in Fig. 45 and Fig. 46, the protruded winding frame 4b is fed with the electric line 88 in one direction, and there is performed the winding step of turning the take-up jig 7 as a whole on the axis C of the winding frame 4b. The turning direction at this time is reversed from that of the case of the first winding frame 4a. As a result, the electric line 88 is wound around the protruded winding frame 4b, as shown in Fig. 47, thereby to complete the formation of the second single-pole coil 8 having its wound direction reversed from that of the first single-pole coil 8.

Next, as shown in Fig. 47, the second winding frame 4b having the single-pole coil 8 formed thereon is retracted and is fixed like before at the retracted position.

As shown in the same Figure, the second single-pole coil 8 wound around the winding frame 4b takes the state, in which its coil end portions 802 positioned above and below the loop are uncovered to the surface side and back side of the winding frame 4 and in which the coil insertion portions 801 positioned on the left and right are housed in the clearances between the separate plates 79 and the winding frame 4.

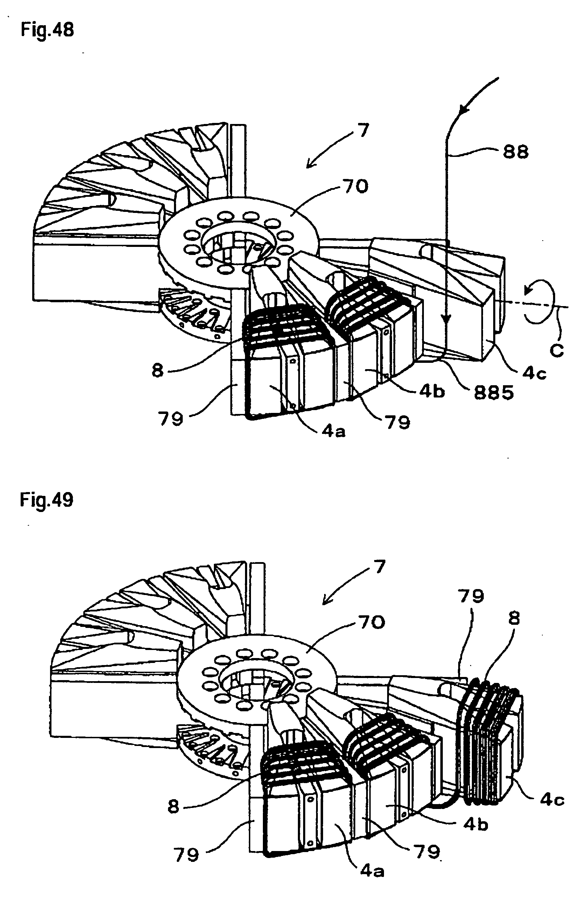

Next, as shown in Fig. 48, a third winding frame 4c adjacent to the second winding frame 4b is advanced along the axis C to protrude from the outer sides of the remaining winding frames 4 and is fixed like before at the advanced position. In this case, too, before or after this winding frame protruding step, moreover, the engaging position between the take-up jig 7 and the turning device 74 is changed to align the turning center C2 (Fig. 37 and Fig. 38) of the turning device 74 and the axis C of the third winding frame 4c.

As shown in the same Figure, the electric line 88 succeeding to the crossover line 885 leading from the single-pole coil 8 retained by the second winding frame 4b is fed like before from above in one direction.

Next, as shown in Fig. 48 and Fig. 49, the protruded winding frame 4c is fed with the electric line 88 in one direction, and there is performed the winding step of turning the take-up jig 7 as a whole on the axis C of the winding frame 4c. The turning direction at this time is reversed from that of the case of the second winding frame 4c. As a result, the electric line 88 is wound around the protruded winding frame 4c, as shown in Fig. 49, thereby to complete the formation of the third single-pole coil 8 having its wound direction reversed from that of the second single-pole coil 8.

Next, as shown in Fig. 50, the third winding frame 4c having the single-pole coil 8 formed thereon is retracted and is fixed like before at the retracted position.

As shown in the same Figure, the coil insertion portions 801 of the third single-pole coil 8 formed around the winding frame 4c are also housed in the clearances between the separate plates 79 and the winding frame 4.

As a result, there is completed the coil, in which the three single-pole coils 8 are juxtaposed to each other such that their winding directions are alternately reversed.

Next, as shown in Fig. 50, for three winding frames 4d to 3f opposed to the three winding frames 4a to 3c having the aforementioned coils formed, too, the coil, in which the three single-pole coils 8 are juxtaposed to each other with the alternately reversed winding directions can be formed by a procedure similar to the aforementioned one.

Thus in the coil forming method of this embodiment, there are used the take-up jig 7 having the aforementioned structure composed of the base holder 70 and the winding frames 4 and the turning device 74. As described hereinbefore, moreover, the winding frame protruding step, the winding step and the winding frame retracting step are performed sequentially on the individual winding frames.

Here, the winding step is performed by turning the take-up jig as a whole on the axis C of the protruded winding frame 4. As described hereinbefore, therefore, the electric line 88 can be fed in one direction so that the single-pole coil 8 can be formed around the winding frame 4 without any torsion of the electric line 88.

On the other hand, the winding step follows the winding frame protruding step, and is followed by the winding frame retracting step. In case the winding frame 4 or the object of the winding step is to be changed, more specifically, this change can be made by advancing and retracting the winding frame 4 at the winding frame protruding step and at the winding frame retracting step, and no special space for feeding the electric line need be established between the adjoining winding frames 4. Therefore, the length of the crossover line 885 between the single-pole coils 8 obtained can be reduced to a sufficient short length.

In this embodiment, moreover, each winding frame 4 of the take-up jig 7 is generally given the sector shape, and the shaping blocks 43 and 44 are arranged on the surface side and back side of the winding frame 4. The shaping blocks 43 and 44 are thickened in the inward direction as described above. In the single-pole coil 8 wound around the winding frame 4, therefore, the shapes of the electric line loops composing itself are changed along the axis C of the winding frame 4.

Specifically, the electric line loops composing the single-pole coil 8 become wider in the outward direction along the sector-shaped winding frame 4 and become lower along the shape of the shaping blocks 43 and 44. As a result, it is possible to optimize the arrangement of the coil end portions 802, as will be described hereinafter, when the coil is mounted on the stator core. By adopting this structure, in which the width is larger from the radially inner side to the outer side and in which the axial height is smaller from the radially inner side to the outer side, it is possible to prevent the shifts of the individual electric lines (or the coils) composing the single-pole coil 8 at the time of taking up the electric line 88.

In the take-up jig 7 of this embodiment, moreover, the contour formed of the leading ends of all the winding frames 4 retracted is the circular shape so that the individual winding frames 4 can be arranged to confront the inner circumference of the later-described stator core.

On the two sides of each winding frame 4, moreover, there exist the separate plates 79, which are extended from the outer circumference of the base holder 70. Moreover, the clearance between the separate plate 79 and the winding frame 4 functions as the coil retaining groove 20. As exemplified by the later-described Embodiment 2, it is possible to realize the works to mount the individual single-pole coils 8 on the stator core by their linear movements along those coil retaining grooves.

Next, here will be presented an embodiment of a method of inserting the coil formed by using the coil forming apparatus, directly from the take-up jig 7 into the stator core.

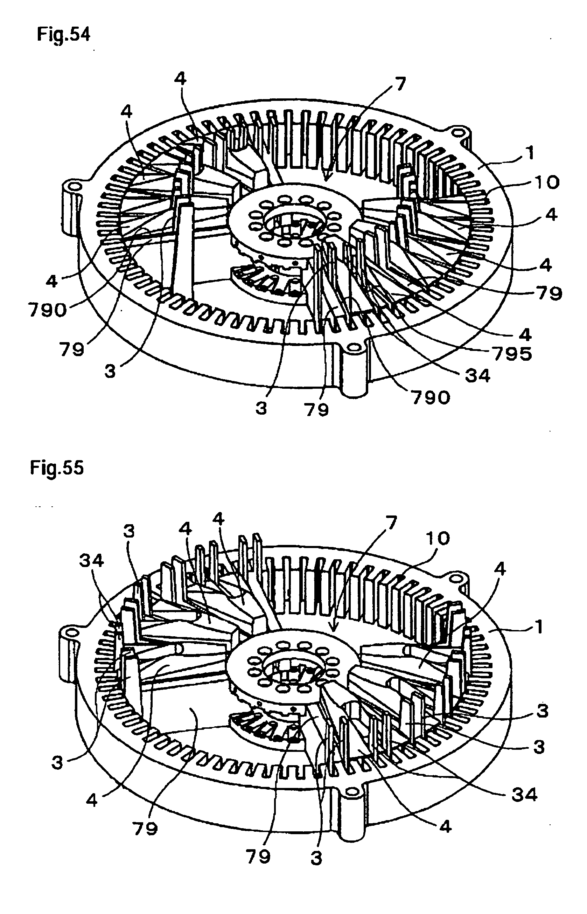

In this embodiment, as shown in Fig. 54 and Fig. 55, the coils (as referred to Fig. 50) are inserted and arranged in the slots 10 which are formed in the inner circumference of the ring-shaped stator core 1. In this embodiment, here are omitted the coils (or the single-pole coils 8) so as to clarify the movements of the later-described insertion blades 3.

The motor to be constructed by using the stator core 1 is the three-phase DC brushless motor. And, the stator core 1 in this embodiment is manufactured by laminating the ring-shaped electromagnetic steel sheets, and is provided in its inner circumference with the slots 10 for inserting the coils, as shown in Fig. 54 and Fig. 55.

In this embodiment, the stator core 1 is provided with the seventy two slots 10 so as to arrange the thirty six single-pole coils 8 in total. And, every twelve single-pole coils 8 bears each phase. In this embodiment, as described hereinbefore, two sets of coils having three single-pole coils 8 are prepared by the single take-up jig 7, and are simultaneously mounted in the stator core 1. By performing these works six times, all the single-pole coils 8 needed are mounted in the stator core 1.

These works will be described more specifically. First of all, the take-up jig 7 is so arranged in the stator core 1 that coil retaining grooves 790, as formed between the winding frame 4 and the separate plate 79, in the take-up jig 7 may confront the slots 10 of the stator core 1, as shown in Fig. 54.

As shown in Fig. 54, moreover, the insertion blades 3 are inserted into the coil retaining grooves 790 of the take-up jig 7. In the take-up jig 7, moreover, the cutouts 420 formed in the frame body portion 42 of the winding frame 4 and the cutouts 430 and 440 (as referred to Fig. 39) formed in the upper and lower shaping blocks 43 and 44 provide provisional shaping grooves 795, into which the provisional shaping blades 34 are to be inserted.

As shown in Fig. 55, moreover, the insertion blades 3 are advanced in the coil retaining grooves 790 in the direction from the center to the outer circumference. Simultaneously with this, the provisional shaping blades 34 are advanced in the provisional shaping grooves 795 in the direction from the center to the outer circumference. As a result, the single-pole coils 8 are pushed by the insertion blades 3 to move generally linearly from the coil retaining grooves 790 to the slots 10 of the stator core 1. On the other hand, the upper and lower coil end portions 802 (Fig. 50), as bulging from the stator core 1, in the single-pole coil 8 is subjected to a provisional shaping treatment, in which they are pushed and deformed outward by the provisional shaping blades 34.

These advancing actions of the insertion blades 3 and the provisional shaping blades 34 are simultaneously done on all the six single-pole coils 8 so that these six single-pole coils 8 are simultaneously inserted into the slots 10 of the stator core 1.

Next, in this embodiment, a second provisional shaping is executed by using the paired upper and lower formers 66 (as referred to Fig. 12) like those of Embodiment 1. The formers 66 have ring shapes, as described hereinbefore, and are provided, on their sides confronting the stator core 1, with the shaping faces 660 for profiling the coils into a desired shape. Moreover, each former 66 is provided with cutouts 665 for preventing the insertion blades 3 and the provisional shaping blades 34 from interfering each other. And, the formers can be pushed onto the stator core 1 while the insertion blades 3 and the provisional shaping blades 34 being advanced.

The paired upper and lower formers 66 thus constructed are individually advanced from their upper and lower positions and pushed onto the stator core 1. As a result, the second provisional shaping is performed such that the coil end portions 802, as bulging out from above and below the stator core 1, of the six single-pole coils 8 thus arranged in the stator core 1 fall down toward the stator core 1.

Next, in this embodiment, the aforementioned coil forming apparatus is used to form two sets of coils having three single-pole coils 8, newly on the take-up jig 7. Like before, moreover, there are performed the movement of the coils from the take-up jig 7 directly to the stator core 1, the provisional shaping and the final second provisional shaping. By repeating these works six times in total, the thirty six single-pole coils 8 in total are mounted on the stator core 1. And, the shaping to be performed as the second provisional shaping by the formers is performed on all the thirty six single-pole coils 8 so that it becomes the proper shaping step of profiling the entire coil shape.

Thus, the thirty six single-pole coils 8 in total are inserted and arranged in the stator core 1.

Here in this embodiment, a series of works are performed from the formation of the six single-pole coils to the second provisional shaping and are repeated six times. However, the efficiency can be enhanced by using a plurality of sets of take-up jigs 7. Moreover, the steps can be rationalized by increasing the number of winding frames 4 in the take-up jig 7 from six to twelve and by moving the twelve single-pole coils 8 all at once to the stator core 1.

By making use of the take-up jig 7 and the insertion blades 3, as described hereinbefore, this embodiment can also execute the so-called "linear insertion method", by which the coils are linearly moved, easily and stably. Moreover, the coil retaining grooves 20, which are formed between the winding frames 4 and the separate plates 79, are parallel to each other for arranging the adjoining coil insertion portions 801 of the adjoining single-pole coils 8. As in Embodiment 1, therefore, it is possible to ensure the parallel moving loci of the coil insertion portions 801 before inserted into the slots 10. And, the single-pole coils 8 can be linearly inserted without changing their postures into the slots 10. Therefore, it is not necessary to enlarge the vertical length of the coils more than necessary.

In this embodiment, moreover, the coils can be moved from the winding frames 4 having formed them, directly to the stator core 1, as described hereinbefore. Moreover, the coils need not be transferred, after formed, from the winding frames to another coil transfer device so that the coils can be highly efficiently mounted on the stator core. This is because the take-up jig 2 has the aforementioned excellent structure, as detailed hereinbefore.

Moreover, the coils can be inserted from the take-up jig 7 directly into the stator core 1 so that their movements can be easily executed even if the crossover lines connecting the single-pole coils 8 are short.

### Embodiment 10

In this embodiment, a wedge inserting step is executed after completion of the coil inserting step of Embodiment 1.

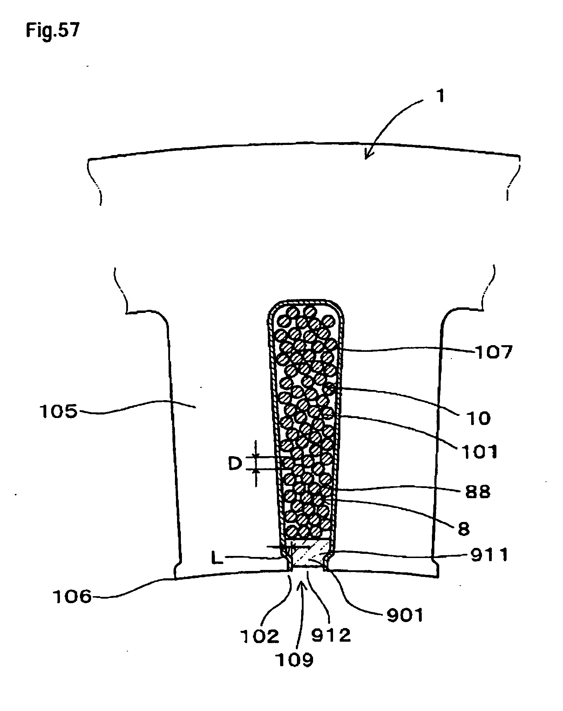

The slot 10 of the stator core 1 of this embodiment is provided, as shown in Fig. 57, with a slot open portion 102, which has its space portion constricted at its inner circumference end portion, and a general portion 101 which has a wider space than that of the slot open portion 102 on its outer circumference side.

After the coil inserting step, moreover, the wedge inserting step is performed to insert a wedge 901 into the slot 10 thereby to clog the inner circumference open portion in the slot 10.

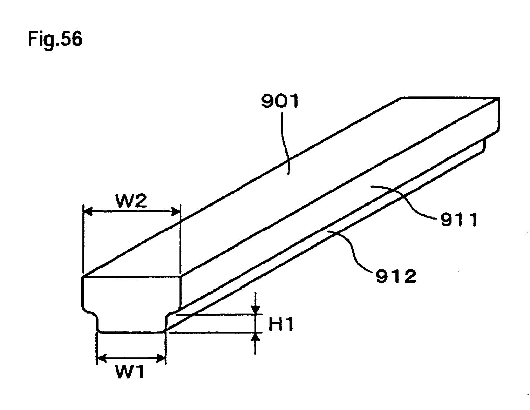

The wedge 901 used is provided, as shown in Fig. 56, with a wide portion 911 arranged in the general portion 101 of the slot 10, and a convex portion 912, which has a smaller width size than that of the wide portion 912, which is protruded from the wide portion 911 and which is arranged in the slot open portion 102.

This will be described in detail in the following.

The stator core 1 in this embodiment has a ring shape and is provided at its inner circumference portion with a plurality of teeth 105, as shown in Fig. 57, to form the slot 10 inbetween.

As shown in the same Figure, each tooth 105 extends radially from the outer circumference side to the inner circumference side and is provided at its leading end portion with protrusions 106 protruding in the circumferential directions. The space, at which those protrusions 106 confront each other, is the aforementioned slot open portion 102 in the slot 10, and the space on the outer circumference side is the aforementioned general portion 101.

In this embodiment, moreover, there is arranged in advance all over the inner circumference of the slot 10 an insulating film 107, which is made of a synthetic resin having electrically insulating properties, as shown in the same Figure. Specifically, a film made of an LCP (Liquid Crystal Polymer) is formed in advance. In this embodiment, the insulating film 107 is set to have a thickness of about 300 microns. Here, a sheet of electrically insulating aramid fibers of the prior art can also be applied to that insulating film 107.

As shown in Fig. 56, the wedge 901 is made of an LCP (Liquid Crystal Polymer) and is formed into an integral shape having the wide portion 911 and the convex portion 912. This convex portion 912 has a height size H1 slightly smaller than the radial size of the slot opening portion 102, i.e., the thickness size of the tooth 105. Moreover, the width sizes W1 and W2 of the convex portion 912 and the wide portion 911 are so designed to correspond to the sizes of the space widths of the slot open portion 102 and the general portion 101 of the slot 10 as to establish a small clearance (although not shown) between the confronting teeth 105.

This clearance is sized to be sufficiently smaller than both the size L (Fig. 57) of the protrusion of the inner wall face forming the slot open portion 102 in the stator core 1 from the inner wall face forming the general portion and the diameter D (Fig. 57) of the electric line forming the coil to be inserted and arranged in the slot 10.

Here, it is preferred, as described hereinbefore, for improving the inserting works that a small clearance is formed in the design between the wedge 901 and the tooth 105. In order that the convex portion 912 may play the role to prevent the turning of the wedge 901, however, that clearance should be as small as possible. It is most desired that the wedge 901 contacts in face-to-face relation with the tooth 105 when it is mounted.

Next, the works to insert the wedges 901 into the slots 10 of the stator core 1 are done after all the single-pole coils 8 were inserted into the slots 10. In this embodiment, as in Embodiment 1, there is performed a linear inserting method (or a radial inserting method) of moving the single-pole coils 8, as formed by winding the wire 88 in advance, generally linearly from the inner circumference side of the stator core 1 into the slots 10. After this, the wedges 901 are inserted axially into the inner circumference openings of the slots 10.

At this time, the wedges 901 are so inserted into the slots 10 that their convex portions 912 are positioned on the inner circumference side of the stator core 1 whereas the wide portions 911 are positioned on the outer circumference side, and such that those portions 912 and 911 correspond to the slot open portions 102 and the general portions 101 of the slots 10.

As a result, as shown in Fig. 56, the inner circumference openings of the slots 10 can be reliably clogged such that the wide portions 911 and the convex portions 912 of the wedges 901 are positioned in the general portions 101 and the slot open portions 102 of the slots 10, respectively.

The wedge 901 of this embodiment has a shape composed of the wide portion 911 and the convex portion 912, as described hereinbefore, so that it is shaped to have a far superior rigidity than that of the wedge of the prior art, which is formed by bending a sheet-shaped material. Therefore, the wedge has such a strength as can stand sufficiently, even in case the wedge 901 is solely inserted after the single-pole coil 8 was inserted by the radial inserting method into the slot 10 of the stator core 1. By making use of the improved rigidity of the wedge 901, moreover, it is possible to make the width of the slot open portion wider than that of the prior art. Therefore, the radial inserting method can be more stably executed to rationalize the manufacturing process.

Moreover, the wide portion 911 and the convex portion 912 of the wedge 901 are arranged in the general portion 101 and the slot open portion 102 of the slot 10 of the stator core 1, respectively, as described hereinbefore. As a result, the convex portion 912 engages with the slot open portion 102 so that the wedge 901 can be prevented from turning and coming out of the slot open portion 102. Therefore, it is possible to keep the stable clogged state of the inner circumference opening 109 of the slot 10.

### Embodiment 11

In this embodiment, one example of the working method of inserting the wedge 901 of Embodiment 10 into the slot 10 will be described further in detail.

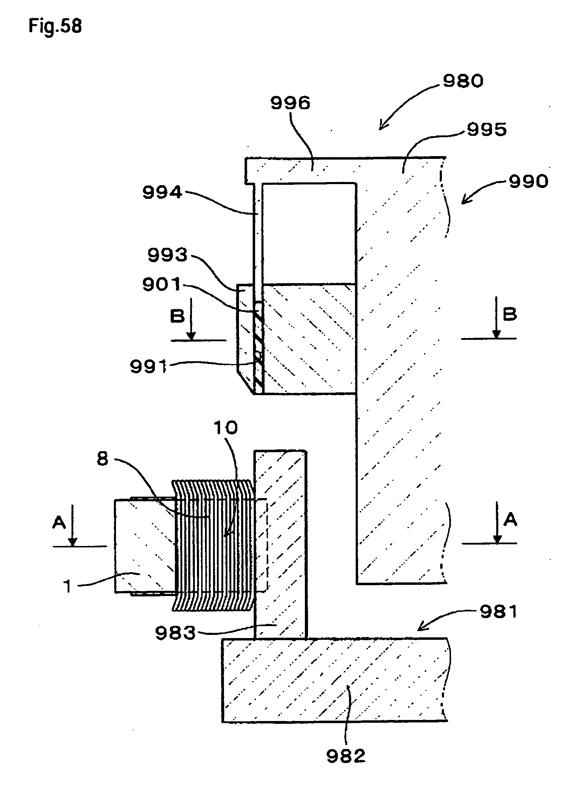

In this embodiment, as shown in Fig. 58, there is used an insertion apparatus 980, which can perform the coil insertion and the wedge insertion alternately.

This insertion apparatus 980 includes: a coil inserting portion 981 for executing the radial insertion method by moving the single-pole coil 8 linearly from the inner circumference side of the stator core 1 to the outer circumference side; and a wedge inserting portion 990 for moving the wedge 901 in the axial direction. Here, the axial direction and the radial direction in the following description will mean the axial direction and the radial direction of the motor of the case, in which the stator core 1 is arranged.

The coil inserting portion 981 includes: a blade unit 982 disposed movably in the radial direction; and an insertion blade 983 erected axially from the blade unit 982. Moreover, the coil inserting portion 981 can move in the axial direction together with the wedge pusher 995 when it abuts against a later-described wedge pusher 995.

On the wedge inserting portion 990 is provided with: a wedge magazine 993 having an arrangement hole 991 for arranging the wedge 901; and the wedge pusher 995 having a pushing pin portion 994 for pushing the wedge 901. This pushing pin portion 994 is extended in the axial direction from an arm portion 996 extended in the radial direction from the wedge pusher 995, and is constructed to move according to the axial movement of the wedge pusher 995.

Moreover, the wedge pusher 995 and the wedge magazine 993 can move synchronously in the axial direction till the wedge magazine 993 abuts against the stator core 1.

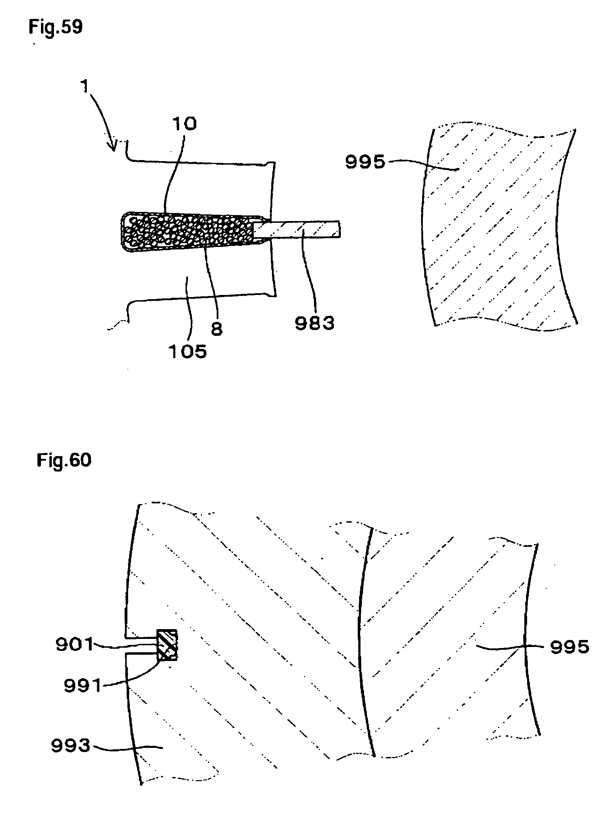

When the coil 8 is inserted into the slot 10 of the stator core 1, moreover, the insertion blade 983 moved from the inner circumference side to the outer circumference side is brought into abutment against the coil 8 positioned on the inner circumference side of the stator core 1 and is moved to the outer circumference side. As a result, the coil 8 is inserted in a linear motion and arranged in the slot 10 of the stator core 1, as shown in Fig. 58 and Fig. 59.

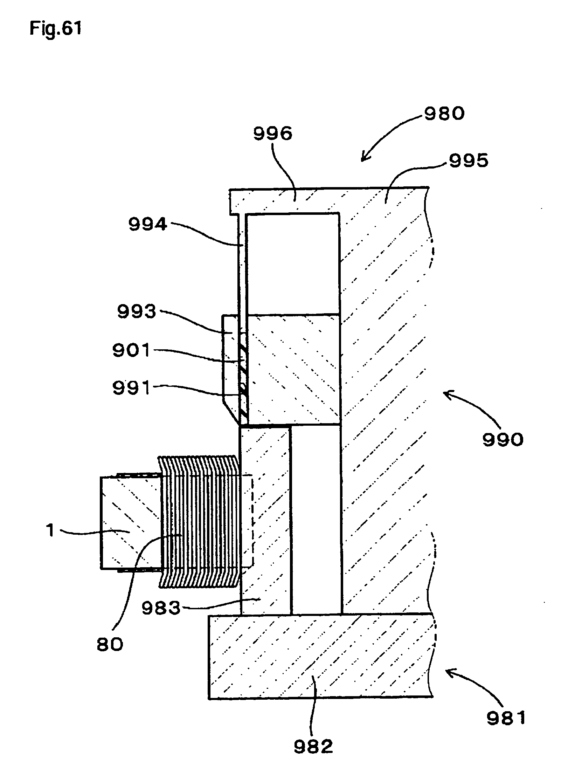

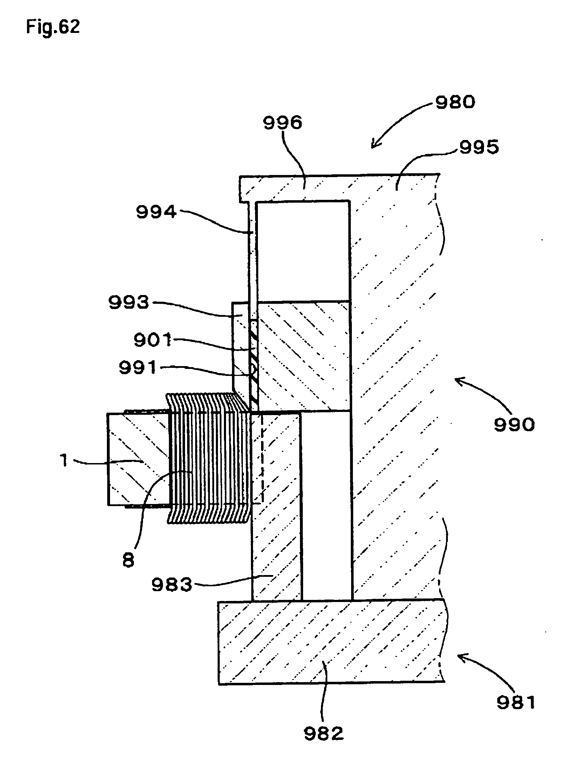

Next, in the working case to insert the wedge 901, the wedge 901 is arranged in advance in the arrangement hole 991 of the wedge magazine 993, as shown in Fig. 58 and Fig. 60, and the wedge magazine 993 and the wedge pusher 995 are moved down synchronously in the axial direction. After the lower end of the wedge pusher 995 abutted against the blade unit 982, as shown in Fig. 61, the wedge inserting portion 990 and the coil inserting portion 981 move synchronously as a whole in the axial direction, as shown in Fig. 62.

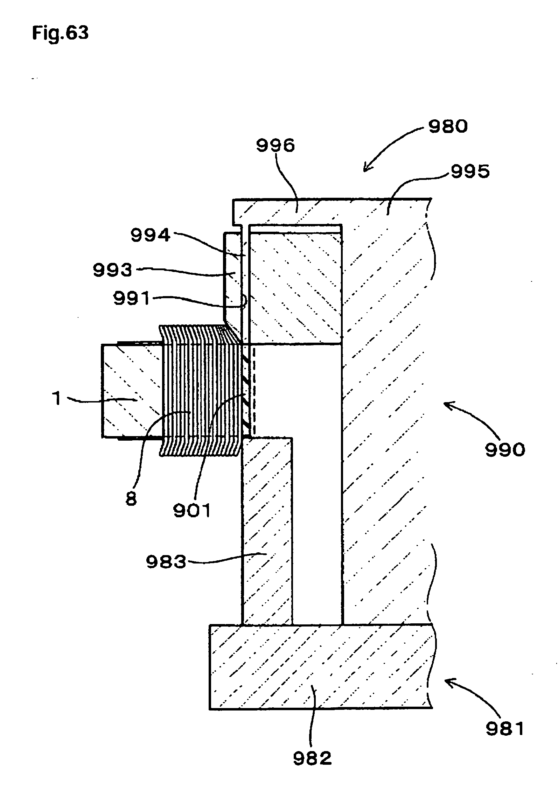

After the wedge magazine 993 abutted against the stator core 1, as shown in Fig. 63, the wedge magazine 993 exclusively stops the downwardmovement, but the remaining portions continue the downward movements. As a result, the pushing pin portion 994 of the wedge pusher 995 penetrates into the arrangement hole 991 of the wedge magazine 993 thereby to push out the wedge 901 downward. As a result, the wedge 901 is inserted into the slot 10.

In this embodiment, as described hereinbefore, the works to insert the wedge 901 can be reliably performed by using the insertion apparatus 980, after the works to insert the coil 8 by the radial insertion method. Especially, the wedge 901 of this embodiment has the highly rigid shape composed of the wide portion 911 and the convex portion 912, as described hereinbefore, so that it can be smoothly inserted while withstanding the pushing force of the pushing pin portion 72 sufficiently.

### Embodiment 12

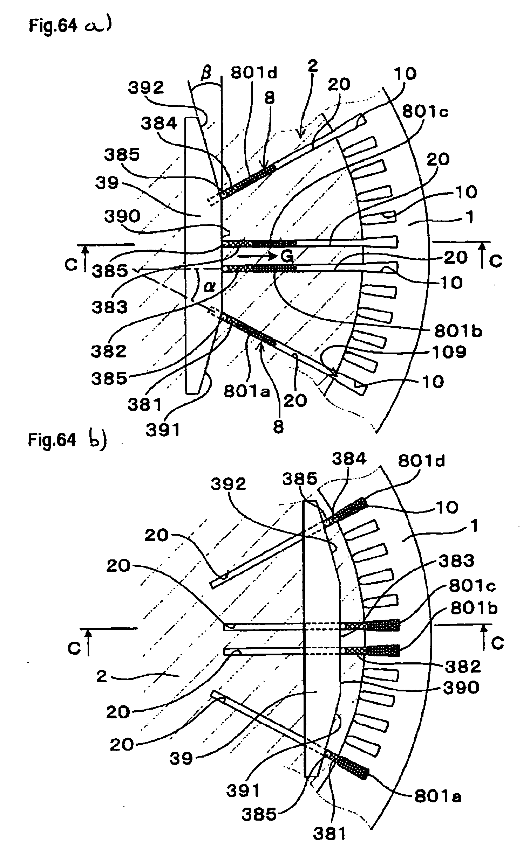

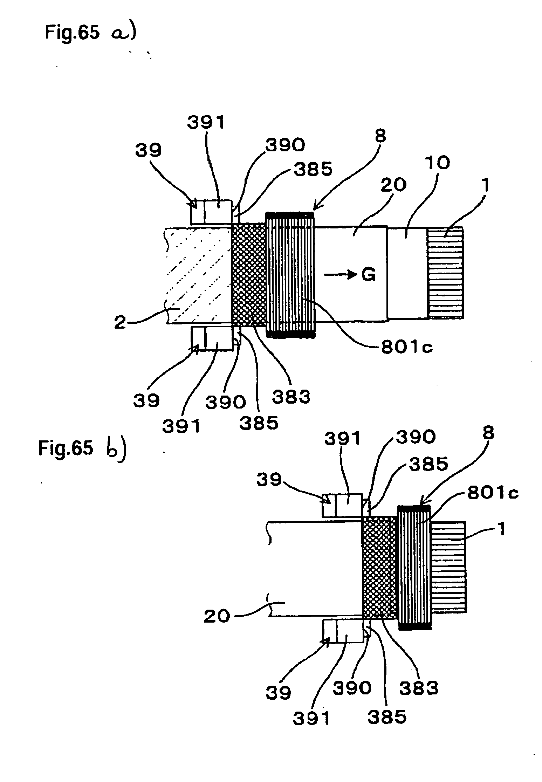

This embodiment presents another example for inserting the two single-pole coils 8 simultaneously at the coin inserting step into the slots 10 of the stator core 1, as shown in Fig. 64 and Fig. 65.

The coil inserting means to be used in this embodiment is constructed to move insertion blades 381 to 384, as can be inserted into the coil retaining grooves 20 of the magazine 2, by the push of a pair of surface and back pusher plates 39.

First of all, the magazine 2 is provided, as in Embodiment 1, with the parallel coil retaining grooves 20, in which the adjoining coil insertion portions 801 (i.e., 801b and 801c in Fig. 64) of the adjoining single-pole coils 8 are to be inserted and arranged. And, the pusher plate 39 is disposed to have its advancing direction (i.e., a direction of arrow G) in parallel with the two parallel coil retaining grooves 20.

Moreover, the pusher plate 39 is provided, as shown in Fig. 64, with: a central flat portion 390 arranged perpendicularly of the advancing direction (i.e., the direction of arrow G) ; and slope portions 391 and 392 sloped to retract on the two sides from the central flat portion 391. The central flat portion 390 is constructed to push the insertion blades 382 and 383 to abut against the adjoining coil insertion portions 801b and 801c of the two adjoining single-pole coils 8, and the slope portions 391 and 392 on the two sides are constructed to push the insertion blades 381 and 384 to abut against the coil insertion portions 801a and 801d, respectively.

As shown in Fig. 64 and Fig. 65, moreover, the insertion blades 381 to 384 are provided with engaging pin portions 385 abutting against the pusher plate 39, so that they may individually protrude to the surface side and back side of the magazine 2.

Moreover, the two insertion blades 382 and 383 abutting against the central flat portion 390 of the pusher plate 39 are made slightly longer in the radial direction than the insertion blades 381 and 384 positioned on the two sides of the former, and are adjusted such that the leading ends of all the insertion blades 381 and 384 may be positioned on one arc around the center of the stator core 1.

On the other hand, the angle of inclination β of the slope portions 391 and 392 of the pusher plate 39 is set at one half of the angle α made by the coil retaining groove 20 to insert the two coil insertion portions 801 (801a and 801b, or 801c and 801d) owned by each single-pole coil 8. In short, β = α /2. As a result, when the four insertion blades 381 to 384 are pushed by the pusher plates 39, the leading ends of all the insertion blades 381 to 384 are positioned at all times on one arc around the center of the stator core 1.

When the two single-pole coils 8 are to be inserted into the slots 10 of the stator core 1 by using the magazine 2 and the coil inserting means thus constructed, the two single-pole coils 8 are retained by the magazine 2 acting as the coil retaining means, as shown in Fig. 64 (a) and Fig. 65 (a), and this magazine 2 is arranged in the stator core 1. As a result, the two single-pole coils 8 are naturally arranged such that the coil insertion portions 801 of each single-pole coil 8 may individually confront the inner circumference openings 109 of the slots 10 and may be generally parallel to the axial direction of the stator core 1.

Next, the coil inserting means is arranged, and the paired surface and back pusher plates 39 are advanced in the direction of arrow G. As a result, the four insertion blades 381 to 384 abutting against the pusher plates 39 are pushed by the pusher plates 39 to advance along the coil retaining grooves 20.

In association with the motions of the pusher plates 39, all the insertion blades 381 to 384 then start movements simultaneously and continue the movements at the equal velocities. As a result, all the coil insertion portions 801a to 801d to abut against the individual insertion blades 381 to 384 start their movements simultaneously and continue the movements at the equal velocities so that they are simultaneously inserted into the slots 10 of the stator core 1 (Fig. 64(b) and Fig. 65(b)). At this time, moreover, the moving loci of the adjoining coil insertion portions 801b and 801c of the adjoining single-pole coils 8 before inserted into the slots 10, that is, while passing through the magazine 2 are parallel.

Thus in this embodiment, as described hereinbefore, the single-pole coils 8 can be moved not only generally linearly toward the stator core 1 but also such that the moving loci before the adjoining coil insertion portions 801b and 801c of the adjoining single-pole coils 8 are inserted into the slots 10 can be parallel. Moreover, the two coil insertion portions 801 (i.e., 801a and 801b, or 801c and 801d) owned by each single-pole coil 8 can start their movements simultaneously and can move at the equal velocities, and the coil insertion portions 801 (i.e., 801b and 801c) owned by the adjoining single-pole coils 8 can start their movements simultaneously and can move at the equal velocities, so that all the coil insertion portions 801a to 801c can be simultaneously inserted into the slots 10 of the stator core 1.

As in the foregoing other embodiments, therefore, it is unnecessary to add excessive length to the coil end portions, and the bulging extents of the coils from the stator core 1 can be reduced to make shorter the axial length of the motor obtained.

Here, this embodiment presents an example, in which only the two single-pole coils 8 are simultaneously handled. By adding the pusher plates and the insertion blades, however, three or more single-pole coils 8 could be simultaneously handled and inserted into the slots 10.

## Claims

1. A process for manufacturing a motor, which includes a ring-shaped motor core (1) having slots (10) formed in the inner circumference of said motor core and in which coils are inserted and arranged in the slots,
comprising:
a coil forming step of forming a coil including a plurality of single-pole coils (8) having two coil insertion portions (801) to be inserted into said slots (10) and two coil end portions (802) joining said coil insertion portions, wherein said coil comprises a coil group formed by connecting the plurality of single-pole coils (8); and
a coil inserting step of inserting simultaneously said coil insertion portions (801) of said single-pole coils (8) into said slots (10),
by retaining said single-pole coils by coil retaining means (20) after said coil forming step,
by arranging said single-pole coils such that the coil insertion portions of each of said single-pole coils confront the inner circumference openings of said slots and are generally parallel to the axial direction of said motor core,
by moving said each single-pole coil linearly toward said motor core so that it leaves said coil retaining means and that the moving loci of adjoining coil insertion portions in the adjoining single-pole coils before they are inserted into said slots are parallel to one another, and
by moving the two coil insertion portions owned by each single-pole coil such that they are simultaneously inserted into said slots.

2. A motor manufacturing process in Claim 1, wherein the two coil insertion portions owned by each single-pole coil are moved such that they start their movements simultaneously and take equal velocities.

3. A motor manufacturing process in Claim 1, wherein at said coil inserting step, each single-pole coil is moved so generally linearly toward said motor core that the moving locus of the winding center point of said each single-pole coil is generally linear.

4. A motor manufacturing process in Claim 1, wherein at said coil inserting step, said single-pole coils are so arranged on the inner circumference side of said motor core while being retained by said retaining means that said two coil insertion portions owned by said each single-pole coil are individually positioned at an equal distance from said inner circumference openings of said slots.

5. A motor manufacturing process in Claim 1, wherein at said coil inserting step, said two coil insertion portions owned by said each single-pole coil are moved such that they start to advance simultaneously into said slots and complete the advancements simultaneously.

6. A motor manufacturing process in Claim 1, wherein at said coil inserting step, all said coil insertion portions owned by said single-pole coils start their movements simultaneously and take the equal velocities.

7. A motor manufacturing process in Claim 1, wherein
said motor includes coil groups of a plurality of phases, each of which is composed of a plurality of said single-pole coils; and
at said coil inserting step, all the single-pole coils belonging to one phase are arranged in said motor core so that their coil insertion portions of all said single-pole coils are started to move simultaneously and moved at the equal velocities.

8. A motor manufacturing process in Claim 1, wherein the movements of said single-pole coil at said coil inserting step are done while the angle made between said coil insertion portions and the axial direction of said motor core being kept within 5 degrees.

9. A motor manufacturing process in Claim 1, wherein at said coil inserting step, only said single-pole coil is inserted into said slot of said motor core.

10. A motor manufacturing process in Claim 1, wherein at said coil inserting step, said single-pole coil is moved generally linearly toward said motor core, by applying insertion pressures individually at least to said two coil insertion portions of said single-pole coil.

11. A motor manufacturing process in Claim 1, wherein at said coil inserting step, said single-pole coil is moved generally linearly toward said motor core, by applying insertion pressures individually at least to said two coil end portions of said single-pole coil.

12. A motor manufacturing process in Claim 1, wherein at said coil inserting step, said single-pole coil is moved generally linearly toward said motor core, by applying insertion pressures individually to a plurality of positions, which are generally symmetric with respect to the winding center point of said each single-pole coil.

13. A motor manufacturing process in Claim 1, wherein said motor is a distributed winding type motor including said ring-shaped motor core having said slots formed in its inner circumference and having coil groups of a plurality of phases, each of which is composed of said single-pole coils making one pole, in which the individual single-pole coils are individually inserted across said two slots and arranged in said motor core and in which the single-pole coils belonging to the coil groups of different phases overlap the coil end portions partially when they are mounted in said motor core.

14. A motor manufacturing process in Claim 1, wherein said motor core is a stator core (1).

15. A motor manufacturing process in Claim 1, wherein
said coil inserting step uses a magazine (2), which has such a shape as can be arranged on the inner side of the inner circumference of said motor core, which is provided in its outer circumference with a plurality of such coil retaining grooves at positions confronting said slots of said motor core as to arrange said coil insertion portions of said single-pole coil, and in which said coil retaining grooves for arranging the adjoining coil insertion portions in said adjoining single-pole coils are arranged either in parallel with each other or to approach each other from the inner circumference side to the outer circumference side;
said coil insertion portions of said single-pole coils are inserted into said coil retaining grooves to retain said coils on said magazine;
said magazine is so arranged inside of said motor core that said coil retaining grooves of said magazine confront said slots of said motor core; and
all said single-pole coils are moved from said coil retaining grooves to said slots of said motor core by bringing coil inserting means into abutment against all said single-pole coils on said magazine thereby to advance the abutting portions in the direction from the center of said magazine to the outer circumference.

16. A motor manufacturing process in Claim 15, wherein said coil inserting means includes insertion blades (3), which can be inserted into said coil retaining grooves of said magazine, so that said coil insertion portions are moved from said coil retaining grooves into said slots of said motor core by inserting said insertion blades into said coil retaining grooves to advance them from the center toward the outer circumference.

17. A motor manufacturing process in Claim 15, wherein said coil inserting means includes a pair of split insertion blades, which can be inserted individually from the surface side and the back side of said magazine into said coil retaining grooves, so that said coil insertion portions are moved from said coil retaining grooves into said slots of said motor core by inserting said paired split insertion blades individually from the surface side and the back side of said magazine into said coil retaining grooves to bring them into abutment against said coil insertion portions and by advancing the abutting portions in the direction from the center to the outer circumference.

18. A motor manufacturing process in Claim 15, wherein said coil inserting means includes a pair of split insertion hooks, which are divided on the surface side and the back side of said magazine, so that said coil insertion portions are moved from said coil retaining grooves into said slots of said motor core by bringing said paired split insertion hooks individually into abutment against said coil end portions protruding to the surface side and the back side of said magazine to advance them in the direction from the center of said magazine to the outer circumference.

19. A motor manufacturing process in Claim 15, wherein simultaneously with or after the movement of said coil insertion portions from said coil retaining grooves to said slots, a provisional shaping step of pushing and deforming said coil end portions is performed by advancing provisional shaping means (34) arranged between said adjoining coil retaining grooves in the direction from the center of said magazine to the outer circumference.

20. A motor manufacturing process in Claim 19, wherein said magazine is provided with provisional shaping grooves in juxtaposition to said coil retaining grooves, and provisional shaping blades capable of being inserted into said provisional shaping grooves are used as said provisional shaping means, so that said provisional shaping step is performed by inserting said provisional shaping blades into said provisional shaping grooves to advance them in the direction from the center to the outer circumference.

21. A motor manufacturing process in Claim 19, wherein said provisional shaping means includes a pair of split provisional shaping blades split on the surface side and the back side of said magazine, so that said provisional shaping step is performed by advancing said paired split provisional shaping blades on the surface side and the back side of said magazine in the direction from the center of said magazine to the outer circumference.

22. A motor manufacturing process in Claim 21, wherein said coil inserting means includes a pair of split provisional shaping blades split on the surface side and the back side of said magazine, and said split insertion blades and said split provisional shaping blades are associated with each other.

23. A motor manufacturing process in Claim 19, wherein after said coil inserting step and said provisional shaping step were repeated a plurality of times, a proper shaping step of shaping said coil end portions is performed by pushing a former (66) having shaping faces for profiling said coil end portions into a desired shape, onto said motor core.

24. A motor manufacturing process in Claim 23, wherein said formers are provided with cutouts (665) for preventing the interference between said coil inserting means and said provisional shaping means, and wherein said formers are pushed onto said motor core while said coil inserting means and said provisional shaping means being kept in the advanced state.

25. A motor manufacturing process in Claim 1, wherein said motor is a three-phase DC brushless motor, and at said coil inserting step, the single-pole coils of one phase are simultaneously inserted into said slots of said motor core.

26. A motor manufacturing process in Claim 15, wherein:
said coil forming step uses a take-up jig (7), which includes a base holder (70) and a plurality of winding frames (4) arranged radially on the outer circumference of said base holder, in which said winding frames are arranged to move back and forth with respect to said base holder, and in which said coil retaining grooves for arranging the adjoining coil insertion portions in said adjoining single-pole coils are arranged between the adjoining winding frames either in parallel with each other or such that they approach more from the inner circumference side to the outer circumference side;
said motor manufacturing process comprises:
a winding frame protruding step of advancing one of said winding frames to protrude more than the remaining winding frames;
a winding step of winding an electric line (88) on said protruded winding frame to form the single-pole coil, by feeding said protruded winding frame in one direction with the electric line and by turning said take-up jig as a whole on the axis of said winding frame; and
a winding frame retracting step of retracting said winding frame having said single-pole coil formed;
wherein said winding frame protruding step, said winding step and said winding frame retracting step are sequentially repeated on the adjoining winding frames and are performed at said winding step by reversing the turning directions of said take-up jig sequentially; and
at said coil inserting step, said take-up jig is used as said magazine so said take-up jig retaining said coil is arranged inside of said motor core and so that said each single-pole coil is moved from said winding frame directly to said slots of said motor core.

27. A motor manufacturing process in Claim 26, wherein said base holder in said take-up jig exhibits a disc shape, and said winding frames are arranged to move back and forth along the axes extending radially from the center point of said base holder.

28. A motor manufacturing process in Claim 26, wherein said each winding frame in said take-up jig has a sector shape made wider along said axis.

29. A motor manufacturing process in Claim 26, wherein said each winding frame in said take-up jig is removably provided with shaping blocks (43, 44) for profiling the shape of the single-pole coil to be wound.

30. A motor manufacturing process in Claim 26, wherein said take-up jig has such a contour formed of the leading ends of said winding frames while all said winding frames being retracted as is circular around the center point of said base holder.

31. A motor manufacturing process in Claim 26, wherein separate plates (79) extended from the outer circumference of said base holder are so arranged on the two sides of said each winding frame that a predetermined spacing is retained between said separate plates and said winding frame.

32. A motor manufacturing process in Claim 1, wherein
said slot of said motor core includes:
a slot open portion (102) constricted in a space portion at its inner circumference end portion; and
a general portion (101) formed on the outer circumference side of said slot open portion and made larger in the space width than said slot open portion; and
wherein
after said coil inserting step, a wedge inserting step is performed to insert a wedge (901) in the axial direction of said motor core into said slot so that the inner circumference opening in said slot is clogged.

33. A motor manufacturing process in Claim 32, wherein said wedge includes a wide portion (911) arranged in said general portion of said slot, and a convex portion (912), which has a smaller width size than that of said wide portion, which is protruded from said wide portion and which is arranged in said slot open portion.

34. A motor manufacturing process in Claim 33, wherein said wedge is molded of a synthetic resin integrally with said wide portion and said convex portion.

35. A motor manufacturing process in Claim 32, wherein
at said coil inserting step, insertion blades capable of penetrating into said slots are used to push and guide said coil insertion portions into said slots, and penetrate by themselves into said slots; and
at said wedge inserting step, said insertion blades and said wedge are moved in association with each other in the axial direction of said motor core and are interchanged to insert said wedge into said slot.

## Patentansprüche

1. Verfahren zum Herstellen eines Motors, der einen ringförmigen Motorkern (1) umfasst, der Schlitze (10) aufweist, die in dem Innenumfang des Motorkerns ausgebildet sind, und in den Spulen eingefügt und in den Schlitzen angeordnet werden,
mit:
einem Spulenbildungsschritt zum Bilden einer Spule, die eine Vielzahl von Einzelpolspulen (8) umfasst, die zwei Spuleneinfügeabschnitte (801), die in die Schlitze (10) einzufügen sind, und zwei Spulenendabschnitte (802) aufweist, die die Spuleneinfügeabschnitte verbinden, wobei die Spule eine Spulengruppe umfasst, die ausgebildet ist, indem die Vielzahl von Einzelpolspulen (8) verbunden wird, und
einem Spuleneinfügeschritt zum gleichzeitigen Einfügen der Spuleneinfügeabschnitte (801) der Einzelpolspulen (8) in die Schlitze (10),
indem die Einzelpolspulen durch eine Spulenhalteeinrichtung (20) nach dem Spulenbildungsschritt gehalten werden,
indem die Einzelpolspulen derart angeordnet werden, dass die Spuleneinfügeabschnitte jeder der Einzelpolspulen den Innenumfangsöffnungen der Schlitze gegenüberstehen und im Allgemeinen parallel zu der axialen Richtung des Motorkerns sind,
indem jede Einzelpolspule linear hin zu dem Motorkern derart bewegt wird, dass sie die Spulenhalteeinrichtung verlässt und die Bewegungspositionen von aneinander grenzenden Spuleneinfügeabschnitten in den aneinander grenzenden Einzelpolspulen, bevor sie in die Schlitze eingefügt werden, parallel zueinander sind, und
indem die zwei Spuleneinfügeabschnitte, die zu jeder Einzelpolspule gehören, derart bewegt werden, dass sie gleichzeitig in die Schlitze eingefügt werden.

2. Motorherstellungsverfahren nach Anspruch 1, wobei die zwei Spuleneinfügeabschnitte, die zu jeder Einzelpolspule gehören, derart bewegt werden, dass sie ihre Bewegungen gleichzeitig beginnen und gleich große Geschwindigkeiten annehmen.

3. Motorherstellungsverfahren nach Anspruch 1, wobei in dem Spuleneinfügeschritt jede Einzelpolspule so allgemein linear hin zu dem Motorkern bewegt wird, dass die sich Bewegungsposition des Wicklungszentrumspunkts jeder Einzelpolspule im Allgemeinen linear ist.

4. Motorherstellungsverfahren nach Anspruch 1, wobei in dem Spuleneinfügeschritt die Einzelpolspulen so auf der Innenumfangsseite des Motorkerns angeordnet sind, während sie durch die Halteeinrichtung gehalten werden, dass die zwei Spuleneinfügeabschnitte, die zu jeder Einzelpolspule gehören, individuell bei einer gleichen Entfernung von den Innenumfangsöffnungen der Schlitze (10) positioniert sind.

5. Motorherstellungsverfahren nach Anspruch 1, wobei in dem Spuleneinfügeschritt die zwei Spuleneinfügeabschnitte, die zu jeder Einzelpolspule gehören, derart bewegt werden, dass sie gleichzeitig beginnen, in die Schlitze vorzurücken, und das Vorrücken gleichzeitig abschließen.

6. Motorherstellungsverfahren nach Anspruch 1, wobei in dem Spuleneinfügeschritt alle Spuleneinfügeabschnitte, die zu den Einzelpolspulen gehören, ihre Bewegungen gleichzeitig beginnen und gleich große Geschwindigkeiten annehmen.

7. Motorherstellungsverfahren nach Anspruch 1, wobei
der Motor Spulengruppen einer Vielzahl von Phasen umfasst, von denen jede aus einer Vielzahl der Einzelpolspulen aufgebaut ist, und
in dem Spuleneinfügeschritt alle Einzelpolspulen, die zu einer Phase gehören, in dem Motorkern derart angeordnet werden, dass begonnen wird, zugehörige Spuleneinfügeabschnitte aller Einzelpolspulen gleichzeitig zu bewegen, wobei sie mit den gleich großen Geschwindigkeiten bewegt werden.

8. Motorherstellungsverfahren nach Anspruch 1, wobei die Bewegungen der Einzelpolspulen in dem Spuleneinfügeschritt ausgeführt werden, während der Winkel, der zwischen den Spuleneinfügeabschnitten und der axialen Richtung des Motorkerns vorliegt, innerhalb von 5 Grad gehalten wird.

9. Motorherstellungsverfahren nach Anspruch 1, wobei in dem Spuleneinfügeschritt nur die Einzelpolspule in den Schlitz des Motorkerns eingefügt wird.

10. Motorherstellungsverfahren nach Anspruch 1, wobei in dem Spuleneinfügeschritt die Einzelpolspule im Allgemeinen linear hin zu dem Motorkern bewegt wird, indem Einfügedrücke individuell zumindest bei den zwei Spuleneinfügeabschnitten der Einzelpolspule angelegt werden.

11. Motorherstellungsverfahren nach Anspruch 1, wobei in dem Spuleneinfügeschritt die Einzelpolspule im Allgemeinen linear hin zu dem Motorkern bewegt wird, indem Einfügedrücke individuell zumindest bei den zwei Spulenendabschnitten der Einzelpolspule angelegt werden.

12. Motorherstellungsverfahren nach Anspruch 1, wobei in dem Spuleneinfügeschritt die Einzelpolspule im Allgemeinen linear hin zu dem Motorkern bewegt wird, indem Einfügedrücke individuell bei einer Vielzahl von Positionen angelegt werden, die im Allgemeinen symmetrisch in Bezug auf den Wicklungszentrumspunkt jeder Einzelpolspule sind.

13. Motorherstellungsverfahren nach Anspruch 1, wobei der Motor ein Motor von einem Typ mit verteilter Wicklung ist, der den ringförmigen Motorkern umfasst, der die Schlitze aufweist, die in einem zugehörigen Innenumfang ausgebildet sind, und Spulengruppen einer Vielzahl von Phasen aufweist, von denen jede aus den Einzelpolspulen, die einen Pol bilden, aufgebaut ist, in dem die individuellen Einzelpolspulen individuell über die zwei Schlitze eingefügt sind und in dem Motorkern angeordnet sind und in dem die Einzelpolspulen, die zu den Spulengruppen unterschiedlicher Phasen gehören, die Spulenendabschnitte teilweise überlappen, wenn sie in dem Motorkern angebracht sind.

14. Motorherstellungsverfahren nach Anspruch 1, wobei der Motorkern ein Startorkern (1) ist.

15. Motorherstellungsverfahren nach Anspruch 1, wobei
der Spuleneinfügeschritt ein Magazin (2) verwendet, das eine derartige Form aufweist, dass es auf der Innenseite des Innenumfangs des Motorkerns angeordnet werden kann, das bei einem zugehörigen Außenumfang mit einer Vielzahl von solchen Spulenhalteeinschnitten bei Positionen versehen ist, die den Schlitzen des Motorkerns gegenüberstehen, um die Spuleneinfügeabschnitte der Einzelpolspulen anzuordnen, und in dem die Spulenhalteeinschnitte zur Anordnung der aneinander grenzenden Spuleneinfügeabschnitte in den aneinander grenzenden Einzelpolspulen entweder parallel zueinander angeordnet sind oder angeordnet sind, um sich einander von der Innenumfangsseite zu der Außenumfangsseite anzunähern,
die Spuleneinfügeabschnitte der Einzelpolspulen in die Spulenhalteeinschnitte eingefügt sind, um die Spulen bei dem Magazin zu halten,
das Magazin so innerhalb des Motorkerns angeordnet ist, dass die Spulenhalteeinschnitte des Magazins den Schlitzen des Motorkerns gegenüberstehen, und
alle Einzelpolspulen von den Spulenhalteeinschnitten zu den Schlitzen des Motorkerns bewegt werden, indem eine Spuleneinfügeeinrichtung in Anstoß gegen alle Einzelpolspulen bei dem Magazin gebracht wird, um hierdurch die anstoßenden Abschnitte in die Richtung von der Mitte des Magazins zu dem Außenumfang vorzuschieben.

16. Motorherstellungsverfahren nach Anspruch 15, wobei die Spuleneinfügeeinrichtung Einfügeklingen (3) umfasst, die in die Spulenhalteeinschnitte des Magazins eingefügt werden können, so dass die Spuleneinfügeabschnitte von den Spulenhalteeinschnitten in die Schlitze des Motorkerns bewegt werden, indem die Einfügeklingen in die Spulenhalteeinschnitte eingeführt werden, um sie von der Mitte hin zu dem Außenumfang vorzuschieben.

17. Motorherstellungsverfahren nach Anspruch 15, wobei die Spuleneinfügeeinrichtung ein Paar von Aufteilungseinfügeklingen umfasst, die individuell von der Oberflächenseite und der Rückseite des Magazins in die Spulenhalteeinschnitte eingeführt werden können, so dass die Spuleneinfügeabschnitte von den Spulenhalteeinschnitten in die Schlitze des Motorkerns bewegt werden, indem die gepaarten Aufteilungseinfügeklingen individuell von der Oberflächenseite und der Rückseite des Magazins in die Spulenhalteeinschnitte eingeführt werden, um sie gegen die Spuleneinfügeabschnitte anstoßen zu lassen, und indem die Anstoßabschnitte in die Richtung von der Mitte zu dem Außenumfang vorgeschoben werden.

18. Motorherstellungsverfahren nach Anspruch 15, wobei die Spuleneinfügeeinrichtung ein Paar von Aufteilungseinfügehaken umfasst, die auf der Oberflächenseite und der Rückseite des Magazins aufgeteilt werden, so dass die Spuleneinfügeabschnitte von den Spulenhalteeinschnitten in die Schlitze des Motorkerns bewegt werden, indem die gepaarten Aufteilungseinfügehaken individuell gegen die Spulenendabschnitte in Anstoß gebracht werden, die bei der Oberflächenseite und der Rückseite des Magazins herausragen, um sie in die Richtung von der Mitte des Magazins zu dem Außenumfang vorzuschieben.

19. Motorherstellungsverfahren nach Anspruch 15, wobei gleichzeitig mit oder nach der Bewegung der Spuleneinfügeabschnitte von den Spulenhalteeinschnitten zu den Schlitzen ein vorläufiger Formungsschritt zum Drücken und Verformen der Spulenendabschnitte ausgeführt wird, indem eine Vorläufige-Formungseinrichtung (34), die zwischen den aneinander grenzenden Spulenhalteeinschnitten angeordnet ist, in die Richtung von der Mitte des Magazins zu dem Außenumfang vorgeschoben wird.

20. Motorherstellungsverfahren nach Anspruch 19, wobei das Magazin mit Vorläufige-Formungseinschnitten in Nebeneinanderstellung mit den Spulenhalteeinschnitten versehen ist, wobei Vorläufige-Formungsklingen, die in die Vorläufige-Formungeinschnitte eingeführt werden können, als die Vorläufige-Formungseinrichtung verwendet werden, so dass der vorläufige Formungsschritt ausgeführt wird, indem die Vorläufige-Formungsklingen in die Vorläufigen-Formungseinschnitte eingeführt werden, um sie in die Richtung von der Mitte zu dem Außenumfang vorzuschieben.

21. Motorherstellungsverfahren nach Anspruch 19, wobei die Vorläufige-Formungseinrichtung ein Paar von Vorläufige-Aufteilungsformungsklingen umfasst, die auf der Oberflächenseite und der Rückseite des Magazins aufgeteilt sind, so dass der vorläufige Formungsschritt ausgeführt wird, indem die gepaarten Vorläufige-Aufteilungsformungsklingen auf der Oberflächenseite und der Rückseite des Magazins in die Richtung von der Mitte des Magazins zu dem Außenumfang vorgeschoben werden.

22. Motorherstellungsverfahren nach Anspruch 21, wobei die Spuleneinfügeeinrichtung ein Paar von aufgeteilten Vorläufige-Formungsklingen umfasst, die auf der Oberflächenseite und der Rückseite des Magazins aufgeteilt sind, und die aufgeteilten Einfügungsklingen und die aufgeteilten Vorläufige-Formungsklingen miteinander verbunden sind.

23. Motorherstellungsverfahren nach Anspruch 19, wobei, nachdem der Spuleneinfügeschritt und der vorläufige Formungsschritt eine Vielzahl von Malen wiederholt worden sind, ein richtiger Formungsschritt zum Formen der Spulenendabschnitte ausgeführt wird, indem eine Formeinrichtung (6) mit Formungsflächen zur Formgebung der Spulenendabschnitte in eine gewünschte Form auf den Motorkern gedrückt wird.

24. Motorherstellungsverfahren nach Anspruch 23, wobei die Formeinrichtungen mit Ausschnitten (665) zur Verhinderung einer Störung zwischen der Spuleneinfügeeinrichtung und der Vorläufige-Formungseinrichtung versehen sind, und wobei die Formeinrichtungen auf den Motorkern gedrückt werden, während die Spuleinfügeeinrichtung und die Vorläufige-Formungseinrichtung in den vorgerückten Zustand gehalten werden.

25. Motorherstellungsverfahren nach Anspruch 1, wobei der Motor ein bürstenloser Drei-Phasen-Gleichstrommotor ist, und wobei in dem Spuleneinfügeschritt die Einzelpolspulen einer Phase gleichzeitig in die Schlitze des Motorkerns eingeführt werden.

26. Motorherstellungsverfahren nach Anspruch 15, wobei:
der Spulenbildungsschritt ein Aufnahmemontagegestell (7) verwendet, das eine Basishalterung (70) und eine Vielzahl von Wicklungsrahmen (4) umfasst, die radial bei dem Außenumfang der Basishalterung angeordnet sind, wobei die Wicklungsrahmen eingerichtet sind, sich in Bezug auf die Basishalterung nach hinten und vorne zu bewegen, und wobei die Spulenhalteeinschnitte zum Anordnen der aneinander grenzenden Spuleneinfügeabschnitte in den aneinander grenzenden Einzelpolspulen zwischen den aneinander grenzenden Wicklungsrahmen entweder parallel angeordnet sind oder derart angeordnet sind, dass sie sich mehr von der Innenumfangsseite zu der Außenumfangsseite annähern,
wobei das Motorherstellungsverfahren umfasst:
einen Wicklungsrahmenvorstehschritt zum Vorrücken eines der Wicklungsrahmen, um mehr als die verbleibenden Wicklungsrahmen hervorzustehen,
einen Wicklungsschritt zum Wickeln einer elektrischen Leitung (88) auf dem vorstehenden Wicklungsrahmen, um die Einzelpolspulen zu bilden, indem dem vorstehenden Wicklungsrahmen in einer Richtung die elektrische Leitung zugeführt wird und indem das Aufnahmemontagegestell als ganzes auf der Achse des Wicklungsrahmens gedreht wird, und
einen Wicklungsrahmenrückholschritt zum Zurückholen des Wicklungsrahmens, der die gebildete Einzelpolspule aufweist,
wobei der Wicklungsrahmenvorstehschritt, der Wicklungsschritt und der Wicklungsrahmenrückholschritt sequenziell bei den aneinander grenzenden Wicklungsrahmen wiederholt werden und bei dem Wicklungsschritt ausgeführt werden, indem die Drehrichtungen des Aufnahmemontagegestells sequenziell umgekehrt werden, und
in dem Spuleneinfügeschritt das Aufnahmemontagegestell als das Magazin verwendet wird, so dass das Aufnahmemontagegestell, das die Spule hält, innerhalb des Motorkerns angeordnet wird und dass jede Einzelpolspule von dem Wicklungsrahmen direkt zu den Schlitzen des Motorkerns bewegt wird.

27. Motorherstellungsverfahren nach Anspruch 26, wobei die Basishalterung in dem Aufnahmemontagegestell eine Scheibenform zeigt, wobei die Wicklungsrahmen eingerichtet sind, sich entlang der Achsen rückwärts und vorwärts zu bewegen, die sich radial von dem Mittelpunkt der Basishalterung erstrecken.

28. Motorherstellungsverfahren nach Anspruch 26, wobei jeder Wicklungsrahmen des Aufnahmemontagegestells eine Sektorform aufweist, die entlang der Achse breiter gemacht wird.

29. Motorherstellungsverfahren nach Anspruch 26, wobei jeder Wicklungsrahmen in dem Aufnahmemontagegestell entfernbar mit Formungsblöcken (43, 44) versehen ist, um eine Formgebung für die Form der zu wickelnden Einzelpolspule auszuführen.

30. Motorherstellungsverfahren nach Anspruch 26, wobei das Aufnahmemontagegestell eine solche Kontur aufweist, die entlang den Führungsenden der Wicklungsrahmen gebildet ist, während alle Wicklungsrahmen zurückgeholt sind, um um den Mittelpunkt der Basishalteeinrichtung kreisförmig zu sein.

31. Motorherstellungsverfahren nach Anspruch 26, wobei separate Platten (79), die sich von dem Außenumfang der Basishalterung erstrecken, so bei den zwei Seiten jedes Wicklungsrahmens angeordnet sind, dass ein vorbestimmter Abstand zwischen den separaten Platten und den Wicklungsrahmen bewahrt wird.

32. Motorherstellungsverfahren nach Anspruch 1, wobei der Schlitz des Motorkerns umfasst:
einen Schlitzöffnungsabschnitt (102), der in einem Raumabschnitt bei einem zugehörigen Innenumfangsendabschnitt beschränkt ist, und
einen allgemeinen Abschnitt (101), der auf der Außenumfangsseite des Schlitzöffnungsabschnitts ausgebildet ist und in der Raumbreite grö-βer als der Schlitzöffnungsabschnitt gemacht ist, und wobei
nach dem Spuleneinfügeschnitt ein Keileinfügeschritt ausgeführt wird, um einen Keil (901) in der axialen Richtung des Motorkerns in den Schlitz einzuführen, so dass die Innenumfangsöffnung in dem Schlitz verstopft ist.

33. Motorherstellungsverfahren nach Anspruch 32, wobei der Keil einen breiten Abschnitt (911), der in dem allgemeinen Abschnitt des Schlitzes angeordnet ist, und einen konvexen Abschnitt (912) umfasst, der eine kleinere Breitengröße als die des breiten Abschnitts aufweist, der von dem breiten Abschnitt hervorsteht und der in dem Schlitzöffnungsabschnitt angeordnet ist.

34. Motorherstellungsverfahren nach Anspruch 33, wobei der Keil aus einem synthetischen Harz integral mit dem breiten Abschnitt und dem konvexen Abschnitt geformt ist.

35. Motorherstellungsverfahren nach Anspruch 32, wobei
in dem Spuleneinfügeschritt Einfügeklingen, die in die Schlitze eindringen können, verwendet werden, um die Spuleneinfügeabschnitte in die Schlitze zu drücken und zu führen, wobei sie von selbst in die Schlitze eindringen, und
in dem Keileinfügeschritt die Einfügeklingen und der Keil in Verbindung miteinander in der axialen Richtung des Motorkerns bewegt werden und getauscht werden, um den Keil in den Schlitz einzuführen.

## Revendications

1. Processus de fabrication d'un moteur, qui comporte un noyau (1) de moteur en forme d'anneau ayant des fentes (10) formées dans la circonférence intérieure dudit noyau de moteur et dans lequel des bobines sont insérées et agencées dans les fentes,
comprenant :
une étape de formation de bobine consistant à former une bobine comportant une pluralité de bobines unipolaires (8) ayant deux parties (801) d'insertion de bobine à insérer dans lesdites fentes (10) et deux parties d'extrémité (802) de bobine joignant lesdites parties d'insertion de bobine, où ladite bobine comprend un groupe de bobines formé en reliant la pluralité de bobines unipolaires (8) ; et
une étape d'insertion de bobine consistant à insérer simultanément lesdites parties (801) d'insertion de bobine desdites bobines unipolaires (8) dans lesdites fentes (10),
en retenant lesdites bobines unipolaires par un moyen (20) de retenue de bobine après ladite étape de formation de bobine,
en disposant lesdites bobines unipolaires de sorte que les parties d'insertion de bobine de chacune desdites bobines unipolaires confrontent les ouvertures de circonférence intérieure desdites fentes et soient globalement parallèles à la direction axiale dudit noyau de moteur,
en déplaçant chacune desdites bobines unipolaires linéairement vers ledit noyau de moteur afin qu'elle quitte ledit moyen de retenue de bobine et que les lieux de déplacement de parties d'insertion de bobine adjacente dans les bobines unipolaires adjacentes avant leur insertion dans lesdites fentes soient parallèles les uns aux autres, et
en déplaçant les deux parties d'insertion de bobine appartenant à chaque bobine unipolaire de sorte qu'elles soient simultanément insérées dans lesdites fentes.

2. Processus de fabrication d'un moteur dans la revendication 1, dans lequel les deux parties d'insertion de bobine appartenant à chaque bobine unipolaire sont déplacées de sorte qu'elles se mettent simultanément en mouvement et prennent des vitesses égales.

3. Processus de fabrication d'un moteur dans la revendication 1, dans lequel au niveau de ladite étape d'insertion de bobine, chaque bobine unipolaire est déplacée de manière globalement linéaire vers ledit noyau de moteur de sorte que le lieu de déplacement du point central d'enroulement de chacune desdites bobines unipolaires soit globalement linéaire.

4. Processus de fabrication d'un moteur dans la revendication 1, dans lequel au niveau de ladite étape d'insertion de bobine, lesdites bobines unipolaires sont agencées sur le côté de la circonférence intérieure dudit noyau de moteur tout en étant retenues par ledit moyen de retenue de sorte que lesdites deux parties d'insertion de bobine appartenant à chacune desdites bobines unipolaires soient séparément positionnées à une distance égale par rapport auxdites ouvertures de circonférence intérieure desdites fentes.

5. Processus de fabrication d'un moteur dans la revendication 1, dans lequel au niveau de ladite étape d'insertion de bobine, lesdites deux parties d'insertion de bobine appartenant à chacune desdites bobines unipolaires sont déplacées de sorte qu'elles se mettent à se déplacer simultanément en avant dans lesdites fentes et achèvent simultanément les avancements.

6. Processus de fabrication d'un moteur dans la revendication 1, dans lequel au niveau de ladite étape d'insertion de bobine, toutes lesdites parties d'insertion de bobine appartenant auxdites bobines unipolaires se mettent à se déplacer simultanément et prennent les vitesses égales.

7. Processus de fabrication d'un moteur dans la revendication 1, dans lequel
ledit moteur comporte des groupes de bobines d'une pluralité de phases, dont chacun est composé d'une pluralité desdites bobines unipolaires ; et
au niveau de ladite étape d'insertion de bobine, toutes les bobines unipolaires appartenant à une phase sont agencées dans ledit noyau de moteur de sorte que leurs parties d'insertion de bobine de toutes lesdites bobines unipolaires se mettent simultanément en mouvement et se déplacent aux vitesses égales.

8. Processus de fabrication d'un moteur dans la revendication 1, dans lequel les déplacements de ladite bobine unipolaire au niveau de ladite étape d'insertion de bobine sont effectués tandis que l'angle formé entre lesdites parties d'insertion de bobine et la direction axiale dudit noyau de moteur étant maintenu à 5 degrés.

9. Processus de fabrication d'un moteur dans la revendication 1, dans lequel au niveau de ladite étape d'insertion de bobine, seulement ladite bobine unipolaire est insérée dans ladite fente dudit noyau de moteur.

10. Processus de fabrication d'un moteur dans la revendication 1, dans lequel au niveau de ladite étape d'insertion de bobine, ladite bobine unipolaire est déplacée de manière globalement linéaire vers ledit noyau de moteur, en appliquant séparément des pressions d'insertion au moins auxdites deux parties d'insertion de bobine de ladite bobine unipolaire.

11. Processus de fabrication d'un moteur dans la revendication 1, dans lequel au niveau de ladite étape d'insertion de bobine, ladite bobine unipolaire est déplacée de manière globalement linéaire vers ledit noyau de moteur, en appliquant séparément des pressions d'insertion au moins auxdites deux parties d'extrémité de bobine de ladite bobine unipolaire.

12. Processus de fabrication d'un moteur dans la revendication 1, dans lequel au niveau de ladite étape d'insertion de bobine, ladite bobine unipolaire est déplacée de manière globalement linéaire vers ledit noyau de moteur, en appliquant séparément des pressions d'insertion à une pluralité de positions, qui sont globalement symétriques par rapport au point central d'enroulement de chacune desdites bobines unipolaires.

13. Processus de fabrication d'un moteur dans la revendication 1, dans lequel ledit moteur est un moteur de type à enroulement réparti comportant ledit noyau de moteur en forme d'anneau ayant lesdites fentes formées dans sa circonférence intérieure et ayant des groupes de bobines d'une pluralité de phases, dont chacun est composé desdites bobines unipolaires formant un pôle, où les bobines unipolaires individuelles sont séparément insérées à travers lesdites deux fentes et agencées dans ledit noyau de moteur et où les bobines unipolaires appartenant aux groupes de bobines de différentes phases chevauchent partiellement les parties d'extrémité de bobine lorsqu'elles sont montées dans ledit noyau de moteur.

14. Processus de fabrication d'un moteur dans la revendication 1, dans lequel ledit noyau de moteur est un noyau (1) de stator.

15. Processus de fabrication d'un moteur dans la revendication 1, dans lequel
ladite étape d'insertion de bobine utilise un magasin (2), qui a une telle forme qui peut être agencée sur le côté intérieur de la circonférence intérieure dudit noyau de moteur, qui est fourni dans sa circonférence extérieure avec une pluralité de telles rainures de retenue de bobine à des positions confrontant lesdites fentes dudit noyau de moteur afin de disposer lesdites parties d'insertion de bobine de ladite bobine unipolaire, et où lesdites rainures de retenue de bobine destinées à disposer les parties d'insertion de bobines adjacentes dans lesdites bobines unipolaires adjacentes sont agencées soit en parallèle les unes avec les autres ou se rapprochent les unes des autres depuis le côté de la circonférence intérieure jusqu'au côté de la circonférence extérieure ;
lesdites parties d'insertion de bobine desdites bobines unipolaires sont insérées dans lesdites rainures de retenue de bobine pour retenir lesdites bobines sur ledit magasin ;
ledit magasin est agencé à l'intérieur dudit noyau de moteur de sorte que lesdites rainures de retenue de bobine dudit magasin confrontent lesdites fentes dudit noyau de moteur ; et
toutes lesdites bobines unipolaires sont déplacées depuis lesdites rainures de retenue de bobine auxdites fentes dudit noyau de moteur en amenant un moyen d'insertion de bobine en butée contre toutes lesdites bobines unipolaires sur ledit magasin pour faire avancer ainsi les parties de butée dans la direction s'étendant du centre dudit magasin à la circonférence extérieure.

16. Processus de fabrication d'un moteur dans la revendication 15, dans lequel ledit moyen d'insertion de bobine comporte des lames (3) d'insertion, qui peuvent être insérées dans lesdites rainures de retenue de bobine dudit magasin, de sorte que lesdites parties d'insertion de bobine soient déplacées depuis lesdites rainures de retenue de bobine dans lesdites fentes dudit noyau de moteur en insérant lesdites lames d'insertion dans lesdites rainures de retenue de bobine pour les faire avancer depuis le centre vers la circonférence extérieure.

17. Processus de fabrication d'un moteur dans la revendication 15, dans lequel ledit moyen d'insertion de bobine comporte une paire de lames d'insertion fendues, qui peuvent être insérées séparément depuis le côté de la surface et le côté arrière dudit magasin dans lesdites rainures de retenue de bobine, de sorte que lesdites parties d'insertion de bobine soient déplacées depuis lesdites rainures de retenue de bobine dans lesdites fentes dudit noyau de moteur en insérant séparément lesdites lames appariées d'insertion fendues depuis le côté de la surface et le côté arrière dudit magasin dans lesdites rainures de retenue de bobine pour les amener en butée contre lesdites parties d'insertion de bobine et en faisant avancer les parties de butée dans la direction s'étendant du centre à la circonférence extérieure.

18. Processus de fabrication d'un moteur dans la revendication 15, dans lequel ledit moyen d'insertion de bobine comporte une paire de crochets d'insertion fendus, qui sont divisés sur le côté de la surface et le côté arrière dudit magasin, de sorte que lesdites parties d'insertion de bobine soient déplacées depuis lesdites rainures de retenue de bobine dans lesdites fentes dudit noyau de moteur en amenant séparément lesdits crochets appariés d'insertion fendus en butée contre lesdites parties d'extrémité de bobine faisant saillie vers le côté de la surface et le côté arrière dudit magasin pour les faire avancer dans la direction s'étendant du centre dudit magasin à la circonférence extérieure.

19. Processus de fabrication d'un moteur dans la revendication 15, dans lequel une étape de mise en forme provisoire consistant, simultanément avec ou après le déplacement desdites parties d'insertion de bobine depuis lesdites rainures de retenue de bobine auxdites fentes, à pousser et déformer lesdites parties d'extrémité de bobine est effectuée en faisant avancer un moyen (34) de mise en forme provisoire agencé entre lesdites rainures de retenue de bobines adjacentes dans la direction s'étendant du centre dudit magasin à la circonférence extérieure.

20. Processus de fabrication d'un moteur dans la revendication 19, dans lequel ledit magasin est pourvu de rainures de mise en forme provisoires en juxtaposition auxdites rainures de retenue de bobine, et des lames de mise en forme provisoires pouvant être insérées dans lesdites rainures de mise en forme provisoires sont utilisées comme étant ledit moyen de mise en forme provisoire, de sorte que ladite étape de mise en forme provisoire est effectuée en insérant lesdites lames de mise en forme provisoires dans lesdites rainures de mise en forme provisoires pour les faire avancer dans la direction s'étendant du centre à la circonférence extérieure.

21. Processus de fabrication d'un moteur dans la revendication 19, dans lequel ledit moyen de mise en forme provisoire comporte une paire de lames de mise en forme fendues et provisoires fendues sur le côté de la surface et le côté arrière dudit magasin, de sorte que ladite étape de mise en forme provisoire soit effectuée en faisant avancer lesdites lames appariées de mise en forme provisoires et fendues sur le côté de la surface et le côté arrière dudit magasin dans la direction s'étendant du centre dudit magasin à la circonférence extérieure.

22. Processus de fabrication d'un moteur dans la revendication 21, dans lequel ledit moyen d'insertion de bobine comporte une paire de lames de mise en forme fendues et provisoires fendues sur le côté de la surface et le côté arrière dudit magasin, et lesdites lames d'insertion fendues et lesdites lames de mise en forme fendues et provisoires sont associées entre elles.

23. Processus de fabrication d'un moteur dans la revendication 19, dans lequel après la répétition de ladite étape d'insertion de bobine et de ladite étape de mise en forme provisoire plusieurs fois, une étape de mise en forme appropriée qui consiste à mettre en forme lesdites parties d'extrémité de bobine est effectuée en poussant un gabarit conformateur (66) ayant des faces de mise en forme pour profiler lesdites parties d'extrémité de bobine en une forme souhaitée, sur ledit noyau de moteur.

24. Processus de fabrication d'un moteur dans la revendication 23, dans lequel lesdits gabarits conformateurs sont pourvus de découpes (665) pour empêcher l'interférence entre ledit moyen d'insertion de bobine et ledit moyen de mise en forme provisoire, et dans lequel lesdits gabarits conformateurs sont poussés sur ledit noyau de moteur tandis que ledit moyen d'insertion de bobine et ledit moyen de mise en forme provisoire étant maintenus à l'état avancé.

25. Processus de fabrication d'un moteur dans la revendication 1, dans lequel ledit moteur est un moteur à courant continu sans balai triphasé, et au niveau de ladite étape d'insertion de bobine, les bobines unipolaires d'une phase sont simultanément insérées dans lesdites fentes dudit noyau de moteur.

26. Processus de fabrication d'un moteur dans la revendication 15, dans lequel :
ladite étape de formation de bobine utilise un gabarit d'enroulement (7), qui comporte un support de base (70) et une pluralité de cadres d'enroulement (4) agencés radialement sur la circonférence extérieure dudit support de base, où lesdits cadres d'enroulement sont agencés pour se déplacer en va-et-vient par rapport audit support de base, et où lesdites rainures de retenue de bobine pour agencer les parties d'insertion de bobines adjacentes dans lesdites bobines unipolaires adjacentes sont agencées entre les cadres d'enroulement adjacents soit en parallèle les unes avec les autres ou de sorte qu'elles se rapprochent davantage depuis le côté de la circonférence intérieure jusqu'au côté de la circonférence extérieure ;
ledit processus de fabrication d'un moteur comprend :
une étape de saillie de cadre d'enroulement consistant à faire avancer l'un desdits cadres d'enroulement pour faire saillie plus que les cadres d'enroulement restants ;
une étape d'enroulement consistant à enrouler une ligne électrique (88) sur ledit cadre d'enroulement en saillie pour former la bobine unipolaire, en faisant avancer ledit cadre d'enroulement en saillie dans une direction avec la ligne électrique et en faisant tourner ledit gabarit d'enroulement dans son ensemble sur l'axe dudit cadre d'enroulement ; et
une étape de rétraction de cadre d'enroulement consistant à rétracter ledit cadre d'enroulement ayant ladite bobine unipolaire formée ;
dans lequel ladite étape de saillie de cadre d'enroulement, ladite étape d'enroulement et ladite étape de rétraction de cadre d'enroulement sont séquentiellement répétées sur les cadres d'enroulement adjacents et sont effectuées au niveau de ladite étape d'enroulement en inversant séquentiellement les directions de rotation dudit gabarit d'enroulement ; et
au niveau de ladite étape d'insertion de bobine, ledit gabarit d'enroulement est utilisé comme étant ledit magasin de façon à ce que ledit gabarit d'enroulement retenant ladite bobine soit agencé à l'intérieur dudit noyau de moteur et de sorte que chacune desdites bobines unipolaires soit déplacée directement depuis ledit cadre d'enroulement auxdites fentes dudit noyau de moteur.

27. Processus de fabrication d'un moteur dans la revendication 26, dans lequel ledit support de base dans ledit gabarit d'enroulement présente une forme de disque, et lesdits cadres d'enroulement sont agencés pour se déplacer en va-et-vient le long des axes s'étendant radialement à partir du point central dudit support de base.

28. Processus de fabrication d'un moteur dans la revendication 26, dans lequel chacun desdits cadres d'enroulement dans ledit gabarit d'enroulement a une forme de secteur devenant plus large le long dudit axe.

29. Processus de fabrication d'un moteur dans la revendication 26, dans lequel chacun desdits cadres d'enroulement dans ledit gabarit d'enroulement est pourvu de façon amovible de blocs (43, 44) de mise en forme pour profiler la forme de la bobine unipolaire à enrouler.

30. Processus de fabrication d'un moteur dans la revendication 26, dans lequel ledit gabarit d'enroulement a un tel contour formé des extrémités avant desdits cadres d'enroulement tandis que tous lesdits cadres d'enroulement étant rétractables comme il est circulaire autour du point central dudit support de base.

31. Processus de fabrication d'un moteur dans la revendication 26, dans lequel des plaques séparées (79) s'étendant depuis la circonférence extérieure dudit support de base sont agencées sur les deux côtés de chacun desdits cadres d'enroulement de sorte qu'un espacement prédéterminé soit retenu entre lesdites plaques séparées et ledit cadre d'enroulement.

32. Processus de fabrication d'un moteur dans la revendication 1, dans lequel ladite fente dudit noyau de moteur comporte :
une partie (102) ouverte de fente rétrécie dans une partie d'espace au niveau de sa partie d'extrémité de la circonférence intérieure ; et
une partie générale (101) formée sur le côté de la circonférence extérieure de ladite partie ouverte de fente et dont la largeur d'espace devient plus importante que celle de ladite partie ouverte de fente ; et dans lequel
après ladite étape d'insertion de bobine, une étape d'insertion de coin est effectuée pour insérer un coin (901) dans la direction axiale dudit noyau de moteur dans ladite fente de sorte que l'ouverture de la circonférence intérieure dans ladite fente soit bouchée.

33. Processus de fabrication d'un moteur dans la revendication 32, dans lequel ledit coin comporte une partie large (911) agencée dans ladite partie générale de ladite fente, et une partie convexe (912), qui a une largeur plus petite que celle de ladite partie large, qui est en saillie depuis ladite partie large et qui est agencée dans ladite partie ouverte de fente.

34. Processus de fabrication d'un moteur dans la revendication 33, dans lequel ledit coin est moulé intégralement d'une résine synthétique avec ladite partie large et ladite partie convexe.

35. Processus de fabrication d'un moteur dans la revendication 32, dans lequel
au niveau de ladite étape d'insertion de bobine, des lames d'insertion capables de pénétrer dans lesdites fentes sont utilisées pour pousser et guider lesdites parties d'insertion de bobine dans lesdites fentes, et pénètrent par elles-mêmes dans lesdites fentes ; et
au niveau de ladite étape d'insertion de coin, lesdites lames d'insertion et ledit coin sont déplacés en association les uns avec les autres dans la direction axiale dudit noyau de moteur et sont inter-changés pour insérer ledit coin dans ladite fente.
